# EUROPEAN PATENT APPLICATION

(11) **EP 4 660 780 A1**
(43) Date of publication of application: **10.12.2025**
(21) Application number: 24824875.9
(22) Date of filing: 18.01.2024
(51) Int. Cl.: G06F 3/16

(54) **VOLUME ADJUSTMENT METHOD AND TERMINAL DEVICE**

(30) Priority: 21.06.2023 CN 202310751758
(71) Applicant: Huawei Technologies Co., Ltd., Shenzhen, Guangdong 518129 (CN)
(72) Inventor: LIU, Chunliang, Shenzhen, Guangdong 518129 (CN); WANG, Miao, Shenzhen, Guangdong 518129 (CN)
(74) Representative: Goddar, Heinz J.
(86) International application number: PCT/CN2024/073122
(87) International publication number: WO 2024/259971

(57) **Abstract**

This application provides a volume adjustment method and a terminal device. A user may trigger a volume adjustment window through a simple operation. The volume adjustment window may be used to adjust volume of a plurality of different applications or volume of a plurality of different types of applications. In other words, in the same volume adjustment window, the user may adjust the volume of the plurality of different applications or the volume of the plurality of different types of applications. In addition, an area of the volume adjustment window (namely, a first window) is less than an area of an interface in which the volume adjustment window is located, so that the user can continue to use an uncovered part of the interface when adjusting a plurality of types of volume. Using the volume adjustment method to adjust the plurality of types of volume simplifies operations and enhances user experience.

## Description

This application claims priority to Chinese Patent Application No. 202310751758.8, filed with the China National Intellectual Property Administration on June 21, 2023 and entitled "VOLUME ADJUSTMENT METHOD AND TERMINAL DEVICE", which is incorporated herein by reference in its entirety.

### TECHNICAL FIELD

This application relates to the field of terminal technologies, and in particular, to a volume adjustment method and a terminal device.

### BACKGROUND

Terminal devices are used widely as terminal technologies develop. In a process of using the terminal device, a user often needs to adjust volume of the terminal device. A current volume adjustment manner mainly includes the following three manners: adjusting the volume by using a volume button of the terminal device; adjusting the volume by sliding a volume adjustment control displayed on an interface of the terminal device; and invoking a sound setting interface by tapping a setting icon on a display interface of the terminal device, and adjusting the volume in the sound setting interface, where volume of all applications or all types of applications on the terminal device can be adjusted in the sound setting interface.

In a current volume adjustment method, a method for adjusting volume by using a volume button and a method for adjusting volume by sliding a volume adjustment control can be used to adjust volume of only one application or one type of application of the terminal device (for example, volume of a currently used application, volume of an application type to which a currently used application belongs, or volume of a default application or a default type of application), but cannot be used to adjust volume of another application or another type of application of the terminal device. If the user wants to adjust the volume of the another application or the another type of application of the terminal device, the user needs to invoke the sound setting interface of the terminal device through steps of tapping the setting icon and the like, and then adjust the volume of the another application or the another type of application in the sound setting interface.

Therefore, based on the current volume adjustment method, adjusting volume of a plurality of applications or volume of a plurality of types of applications on the terminal device can be cumbersome and unfriendly to users, leading to a subpar user experience.

### SUMMARY

This application provides a volume adjustment method and a terminal device. A user may trigger a volume adjustment window through a simple operation. The volume adjustment window may be used to adjust volume of a plurality of different applications or volume of a plurality of different types of applications. Using the volume adjustment method to adjust the volume of the plurality of different applications or the volume of the plurality of different types of applications simplifies operations and enhances user experience.

According to a first aspect, a volume adjustment method is provided. The method is applied to a terminal device having a display. The method includes: receiving a first operation of a user; displaying a volume interaction control on the display in response to the first operation, where the volume interaction control is used to prompt the user to adjust volume; receiving a second operation performed by the user on the volume interaction control; displaying a first window on the display in response to the second operation, where a plurality of volume adjustment controls are displayed in the first window, each volume adjustment control corresponds to one type of volume of the terminal device, the one type of volume includes volume corresponding to one application or a same type of applications on the terminal device, and an area occupied by the first window is less than an area of an interface in which the first window is located; receiving a third operation performed by the user on one or more of the plurality of volume adjustment controls; and adjusting, in response to the third operation, volume corresponding to the one or more volume adjustment controls.

According to the volume adjustment method provided in the first aspect, the first window including the plurality of volume adjustment controls may be displayed on the display through the simple operations of the user. Each volume adjustment control corresponds to the one type of volume of the terminal device (for example, the one type of volume may be the volume of the one application or one type of application of the terminal device, and the one type of application may correspond to a plurality of applications). In the first window, the user may adjust volume corresponding to any one or more volume adjustment controls. In addition, the area occupied by the first window (namely, the volume adjustment window) is less than the area of the interface in which the first window is located, in other words, the first window covers only a part of interface features of the interface in which the first window is located. In this way, when adjusting volume in the first window, the user can continue to view or use a part that is of the interface and that is not covered by the first window. For example, when the user is using the terminal device to play a video, in a process of invoking the first window to adjust the volume, the user can continue to view, via the part that is of the interface and that is not covered by the first window, the video played by the terminal device.

For example, the terminal device may include a smartphone, a tablet computer, a notebook computer, a foldable smartphone, a large-screen device, a smart television, a head unit, and the like.

In a possible implementation of the first aspect, a prompt control used to prompt the user to adjust a plurality of types of volume is displayed in the volume interaction control. In this implementation, the prompt control is displayed in the volume interaction control, so that the user can realize that the plurality of types of volume may be adjusted through a further operation on the volume interaction control. This increases a probability of performing the second operation by the user and enhances user experience.

In a possible implementation of the first aspect, the plurality of volume adjustment controls are displayed in the volume interaction control in a non-full superposition manner; and in the plurality of volume adjustment controls that are displayed in the non-full superposition manner, one volume adjustment control located at an uppermost layer is completely displayed, another volume adjustment control is partially displayed, and the partially displayed another volume adjustment control forms the prompt control. In this implementation, the plurality of volume adjustment controls are displayed in the volume adjustment control in the non-full superposition manner. Because of the non-full superposition manner, the one volume adjustment control located at the uppermost layer in the plurality of volume adjustment controls is completely displayed (that is, may be completely viewed by the user), and the another volume adjustment control located at a lower layer is partially displayed (that is, may be partially viewed by the user). In this manner of partially displaying the another volume adjustment control, a function of prompting the user to adjust the plurality of types of volume is achieved, and the method is simple and is easy to implement.

For example, the plurality of volume adjustment controls that are displayed in the non-full superposition manner may be divided into an upper-layer volume adjustment control and another volume adjustment control. The upper-layer volume adjustment control is located at the uppermost layer, the user may view all features of the upper-layer volume adjustment control, and the another volume adjustment control is partially blocked by the upper-layer volume adjustment control. If the another volume adjustment control includes a plurality of volume adjustment controls, the plurality of volume bar adjustment controls may be displayed in a full superposition manner or the non-full superposition manner.

For example, the plurality of volume adjustment controls displayed in the non-full superposition manner in the volume interaction control may also mean that an upper-layer volume adjustment control and a shadow portion are displayed in the volume interaction control, a contour of the shadow portion is the same as a contour of the upper-layer volume adjustment control, a size of the shadow portion is less than a size of the upper-layer volume adjustment control, and the shadow portion is located at a lower layer of the volume adjustment control and is partially blocked by the upper-layer volume adjustment control. In other words, the user can view the upper-layer volume adjustment control completely, but can view only a part of the shadow portion. The shadow portion represents another volume adjustment control other than the upper-layer volume adjustment control in the plurality of volume adjustment controls, and the partially displayed shadow portion forms the prompt control used to inform the user that there is the another volume adjustment control under the upper-layer volume adjustment control, to prompt the user to adjust the plurality of types of volume through a further operation.

In a possible implementation of the first aspect, a plurality of volume icons are displayed in the volume interaction control, each volume icon corresponds to one volume adjustment control, an area occupied by each volume icon is less than an area occupied by the volume adjustment control corresponding to each volume icon, and the plurality of volume icons form the prompt control. In this implementation, the plurality of volume icons are displayed in the volume interaction control, and an area occupied by the volume interaction control can be reduced as much as possible by using the volume icon that occupies a small area. In addition, the plurality of volume icons may clearly inform the user that the plurality of types of volume can be adjusted through a further operation on the volume interaction control.

For example, the volume adjustment control may include a long volume bar, and the volume bar is divided into a shaded part and/or an unshaded part in a length direction. A larger area of the shaded part indicates higher volume of an application or a type of application corresponding to the volume adjustment control. When the entire volume bar is presented as the shaded part, it indicates that the application or the type of application corresponding to the volume adjustment control is at the maximum volume. When the entire volume bar is presented as the unshaded part, it indicates that the application or the type of application corresponding to the volume adjustment control is at the minimum volume, where the minimum volume may be mute or may be a preset minimum volume value.

For example, a volume indicator is further displayed on the volume adjustment control, and the volume indicator indicates the application or an application type corresponding to the volume adjustment control. In this implementation, the volume indicator is set, so that the user can conveniently determine the application or the application type corresponding to the viewed volume adjustment control, and the user can conveniently perform a selection. This enhances user experience.

For example, the second operation may be a slide operation, a drag operation, or the like on the volume interaction control. For example, if the volume interaction control is displayed close to a left edge of the display, the second operation may be sliding to a right side or dragging to a right side. Certainly, the operation to the right side may include an operation in a direction like a right side direction, an upper right side direction, or a lower right side direction.

For example, when the first window is displayed on the display, the method further includes: stopping displaying the volume interaction control. In this implementation, stopping displaying the volume interaction control means: after the second operation is received, switching the volume interaction control to the first window. This can ensure that only the first window covers the interface, so that a region other than a region covered by the first window in the interface is visible to the user, thereby enhancing user experience.

In a possible implementation of the first aspect, the plurality of volume adjustment controls are displayed in the first window in a non-superposition manner. In this implementation, the plurality of volume adjustment controls are displayed in the non-superposition manner. This display state may be referred to as an expanded state. The expanded state facilitates an adjustment operation performed by the user on each volume adjustment control.

For example, when the volume adjustment control is displayed in a form of the long volume bar, a plurality of volume bars are spaced in the first window for display. It should be understood that the long volume bar may be displayed vertically or horizontally. This is not limited in this application.

In a possible implementation of the first aspect, a setting icon control is further displayed in the first window, and the method further includes: receiving a fourth operation performed by the user on the setting icon control; and displaying a sound setting interface of the terminal device on the display in response to the fourth operation. In this implementation, a setting icon is displayed in the first window, to help the user enter the sound setting interface of the terminal device. This facilitates use by the user and enhances user experience.

For example, the fourth operation may be a tap operation (for example, may be a single tap or double-tap) on the setting icon control, or may be any other feasible operation manner. This is not limited in embodiments of this application.

In a possible implementation of the first aspect, the method further includes: when displaying the volume interaction control on the display, if detecting a press operation performed by the user on a volume button, displaying a first volume display control on the display, where the first volume display control displays adjustment of one type of volume corresponding to the volume interaction control; or if detecting a slide operation performed by the user on the volume interaction control, displaying a second volume display control on the display, where the second volume display control displays adjustment of one type of volume corresponding to the volume interaction control, and the first volume display control is different from the second volume display control. In this implementation, when the user adjusts the one type of volume (or referred to as current volume) corresponding to the volume interaction control of the terminal device, the user may perform adjustment in a manner of pressing the volume button (namely, hard button adjustment), or in a manner of performing a slide operation. Different volume display controls are displayed in response to the two operation manners, so that operation interaction is higher.

For example, both an area occupied by the first volume display control and an area occupied by the second volume display control are less than the area occupied by the volume interaction control. In this implementation, both the area occupied by the first volume display control and the area occupied by the second volume display control are less than the area occupied by the volume interaction control. In a process in which a control displays adjustment of the one type of volume corresponding to the volume interaction control, a covered area of the display can be reduced, thereby enhancing user experience.

For example, "the one type of volume that corresponds to the volume interaction control and that is displayed on the control" (or the current volume) may be volume of an application currently running on the terminal device or volume of an application type to which a currently running application belongs, or may be volume of a default application of the terminal device or volume of a default type of application.

In a possible implementation of the first aspect, the area occupied by the first volume display control is less than the area occupied by the second volume display control. In this implementation, the first volume display control displayed when the user presses the volume button to adjust the volume occupies a small area, and therefore, blocking a small part of the display. When the user adjusts the volume in a manner of the slide operation, the second volume display control that occupies a large area is displayed, to help the user easily find an operation region for adjusting the volume through a slide operation.

In a possible implementation of the first aspect, the method further includes: when displaying the first volume display control on the display, if detecting a slide operation performed by the user on the first volume display control, displaying the second volume display control on the display. In this implementation, when the user performs the slide operation on the first volume display control, the first volume display control on the display is switched to the second volume display control. In other words, volume adjustment may be switched from a manner of pressing the volume button to a manner of the slide operation. The operation manner is flexible and is convenient for use by the user.

In a possible implementation of the first aspect, the first operation may be: the press operation on the volume button, a slide operation on a first edge region of the display, or a tap operation on a first edge region of the display. It may be understood that the first edge region is a part of a region that is of the display and that is close to a first edge, for example, may be a long stripped area along the first edge of the display.

For example, the first edge may be any edge on the display.

For example, the first edge may be an edge closest to the volume button. For a terminal device (for example, a curved screen mobile phone) without the volume button, the first edge may be an edge closest to a virtual volume adjustment button of the terminal device on the display. Through such disposing, the first operation is performed on the edge closest to the volume button, or is performed on the edge closest to the virtual volume adjustment button of the terminal device, and the first operation is bound to the volume, thereby facilitating use by the user and enhancing user experience.

It may be understood that a size and a location of the first edge region may be set based on a requirement. This is not limited.

In a possible implementation of the first aspect, display locations of one or more of the volume interaction control, the first window, the first volume display control, and the second volume display control on the display are close to an operation location of the first operation. In this implementation, a control or a window related to volume adjustment is displayed close to the operation location of the first operation on the display. In this way, the displayed control or window is bound to a function of "volume adjustment", so that the user can easily identify a function of the displayed control or window, thereby enhancing user experience.

In a possible implementation of the first aspect, with a change of a background color of the interface in which the volume interaction control, the first window, the first volume display control, and the second volume display control are located, colors of the volume interaction control, the first window, the first volume display control, and the second volume display control change, so that a difference between any of the colors of the volume interaction control, the first window, the first volume display control, and the second volume display control and the background color of the interface is greater than a preset threshold. In this way, regardless of whether the background color of the interface is a dark color or a light color, it can be ensured that the volume interaction control, the first window, the first volume display control, and the second volume display control can be clearly displayed on the interface, which is convenient for the user to use.

For example, when the first operation is pressing the volume button, the operation location of the first operation is a location of the volume button. When the first operation is the slide operation on the first edge of the display or a tap operation on the first edge of the display, the operation location of the first operation is a sliding location or a tapping location. Details are not described herein.

In a possible implementation of the first aspect, the plurality of volume adjustment controls are displayed in the first window in a superposition manner, and before the third operation, the method further includes: receiving a fifth operation performed by the user on the first window; and switching, in response to the fifth operation, a volume adjustment control displayed at an uppermost layer in the plurality of volume adjustment controls displayed in the superposition manner. In this implementation, the plurality of volume adjustment controls are displayed in the first window in the superposition manner. In this case, some of the plurality of volume adjustment controls are simultaneously displayed in the first window (for example, a quantity of some volume adjustment controls may be 1, 2, or 3), and the fifth operation is used to switch the volume adjustment control displayed at the uppermost layer. The quantity of volume adjustment controls simultaneously displayed in the first window can be reduced in a superposition display manner. When necessary, the user performs different volume adjustment by switching the volume adjustment control displayed at the uppermost layer. This simplifies operations and enhances user experience.

For example, the fifth operation includes a slide operation on the volume adjustment control displayed at the uppermost layer. The slide operation on the volume adjustment control displayed at the uppermost layer is used to switch the volume adjustment control that is first displayed at the uppermost layer in the first window. The operation is simple, and user experience is good.

In a possible implementation of the first aspect, one volume adjustment control is displayed at an uppermost layer in the first window, indicators respectively corresponding to at least some of the plurality of volume adjustment controls are displayed in the first window, a first control is displayed on an indicator corresponding to the volume adjustment control displayed at the uppermost layer, and a location of the first control changes after the fifth operation is received. In this implementation, the indicator of the volume adjustment control is displayed in the first window, and the first control is displayed on the indicator corresponding to the volume adjustment control displayed at the uppermost layer. When the volume adjustment control displayed at the uppermost layer is switched, the location of the first control also changes. By combining the indicator and the first control, it is convenient for the user to switch any volume adjustment control to the uppermost layer for display. User operations are simple and user-friendly, and efficiency of switching the volume adjustment control in the first window and user experience are improved.

For example, that the first control is different from the indicator may be different in colors, different in shapes, or different in colors and shapes.

In a possible implementation of the first aspect, the fifth operation includes: a tap operation on the indicator corresponding to the volume adjustment control displayed at the uppermost layer, a slide operation on the first control, or a slide operation on the volume adjustment control displayed at the uppermost layer.

In a possible implementation of the first aspect, before receiving the third operation, the method further includes: receiving a sixth operation performed by the user on the first window; and switching the first window to a second window in response to the sixth operation, where a quantity of volume adjustment controls simultaneously displayed in the first window is different from a quantity of volume adjustment controls simultaneously displayed in the second window. In this implementation, the user may switch between the first window and the second window based on a requirement, so that different requirements of the user for the quantity of volume adjustment controls that are simultaneously displayed can be met, thereby enhancing user experience.

In a possible implementation of the first aspect, larger areas occupied by the second window and the first window indicate the larger quantities of volume adjustment controls displayed in the second window and the first window.

For example, if the area occupied by the first window is greater than the area occupied by the second window, the quantity of volume adjustment controls simultaneously displayed in the first window is greater than the quantity of volume adjustment controls simultaneously displayed in the second window; or if the area occupied by the first window is less than the area occupied by the second window, the quantity of volume adjustment controls simultaneously displayed in the first window is less than the quantity of volume adjustment controls simultaneously displayed in the second window. In this implementation, a quantity of volume adjustment controls in a window is changed with a change of an area occupied by the window, so that the area of the window can be fully used. For example, when the user adjusts a plurality of types of volume when watching a video, the user may select a window that occupies a small area, to reduce blocking of a video interface. When the user adjusts a plurality of types of volume when the user does not need to look at a screen (for example, when the user is making a call), the user may select a window with a large area to improve volume adjustment efficiency.

For example, the sixth operation may be a drag operation on an edge of the first window, or a two-finger pinch-out or pinch-in operation performed by the user on the first window. The pinch-out operation may be a slide operation in which two fingers gradually move away from each other. The pinch-in operation may be a slide operation in which two fingers gradually move close to each other. The drag operation may be dragging one edge of the first window in a direction away from another edge, or may be dragging one edge of the first window in a direction close to another edge. In the foregoing manner, switching between the first window and the second window can be quickly implemented, the user operation is convenient, and operation efficiency is high.

For example, the area occupied by the first window is less than the area occupied by the second window, and the sixth operation includes: the drag operation of dragging one edge of the first window in the direction away from another edge, or the two-finger pinch-out operation performed by the user on the first window.

For another example, the area occupied by the first window is greater than the area occupied by the second window, and the sixth operation includes: the drag operation of dragging one edge of the first window in the direction close to another edge, or the two-finger pinch-in operation performed by the user on the first window.

In a possible implementation of the first aspect, the method further includes: when displaying the volume interaction control on the display, if detecting the press operation performed by the user on the volume button or if detecting the slide operation performed by the user on the volume interaction control, displaying a third volume display control on the display, where the third volume display control displays adjustment of the one type of volume corresponding to the volume interaction control, and an area occupied by the third volume display control is less than the area occupied by the volume interaction control. In this implementation, when it is detected that the user presses the volume button or performs the slide operation on the volume interaction control, the third volume display control is displayed. An interaction scenario is simple, and development is convenient.

For example, the volume interaction control may include a long volume bar, and the volume bar is divided into a shaded part and/or an unshaded part in a length direction. A larger area of the shaded part indicates a larger volume value of the current volume corresponding to the volume interaction control. If the length direction of the volume bar is an up-down direction, the slide operation performed on the volume interaction control for volume adjustment may be sliding up or sliding down on the volume bar by a finger, and the volume is increased or decreased through the slide operation. If the length direction of the volume bar is a left-right direction, the slide operation performed on the volume interaction control for volume adjustment may be sliding left or sliding right on the volume bar by a finger, and the volume is increased or decreased through the slide operation.

For another example, the length direction of the volume bar may be the left-right direction. In this case, the slide operation on the volume interaction control may be sliding left or sliding right on the volume bar by the finger.

For example, the volume adjustment control may also include the long volume bar. The volume bar is divided into the shaded part and/or the unshaded part in the length direction. A larger area of the shaded part indicates a larger volume value of volume corresponding to the volume adjustment control. If the length direction of the volume bar is an up-down direction, the slide operation performed on the volume adjustment control for volume adjustment may be sliding up or sliding down on the volume bar by a finger, and the volume is increased or decreased through the slide operation. If the length direction of the volume bar is a left-right direction, the slide operation performed on the volume adjustment control for volume adjustment may be sliding left or sliding right on the volume bar by a finger, and the volume is increased or decreased through the slide operation.

It may be understood that the length direction of the volume bar may also be set in another direction. This is not limited herein.

In a possible implementation of the first aspect, before receiving the first operation of the user, the method further includes: displaying a fourth volume display control on the display in response to a seventh operation of the user, where the fourth volume display control displays adjustment of one type of volume of the terminal device, the first operation is an operation on the fourth volume display control, and an area occupied by the fourth volume display control is less than the area occupied by the volume interaction control; and
when displaying the fourth volume display control on the display, if detecting the press operation performed by the user on the volume button or if detecting a slide operation performed by the user on the fourth volume display control, keeping displaying the fourth volume display control on the display, where a level of the volume displayed in the fourth volume display control changes. In this implementation, the seventh operation of the user is used to identify that the user has a volume adjustment requirement, to display the fourth volume display control. When the user needs to adjust only one type of volume (which may be considered as a default type of volume) of the terminal device, the display keeps displaying the fourth volume display control. In this way, when the user adjusts only one type of volume of the terminal device, only the fourth volume display control that occupies an area smaller than the area occupied by the volume interaction control is displayed, to reduce coverage on the display.

For example, the first operation on the fourth volume display control includes a slide operation or a tap operation on the fourth volume display control.

For example, if the fourth volume display control is displayed in a right edge region of the display, the slide operation on the fourth volume display control includes a left slide operation; or if the fourth volume display control is displayed in a left edge region of the display, the slide operation on the fourth volume display control is a right slide operation. Certainly, the fourth volume display control may alternatively be displayed in an upper edge region or a lower edge region of the display, and the slide operation on the fourth volume display control is a slide operation to a side opposite to an edge on which the fourth volume display control is located. Details are not described herein again.

In a possible implementation of the first aspect, the first operation is a slide operation on an edge region of the display or a tap operation on an edge region of the display, and the method further includes: displaying a fifth volume display control on the display in response to the press operation performed by the user on the volume button, where an area occupied by the fifth volume display control is less than the area occupied by the volume interaction control. In this implementation, if the first operation of invoking the volume interaction control is the slide operation or the tap operation, the fifth volume display control with the smaller area is invoked when the user presses the volume button. To be specific, when the user has the volume adjustment requirement, if the user performs the first operation (the slide operation or the tap operation), the volume interaction control is displayed; or if the user presses the volume button, the fifth volume display control is displayed. Different controls are displayed based on different operation manners of the user, thereby improving interaction and user experience.

According to a second aspect, a communication apparatus is provided. The communication apparatus includes units used for steps of the method in any one of the first aspect or the possible implementations of the first aspect.

According to a third aspect, a communication apparatus is provided. The communication apparatus includes at least one processor and a memory. The processor is coupled to the memory, the memory stores program instructions, and when the program instructions stored in the memory are executed by the processor, the method in any one of the first aspect or the possible implementations of the first aspect is performed.

According to a fourth aspect, a communication apparatus is provided. The communication apparatus includes at least one processor and an interface circuit. The at least one processor is configured to perform the method in any one of the first aspect or the possible implementations of the first aspect.

According to a fifth aspect, a terminal device is provided. The terminal device includes any communication apparatus provided in the second aspect, the third aspect, or the fourth aspect.

For example, the terminal device may include a smartphone, a tablet computer, and the like.

According to a sixth aspect, a computer program product is provided. The computer program product includes a computer program. When the computer program is executed by a processor, the computer program is used to perform the method in any one of the first aspect or the possible implementations of the first aspect.

According to a seventh aspect, a computer-readable storage medium is provided. The computer-readable storage medium stores a computer program, and when being executed, the computer program is used to perform the method in any one of the first aspect or the possible implementations of the first aspect.

According to an eighth aspect, a chip is provided. The chip includes a processor, configured to invoke a computer program from a memory and run the computer program, so that a terminal device in which the chip is installed performs the method in any one of the first aspect or the possible implementations of the first aspect.

### BRIEF DESCRIPTION OF DRAWINGS

FIG. 1a to FIG. 1d are an example of a diagram of display interfaces in a process of adjusting volume on a mobile phone in a related technology;
FIG. 2a to FIG. 2c are an example of a diagram of display interfaces in a process of adjusting volume on a mobile phone in a related technology;
FIG. 3a to FIG. 3f are an example of a diagram of display interfaces in a process of adjusting volume on a mobile phone according to an embodiment of this application;
FIG. 4a to FIG. 4f are an example of a diagram of display interfaces in a process of adjusting volume on a mobile phone according to an embodiment of this application;
FIG. 5a to FIG. 5f are an example of a diagram of display interfaces in a process of adjusting volume on a mobile phone according to an embodiment of this application;
FIG. 6a to FIG. 6f are an example of a diagram of display interfaces in a process of adjusting volume on a mobile phone according to an embodiment of this application;
FIG. 7a to FIG. 7g are an example of a diagram of display interfaces in a process of adjusting volume on a mobile phone according to an embodiment of this application;
FIG. 8a to FIG. 8f are an example of a diagram of display interfaces in a process of adjusting volume on a mobile phone according to an embodiment of this application;
FIG. 9a to FIG. 9h are an example of a diagram of display interfaces in a process of adjusting volume on a mobile phone according to an embodiment of this application;
FIG. 10 is a schematic flowchart of a volume adjustment method according to an embodiment of this application;
FIG. 11 is a diagram of a design idea of a volume adjustment process according to an example of this application;
FIG. 12 is a diagram of a correspondence among a status, a scenario, a behavior, and a gesture in a volume adjustment process according to an example of this application;
FIG. 13 is a block diagram of a hardware structure of an example of a terminal device according to this application; and
FIG. 14 is a diagram of a chip system according to this application.

### DESCRIPTION OF EMBODIMENTS

Terminal devices are used increasingly widely as terminal technologies develop. In a process of using the terminal device, a user often needs to adjust volume of the terminal device. In a current volume adjustment method, if the user wants to adjust volume of a plurality of applications or a plurality of types of applications on the terminal device, the user needs to enter a sound setting interface by using a setting icon, and the adjustment can be implemented in the sound setting interface. According to this volume adjustment method, user operations are cumbersome and unfriendly to users, leading to a subpar user experience.

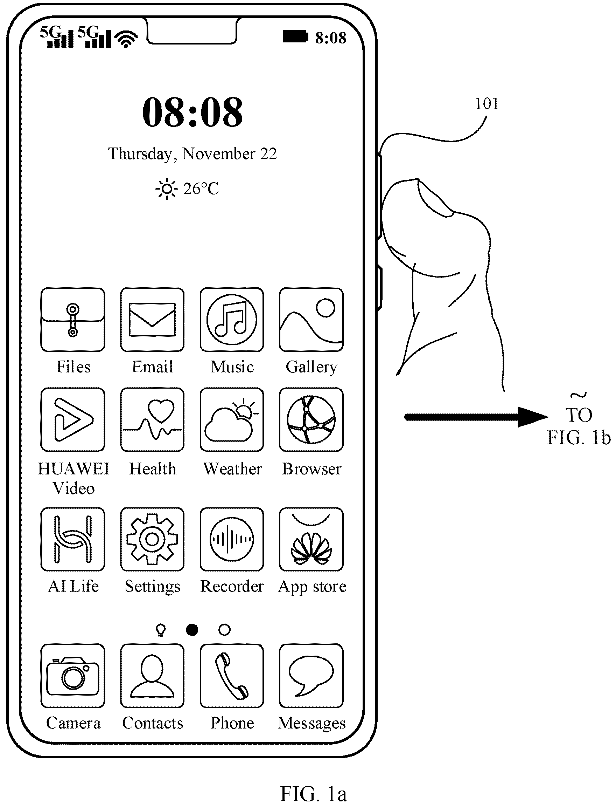

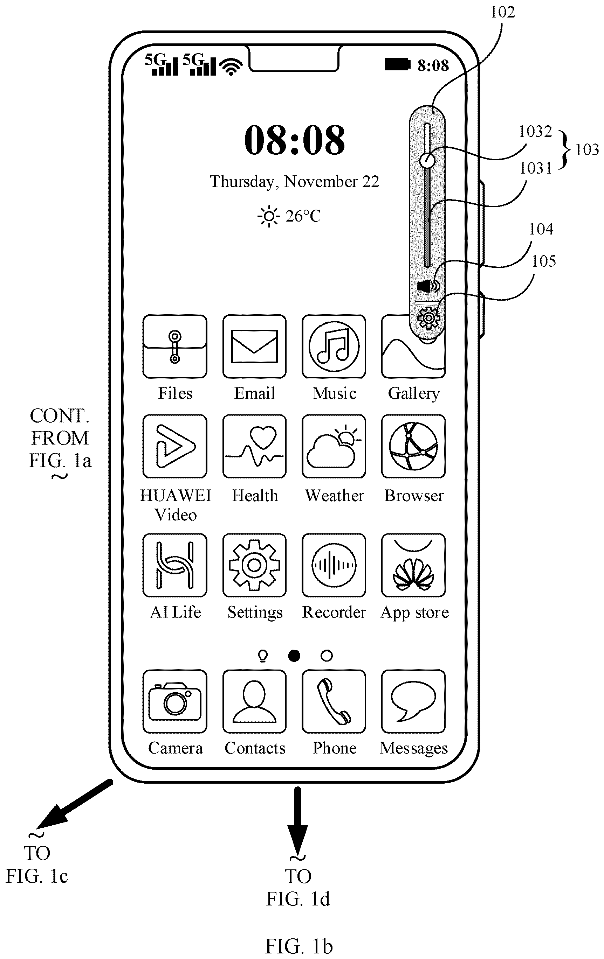

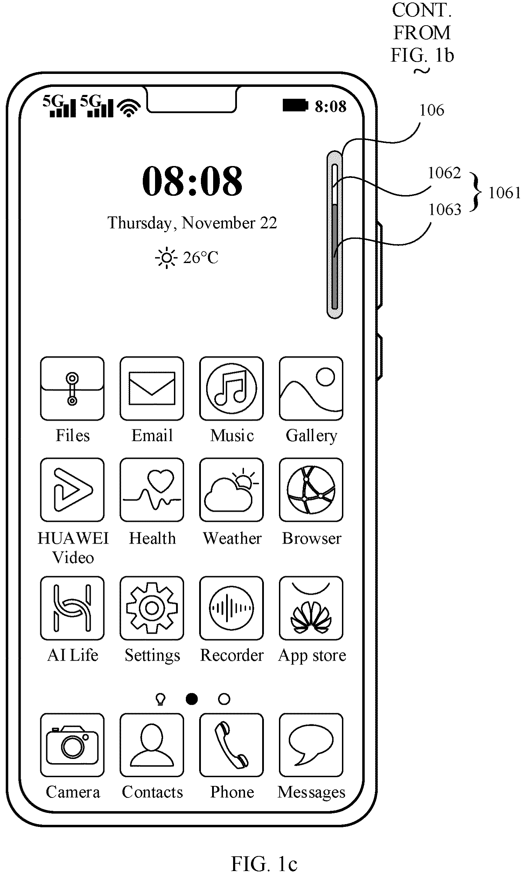

For example, FIG. 1a to FIG. 1d are an example of a diagram of display interfaces in a process of adjusting volume on a mobile phone in a related technology. As shown in FIG. 1a, when the volume needs to be adjusted, a user may press a volume button 101 of the mobile phone. After pressing, a display interface shown in FIG. 1a transitions to a display interface shown in FIG. 1b. As shown in FIG. 1b, a volume adjustment box 102 is displayed close to a right edge of a display of the mobile phone, and a volume adjustment control 103, a volume icon 104, and a setting icon control 105 are displayed in the volume adjustment box 102. The volume icon 104 indicates a specific type of volume that is currently adjusted. As shown in FIG. 1b, in this example, the volume icon 104 corresponds to volume of an application whose type is "music, video, and game". The volume adjustment control 103 includes a volume bar 1031 and a control 1032. The user may adjust the volume by sliding the adjustment control 1032. In addition, the user may adjust the volume by pressing the volume button 101. When the user slides the adjustment control 1032 or presses the volume button 101, the display interface shown in FIG. 1b transitions to a display interface shown in FIG. 1c. As shown in FIG. 1c, a volume adjustment box 106 is displayed close to the right edge of the display of the mobile phone, a volume display bar 1061 is displayed in the volume adjustment box 106, and an unshaded part 1062 and a shaded part 1063 are displayed in the volume display bar 1061. A larger area of the shaded part 1063 indicates higher corresponding volume. In the display interface shown in FIG. 1b, when adjusting the volume by sliding the adjustment control 1032 or pressing the volume button 101, the user can only adjust the volume of the application or the type corresponding to the volume icon 104.

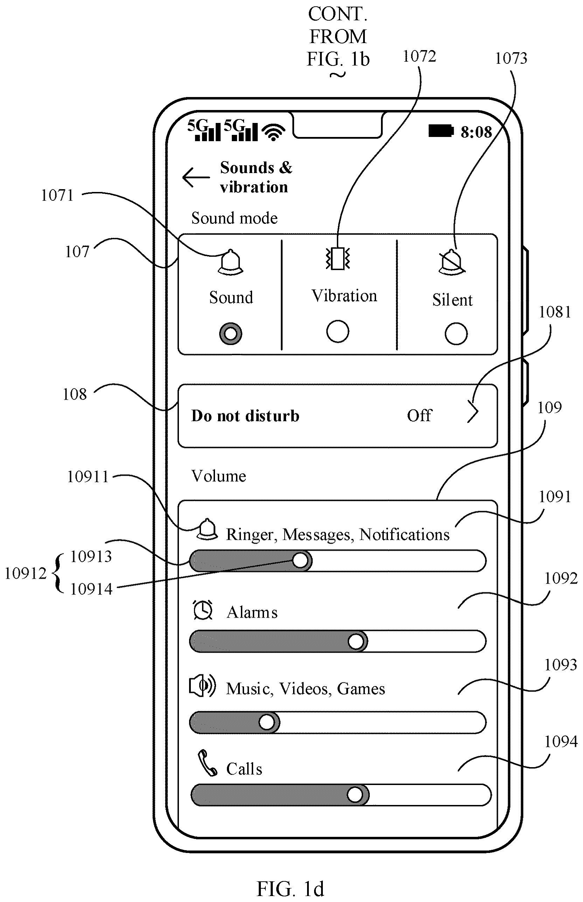

In the display interface shown in FIG. 1b, the setting icon control 105 is an entry of a sound setting interface of the mobile phone. When the mobile phone displays the display interface shown in FIG. 1b, after the user taps the setting icon control 105, the display interface shown in FIG. 1b transitions to a display interface shown in FIG. 1d. The display interface shown in FIG. 1d is the sound setting interface of the mobile phone. As shown in FIG. 1d, a sound mode adjustment box 107, a do-not-disturb adjustment box 108, and a global volume box 109 are displayed in the display interface. Three sound mode controls are displayed in the sound mode adjustment box 107: a "sound" mode control 1071, a "vibration" mode control 1072, and a "silent" mode control 1073. As shown in FIG. 1d, the mobile phone is in "sound" mode in the display interface. The do-not-disturb adjustment box 108 is used to display whether the mobile phone is in do-not-disturb mode. As shown in FIG. 1d, in the display interface, the mobile phone is not in do-not-disturb mode. When the mobile phone is in "sound" mode and is not in do-not-disturb mode, a volume adjustment control displayed in the global volume box 109 is in an adjustable state.

As shown in FIG. 1d, four volume adjustment items are displayed in the global volume box 109, and each volume adjustment item corresponds to volume of one type of application. The four volume adjustment items are: a first volume item 1091, a second volume item 1092, a third volume item 1093, and a fourth volume item 1094. As shown in FIG. 1d, a volume icon 10911 and a volume adjustment control 10912 are displayed in the first volume item 1091, and the volume adjustment control 10912 includes a volume bar 10913 and a control 10914. The first volume item 1091 further displays a name of an application type corresponding to the first volume item 1091: "ringer, messages, notifications". The user may slide the control 10914 to adjust volume of an application whose type is "ringer, messages, notifications". As shown in FIG. 1d, the second volume item 1092 corresponds to volume of an application whose type is "alarms", and the user may slide a control in the second volume item 1092 to adjust the volume of the application corresponding to "alarms" in the mobile phone. The third volume item 1093 corresponds to volume of an application whose type is "music, videos, games", and the user may slide a control in the third volume item 1093 to adjust the volume of the application corresponding to "music, videos, games" in the mobile phone. The fourth volume item 1094 corresponds to volume of an application corresponding to "calls", and the user may slide a control in the fourth volume item 1094 to adjust volume of the mobile phone during a call. It may be understood that one type of application may include one or more applications. It can be learned from the foregoing that, in the display interface shown in FIG. 1d, the user may adjust volume of all applications or all types of applications of the mobile phone.

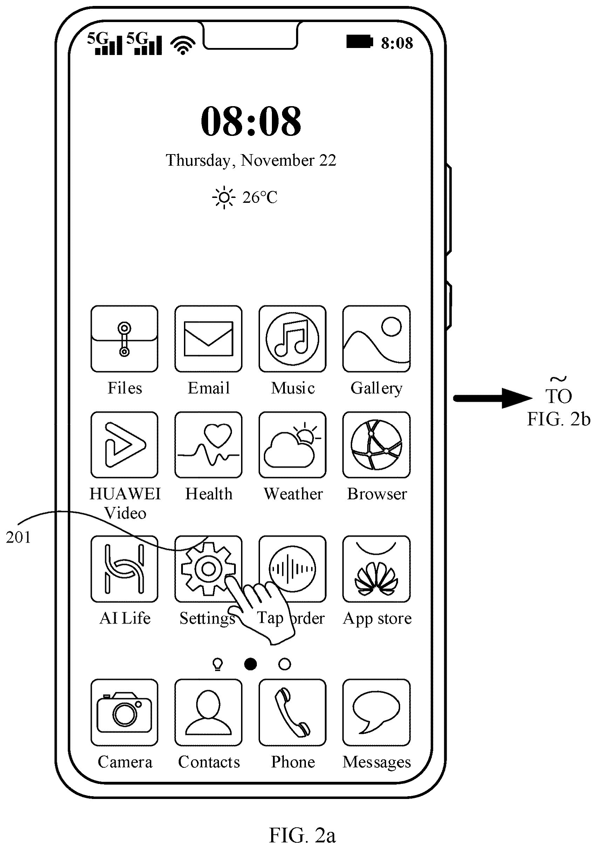

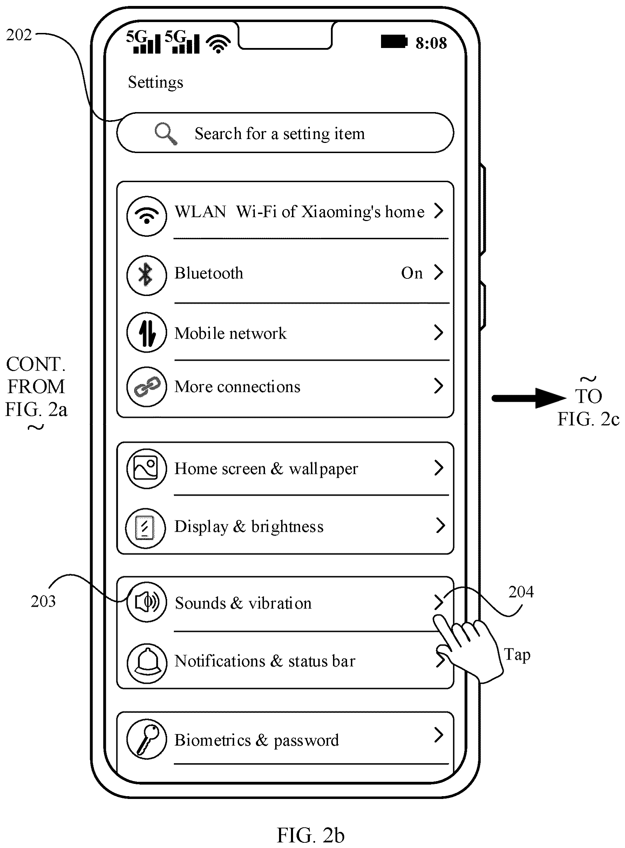

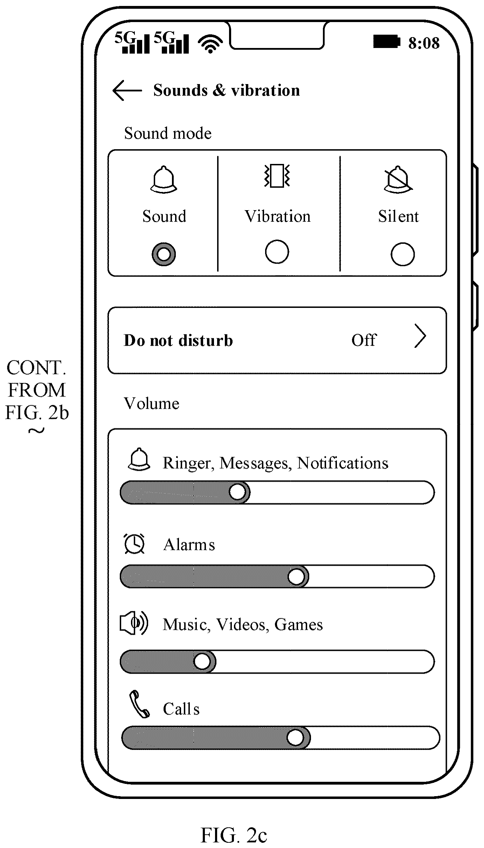

For another example, FIG. 2a to FIG. 2c are an example of a diagram of display interfaces in a process of adjusting volume on a mobile phone in a related technology. As shown in FIG. 2a, when the volume needs to be adjusted, a user taps a setting icon 201 in a display interface, and the display interface shown in FIG. 2a transitions to a display interface shown in FIG. 2b. FIG. 2b shows a setting interface of the mobile phone. A search box 202 and nine setting items are displayed in the setting interface. As shown in FIG. 2b, a name of the seventh setting item from top to bottom is "sounds & vibration", and the setting item "sounds & vibration" includes a setting item icon 203 and an expand control 204. The user taps the expand control 204, and the display interface shown in FIG. 2b transitions to a display interface shown in FIG. 2c. The user may adjust volume of a plurality of types of applications of the mobile phone in the display interface shown in FIG. 2c. The display interface shown in FIG. 2c is the same as the display interface shown in FIG. 1d. Therefore, for content of FIG. 2c, refer to the descriptions of FIG. 1d. Details are not described herein again.

It can be learned from the foregoing examples in FIG. 1a to FIG. 1d and FIG. 2a to FIG. 2c that in the display interface shown in FIG. 1b, the user can adjust volume of only one application or one type of application. When the user needs to adjust the volume of the plurality of applications or the plurality of types of applications of the mobile phone, the user needs to tap the setting icon control 105 in FIG. 1b or the setting icon 201 in FIG. 2a, so that the display interface transitions to a display interface shown in a figure in FIG. 1a to FIG. 1d or the sound setting interface shown in FIG. 2c, and then the volume of the plurality of applications or the plurality of types of applications is adjusted in the sound setting interface. The two operation manners of adjusting a plurality of types of volume are cumbersome and unfriendly to users, leading to a subpar user experience.

In view of this, this application provides a volume adjustment method. A user may trigger a volume adjustment window through a simple operation. The volume adjustment window may be used to adjust volume of a plurality of different applications or volume of a plurality of different types of applications. In other words, in the same volume adjustment window, the user may adjust the volume of the plurality of different applications or the volume of the plurality of different types of applications. In addition, the volume adjustment window (namely, a first window) covers a part of features of an interface in which the volume adjustment window is located, so that the user can continue to use an uncovered part of the interface when adjusting a plurality of types of volume. Using the volume adjustment method to adjust the plurality of types of volume simplifies operations and enhances user experience.

The following specifically describes the volume adjustment method provided in this application.

It should be understood that the volume adjustment method provided in this application may be applied to a terminal device having a display. For example, the terminal device may include a smartphone, a tablet computer, a notebook computer, a foldable smartphone, a smart television, a head unit, and the like. A specific form of the terminal device is not limited in embodiments of this application. In the following examples, a mobile phone is used as an example for description.

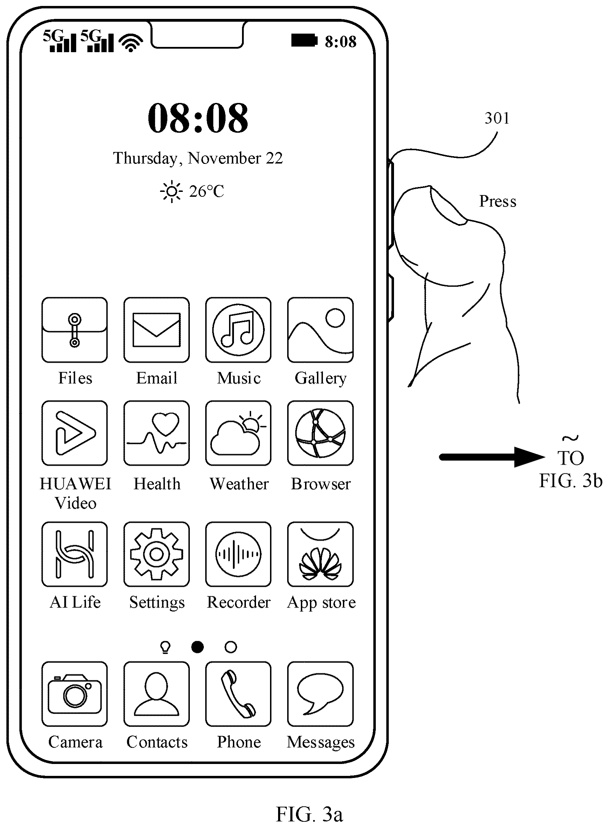

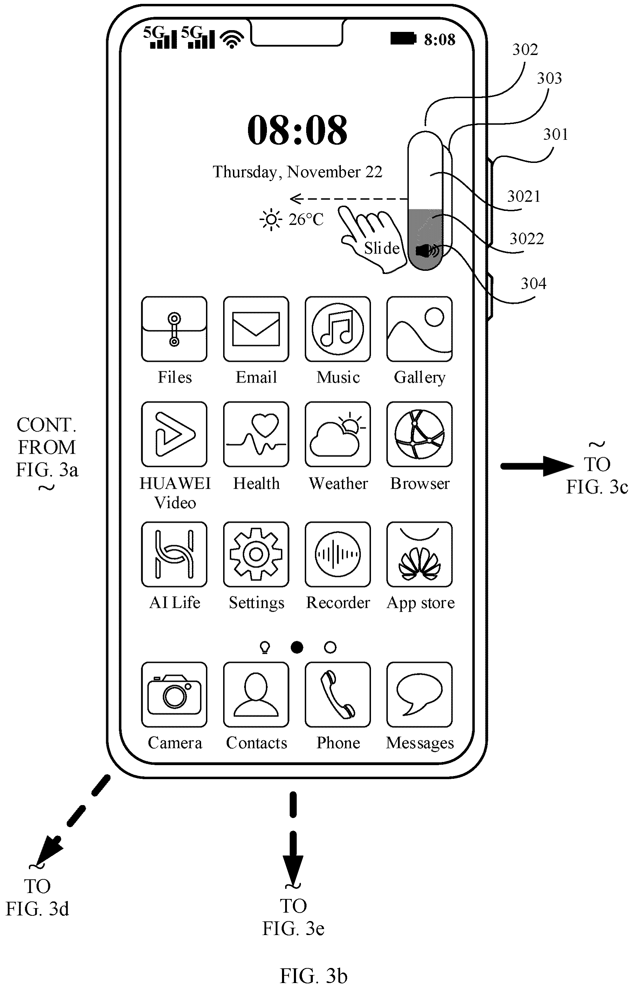

FIG. 3a to FIG. 3f are an example of a diagram of display interfaces in a process of adjusting volume on a mobile phone according to an embodiment of this application. As shown in FIG. 3a, a user may press a volume button 301 of the mobile phone. After pressing, a display interface shown in FIG. 3a transitions to a display interface shown in FIG. 3b. As shown in FIG. 3b, a volume adjustment control 302 is displayed close to a right edge of a display of the mobile phone. The volume adjustment control 302 is displayed by superimposing volume adjustment controls respectively corresponding to a plurality of different applications or volume adjustment controls respectively corresponding to a plurality of different types of applications. Because of superimposed display, the user can view only a volume adjustment control corresponding to an uppermost-layer application or a volume adjustment control corresponding to an uppermost-layer type of application. For example, the volume adjustment control 302 shown in FIG. 3b is displayed at an uppermost layer, and the volume adjustment control 302 corresponds to volume of an application whose type is "media" in the mobile phone.

Optionally, the superimposed display of the plurality of volume adjustment controls may be full superimposed display. To be specific, a volume adjustment control located at the uppermost layer completely covers all volume adjustment controls located at a lower layer, and the user completely cannot view the volume adjustment controls at the lower layer.

In a possible implementation, the superimposed display of the plurality of volume adjustment controls may alternatively be non-full superimposed display. To be specific, the volume adjustment control located at the uppermost layer is completely displayed, and the volume adjustment controls at the lower layer are partially blocked (or covered) by the volume adjustment control at the uppermost layer, that is, the volume adjustment controls at the lower layer are partially displayed. As shown in FIG. 3b, in the display interface, the volume adjustment control 302 is displayed in a non-full superimposition manner, and another volume adjustment control 303 is displayed on a right side of the volume adjustment control 302 and is partially covered by the volume adjustment control 302.

For example, as shown in FIG. 3b, a length of the another volume adjustment control 303 is less than a length of the volume adjustment control 302, so that the volume adjustment control 302 and the another volume adjustment control 303 occupy a small area as a whole, to reduce blocking of other display content in the display interface.

Optionally, in a possible implementation, the another volume adjustment control 303 shown in FIG. 3b may alternatively be displayed in another manner. For example, the length of the another volume adjustment control 303 may be equal to the length of the volume adjustment control 302. Certainly, the length of the another volume adjustment control 303 may also be greater than the length of the volume adjustment control 302. Details are not described in this application.

It should be understood that the another volume adjustment control 303 shown in FIG. 3b may include one or more volume adjustment controls. When the another volume adjustment control 303 includes a plurality of volume adjustment controls, the another volume adjustment control 303 may also be the plurality of volume adjustment controls that are displayed in a superposition manner. For example, the another volume adjustment control 303 shown in FIG. 3b shows an effect that the plurality of volume adjustment controls are displayed in a full superposition manner. In other words, the user can view only one volume adjustment control that is partially displayed and that is located at the uppermost layer in the another volume adjustment control 303.

In an optional implementation, the plurality of volume adjustment controls in the another volume adjustment control 303 may alternatively be displayed in a non-full superposition manner, in other words, all the volume adjustment controls in the another volume adjustment control 303 are partially displayed.

Optionally, in an optional implementation, the volume adjustment control 302 is displayed close to the volume button 301. As shown in FIG. 3b, the volume adjustment control 302 is displayed at a location close to the volume button 301 on the display. Through such disposing, the user can more intuitively determine that a function of the volume adjustment control is volume adjustment.

For example, a volume indicator 304 is displayed on the volume adjustment control 302, and the volume indicator 304 indicates an application or an application type corresponding to the volume adjustment control 302. For example, as shown in FIG. 3b, the volume indicator 304 may be represented in a form of an icon. Optionally, the volume indicator 304 may alternatively be represented in a form of a text. Certainly, the volume indicator may alternatively be represented by using a combination of the text and the icon. As long as the volume indicator 304 can enable the user to distinguish and identify the application or the application type corresponding to the volume adjustment control 302, a specific form and a display location of the volume indicator 304 are not specifically limited in this application.

As shown in FIG. 3b, an unshaded part 3021 and a shaded part 3022 are displayed in the volume adjustment control 302. A larger area of the shaded part 3022 indicates higher volume of an application or a type of application corresponding to the volume adjustment control 302.

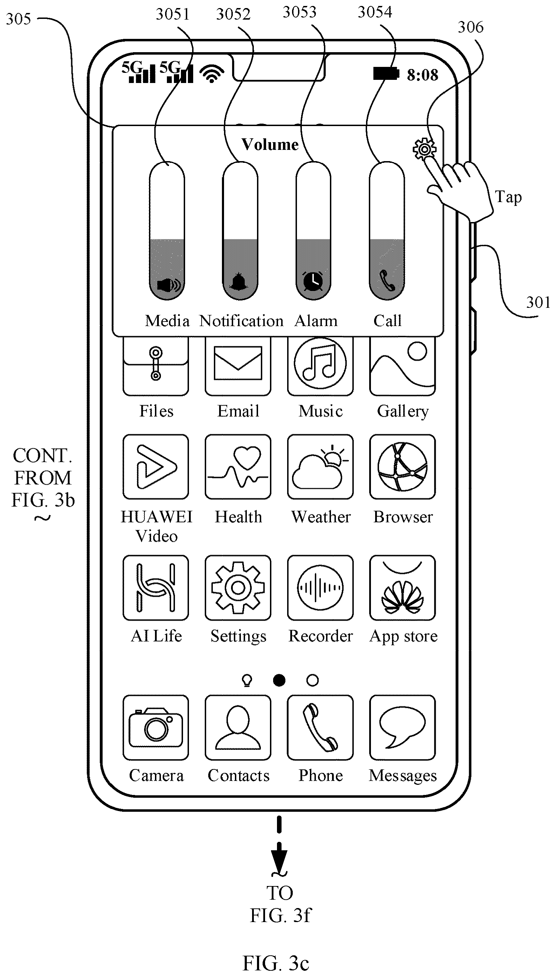

In the display interface shown in FIG. 3b, after a finger of the user slides left on the volume adjustment control 302, the display interface shown in FIG. 3b transitions to a display interface shown in FIG. 3c. As shown in FIG. 3c, a volume adjustment window 305 is displayed in the display interface, and the volume adjustment window 305 is displayed at an uppermost layer of the display interface displayed on the display of the mobile phone, and covers a part of the display. Same as the volume adjustment control 302 shown in FIG. 3b, the volume adjustment window 305 is also displayed close to the volume button 301. A difference is that an area occupied by the volume adjustment window 305 is greater than an area occupied by the volume adjustment control 302. Four volume adjustment controls are displayed in the volume adjustment window 305: a first volume adjustment control 3051, a second volume adjustment control 3052, a third volume adjustment control 3053, and a fourth volume adjustment control 3054. A corresponding volume name is further displayed on a lower side of each volume adjustment control. The volume name may be a name of an application or a type of an application corresponding to the volume adjustment control.

As shown in FIG. 3c, a volume name of the first volume adjustment control 3051 is "media", and an application corresponding to the first volume adjustment control 3051 is a media application, for example, a music program, a video program, or a game program. A volume name of the second volume adjustment control 3052 is "notification", and an application corresponding to the second volume adjustment control 3052 is a program like a mobile phone incoming call, mobile phone information, or a mobile phone notification. A volume name of the third volume adjustment control 3053 is "alarm", and an application corresponding to the third volume adjustment control 3053 is an alarm of the mobile phone. A volume name of the fourth volume adjustment control 3054 is "call", and an application corresponding to the fourth volume adjustment control 3054 is a voice call program.

The first volume adjustment control 3051, the second volume adjustment control 3052, the third volume adjustment control 3053, and the fourth volume adjustment control 3054 shown in FIG. 3c are all basically the same as the volume adjustment control 302 shown in FIG. 3b in shape and function. The user may slide up or down on any volume adjustment control in the volume adjustment window 305 by using a finger, to change volume of an application corresponding to the volume adjustment control or volume of a corresponding type of application.

Optionally, in a possible implementation, in the display interface shown in FIG. 3c, a setting icon control 306 is further displayed. For example, the setting icon control 306 may be displayed in the volume adjustment window 305. Certainly, the setting icon control 306 may also be displayed at another location. This is not limited in this application.

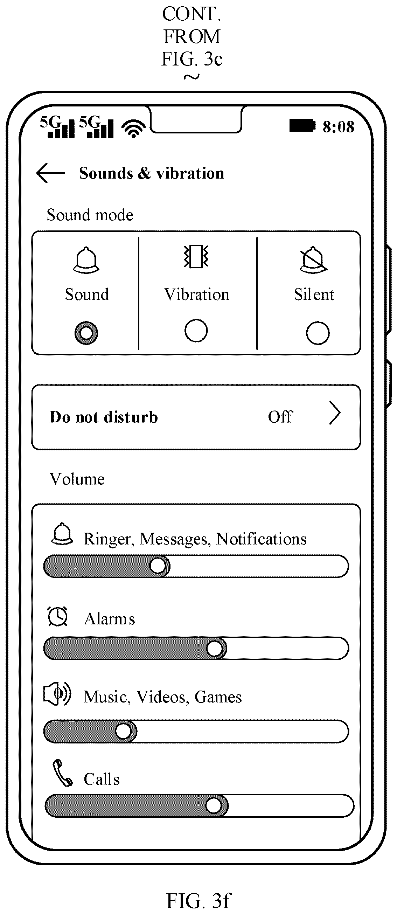

As shown in FIG. 3c, after the user taps the setting icon control 306, the display interface shown in FIG. 3c transitions to a display interface shown in FIG. 3f. The display interface shown in FIG. 3f is the same as the display interface shown in FIG. 1d. Therefore, for content of FIG. 3f, refer to the descriptions of FIG. 1d. Details are not described herein again.

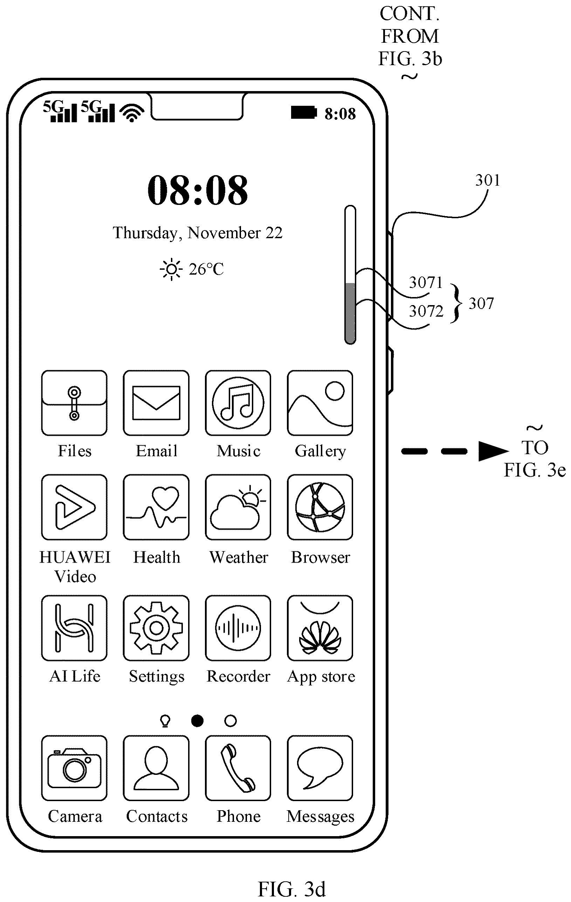

Optionally, in a possible implementation, when the mobile phone displays the display interface shown in FIG. 3b, after the user presses the volume button 301 by using the finger, the display interface shown in FIG. 3b transitions to a display interface shown in FIG. 3d. As shown in FIG. 3d, a volume display control 307 is displayed on the right edge of the display of the mobile phone, and an unshaded part 3071 and a shaded part 3072 are displayed in the volume display control 307. A larger length of the shaded part 3072 indicates higher volume. It should be understood that the volume display control 307 displays a volume level corresponding to the volume adjustment control 302. When the user presses the volume button 301 to decrease the volume of the mobile phone, a length of the unshaded part 3071 increases, and a length of the shaded part 3072 decreases. When the user presses the volume button 301 to increase the volume of the mobile phone, the length of the unshaded part 3071 decreases, and the length of the shaded part 3072 increases.

For example, when the user adjusts the volume by pressing the volume button 301, a width of the volume display control 307 shown in FIG. 3d is less than a width of the volume adjustment control 302 shown in FIG. 3b. For example, a ratio of the width of the volume display control 307 to the width of the volume adjustment control 302 may be 1:4, 1:5, 1:6, 1:7, 1:8, or the like. The volume display control 307 is displayed by using a small width, so that screen display content can be less covered, and user experience can be improved.

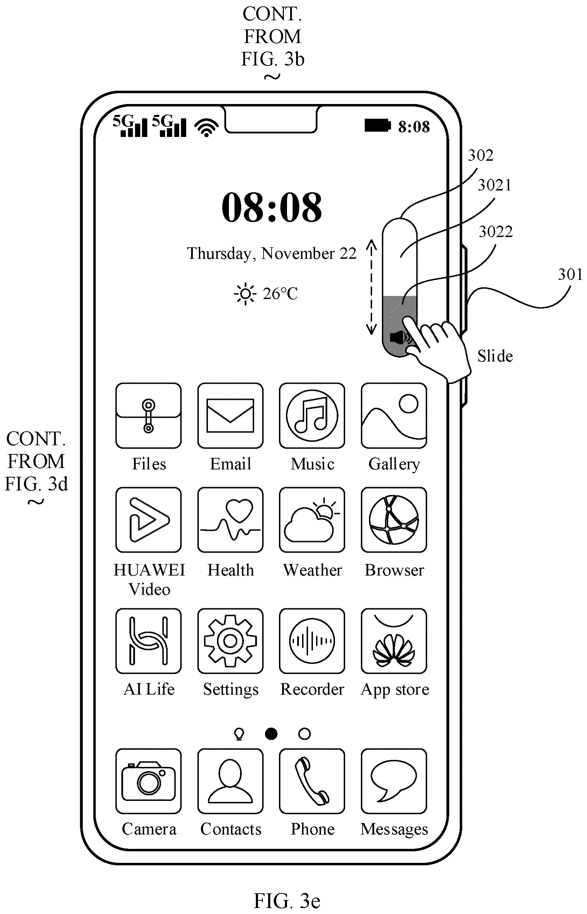

Optionally, in a possible implementation, when the mobile phone displays the display interface shown in FIG. 3b, after the user touches and holds the volume adjustment control 302 or the user slides up or down on the volume adjustment control 302, the display interface shown in FIG. 3b transitions to a display interface shown in FIG. 3e. The display interface shown in FIG. 3e is basically the same as the display interface shown in FIG. 3b. A difference lies in that the display interface shown in FIG. 3e stops displaying the another volume adjustment control 303. In other words, the display interface shown in FIG. 3e no longer displays the another volume adjustment control 303. It should be understood that, after the user touches and holds the volume adjustment control 302 or slides up or down on the volume adjustment control 302, it indicates that the user chooses to adjust the volume of the one application or the one type of application corresponding to the volume adjustment control 302. As shown in FIG. 3e, the finger of the user slides up or down on the volume adjustment control 302, to adjust the volume corresponding to the volume adjustment control 302. When the finger of the user slides up, an area of the shaded part 3022 increases, an area of the unshaded part 3021 decreases, and the volume increases. When the finger of the user slides down, the area of the shaded part 3022 decreases, the area of the unshaded part 3021 increases, and the volume decreases.

Optionally, in a possible implementation, when the mobile phone displays the display interface shown in FIG. 3a, the user slides left on the right edge of the display of the mobile phone by using the finger, and after the sliding, the display interface shown in FIG. 3a transitions to the display interface shown in FIG. 3b; or the user double taps a right side of the display of the mobile phone, and then the display interface shown in FIG. 3a transitions to the display interface shown in FIG. 3b. Certainly, the display interface shown in FIG. 3a may further transition to the display interface shown in FIG. 3b in any other possible manner, for example, sliding right from a left edge of the display of the mobile phone, sliding down from an upper edge of the display of the mobile phone, or sliding up from a lower edge of the display of the mobile phone. This is not limited in this application.

Optionally, in a possible implementation, when the mobile phone displays the display interface shown in FIG. 3b, if no operation of the user is detected within a preset time length (for example, 2s or 3s), or the finger of the user slides right on the volume adjustment control 302, or the user taps an area other than the volume adjustment control 302 in the display interface, the volume adjustment control 302 stops displaying. In other words, the display interface shown in FIG. 3b transitions to the display interface shown in FIG. 3a.

Optionally, in a possible implementation, when the display interface shown in FIG. 3b is displayed, after the finger of the user slides to a lower left side or an upper left side on the volume adjustment control 302, the display interface shown in FIG. 3b transitions to the display interface shown in FIG. 3c; or after the finger of the user taps (for example, may be a single tap or double-tap) the volume adjustment control 302, the display interface shown in FIG. 3b transitions to the display interface shown in FIG. 3c. In embodiments of this application, only the method for switching the display interface shown in FIG. 3b to the display interface shown in FIG. 3c is used as an example for description. When the method conflicts with an operation manner in an existing technical solution, any other possible operation manner may be used. No enumeration is provided herein.

Optionally, in a possible implementation, in the display interface shown in FIG. 3c, if no operation of the user is detected within a preset time length (for example, 2s or 3s), or the user taps a region other than the volume adjustment window 305 in the display interface, the volume adjustment window 305 stops displaying. In other words, the display interface shown in FIG. 3c transitions to the display interface shown in FIG. 3a.

Optionally, in a possible implementation, in the display interface shown in FIG. 3d, if no operation of the user is detected within a preset time length (for example, 2s or 3s), or the user taps a region other than the volume display control 307 in the display interface, the volume display control 307 stops displaying. In other words, the display interface shown in FIG. 3d transitions to the display interface shown in FIG. 3a.

Optionally, in a possible implementation, in the display interface shown in FIG. 3d, if the user touches and holds the volume display control 307 or the user slides up or down on the volume display control 307, the display interface shown in FIG. 3d transitions to the display interface shown in FIG. 3e.

Optionally, in a possible implementation, in the display interface shown in FIG. 3e, if no operation of the user is detected (for example, no slide operation of the user or no pressing of the user on the display is detected) within a preset time length (for example, 2s or 3s), the display interface shown in FIG. 3e transitions to the display interface shown in FIG. 3b.

Optionally, in a possible implementation, in the display interface shown in FIG. 3b, if the finger of the user slides up or down on the volume adjustment control 302, the display interface shown in FIG. 3b does not transition; or if the user presses the volume button 301, the display interface shown in FIG. 3b transitions to the display interface shown in FIG. 3d. In other words, in this implementation, the display interface shown in FIG. 3e does not appear anymore. For example, when the mobile phone displays the display interface shown in FIG. 3b, and when the finger of the user slides on the volume adjustment control 302: if the finger of the user slides up, the area of the shaded part 3022 of the volume adjustment control 302 shown in FIG. 3b increases, the area of the unshaded part 3021 decreases, and the volume of the mobile phone increases; or if the finger of the user slides down, the area of the shaded part 3022 of the volume adjustment control 302 shown in FIG. 3b decreases, the area of the unshaded part 3021 increases, and the volume of the mobile phone decreases.

Optionally, in a possible implementation, in the display interface shown in FIG. 3b, after the finger of the user slides up or down on the volume adjustment control 302 or the user presses the volume button 301, the display interface shown in FIG. 3b transitions to the display interface shown in FIG. 3e. In other words, in this implementation, the display interface shown in FIG. 3d does not appear anymore. That is, when the user adjusts the volume by using the volume adjustment control 302 or the volume button 301, the display interface is switched to the display interface shown in FIG. 3e. For example, when the finger of the user slides up on the volume adjustment control 302, or the user presses the volume button 301 to increase the volume, the area of the shaded part 3022 in the display interface shown in FIG. 3e increases, and the area of the unshaded part 3021 decreases. When the finger of the user slides down on the volume adjustment control 302, or the user presses the volume button 301 to decrease the volume, the area of the shaded part 3022 in the display interface shown in FIG. 3e decreases, and the area of the unshaded part 3021 increases.

Optionally, in a possible implementation, in the display interface shown in FIG. 3b, after the finger of the user slides up or down on the volume adjustment control 302, or the user presses the volume button 301, the display interface does not transition. In other words, in this implementation, the display interface shown in FIG. 3d and the display interface shown in FIG. 3e do not appear. When the user adjusts the volume by using the volume adjustment control 302 or the volume button 301, the display interface basically remains as shown in FIG. 3b, but the areas of the shaded part 3022 and the unshaded part 3021 of the volume adjustment control 302 change. For example, when the finger of the user slides up on the volume adjustment control 302, or the user presses the volume button 301 to increase the volume, the area of the shaded part 3022 in the display interface shown in FIG. 3b increases, and the area of the unshaded part 3021 decreases. When the finger of the user slides down on the volume adjustment control 302, or the user presses the volume button 301 to decrease the volume, the area of the shaded part 3022 in the display interface shown in FIG. 3b decreases, and the area of the unshaded part 3021 increases.

For example, as shown in FIG. 3a to FIG. 3f, the volume adjustment control 302, the first volume adjustment control 3051, the second volume adjustment control 3052, the third volume adjustment control 3053, the fourth volume adjustment control 3054, and the volume display control 307 are all displayed vertically (to be specific, the foregoing controls are all of a long bar structure, and a length direction of the long bar structure is disposed in an up-down direction of the mobile phone (or a length direction of the mobile phone)). In some other implementations, one or more of the volume adjustment control 302, the first volume adjustment control 3051, the second volume adjustment control 3052, the third volume adjustment control 3053, the fourth volume adjustment control 3054, and the volume display control 307 may alternatively be displayed horizontally (to be specific, length directions of the controls are disposed in a left-right direction of the mobile phone (or a width direction of the mobile phone)). When a control is displayed horizontally, if the control needs to be operated in a sliding manner, the finger of the user slides left or right on the control.

For example, as shown in FIG. 3a to FIG. 3f, the volume adjustment control 302, the first volume adjustment control 3051, the second volume adjustment control 3052, the third volume adjustment control 3053, the fourth volume adjustment control 3054, and the volume display control 307 are all vertically displayed close to the volume button 301. In this implementation, the controls may be displayed close to the volume button 301 (that is, the controls are bound to be displayed close to the volume button 301). This complies with a user habit of adjusting volume in a hardware pressing manner, and enhances user experience.

Optionally, in some other implementations, one or more of the volume adjustment control 302, the volume adjustment window 305, and the volume display control 307 are floating windows with movable locations. That is, the user may change the location of the floating window in the display interface based on a requirement, to facilitate use by the user.

In the foregoing manner, the user may enter, through a simple operation, the volume adjustment window shown in FIG. 3b, and the plurality of types of volume may be adjusted in the volume adjustment window. In this implementation, user operations are simple, and an operation manner is user-friendly, so that user experience can be improved.

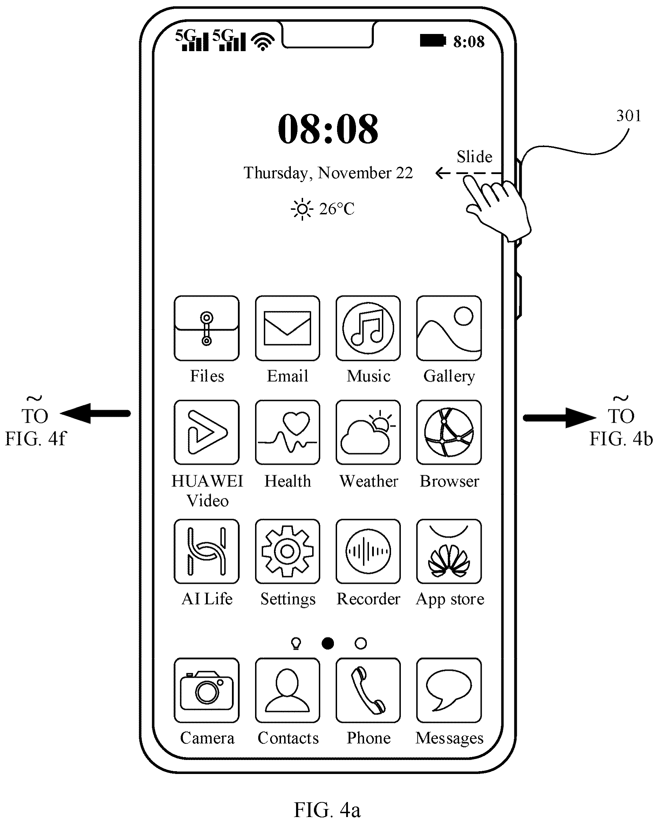

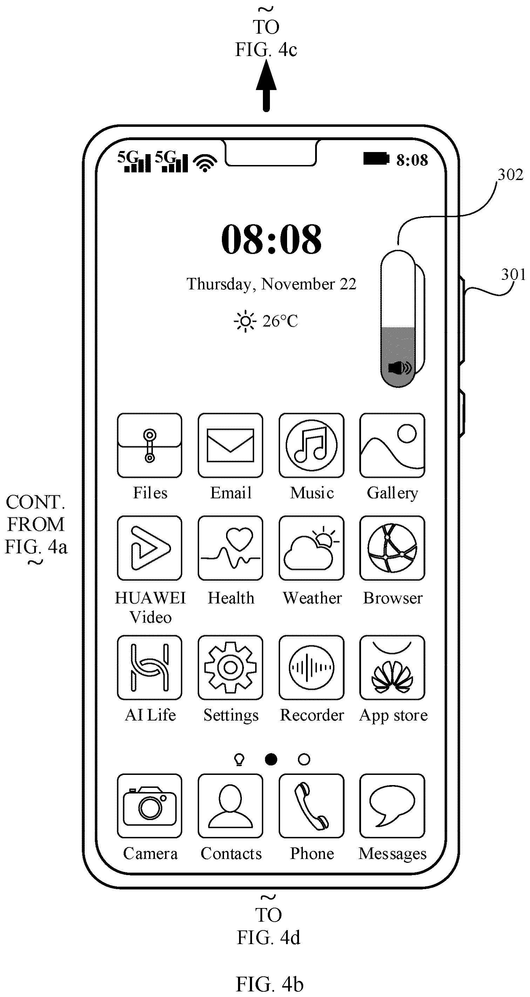

FIG. 4a to FIG. 4f are another example of a diagram of display interfaces in a process of adjusting volume on a mobile phone according to an embodiment of this application. As shown in FIG. 4a, a user slides left on a right edge of a display of the mobile phone by using a finger. After sliding, a display interface shown in FIG. 4a transitions to a display interface shown in FIG. 4b. The display interface shown in FIG. 4b is the same as the display interface shown in FIG. 3b. Therefore, for specific descriptions of the display interface shown in FIG. 4b, refer to the foregoing descriptions of the display interface shown in FIG. 3b. Details are not described herein again.

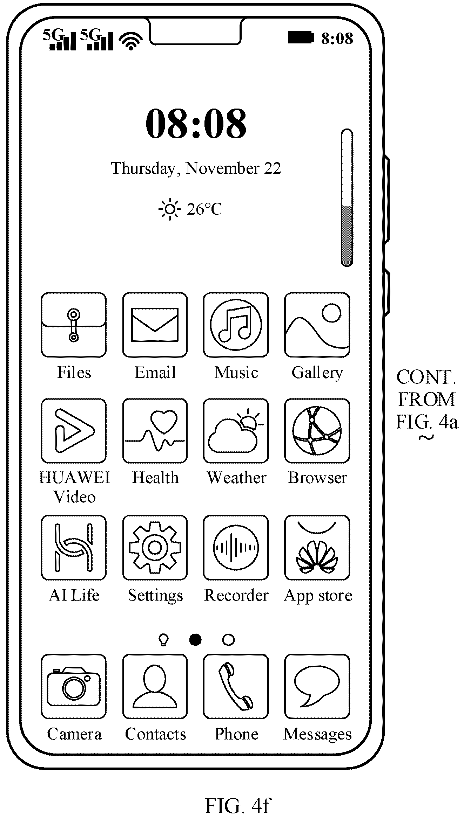

When the mobile phone displays the display interface shown in FIG. 4a, after the user presses the volume button 301 of the mobile phone, the display interface shown in FIG. 4a transitions to a display interface shown in FIG. 4f. The display interface shown in FIG. 4f is basically the same as the display interface shown in FIG. 3d. Therefore, FIG. 4f is not described herein again. For specific content, refer to the foregoing descriptions of FIG. 3d.

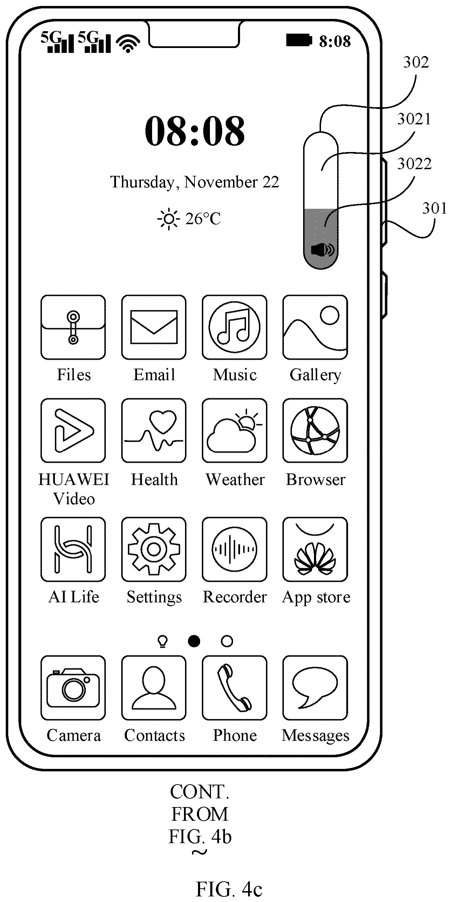

When the mobile phone displays the display interface shown in FIG. 4b, when the finger of the user presses the volume adjustment control 302, or slides up or down on the volume adjustment control 302, the display interface shown in FIG. 4b transitions to a display interface shown in FIG. 4c. The display interface shown in FIG. 4c is basically the same as the display interface shown in FIG. 3e. Therefore, FIG. 4c is not described in detail herein again. For details about the display interface shown in FIG. 4c, refer to the foregoing descriptions of the display interface shown in FIG. 3e.

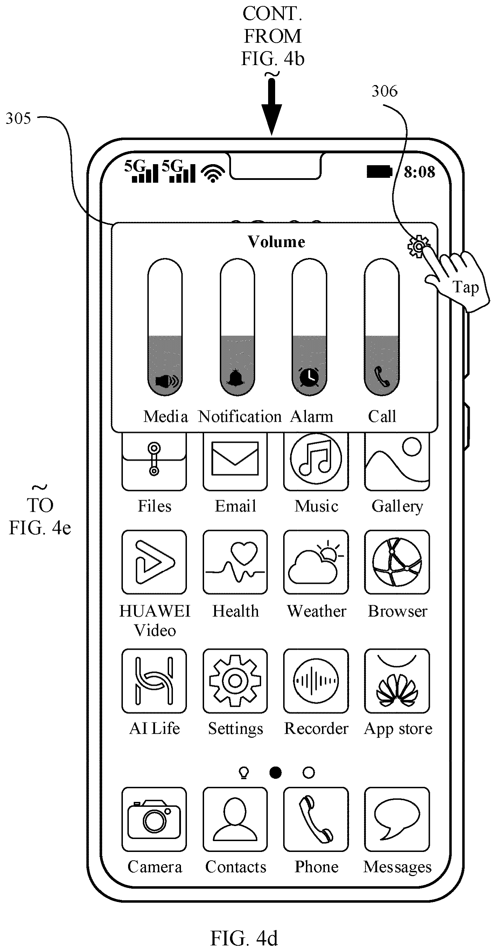

In the display interface shown in FIG. 4b, after the finger of the user slides left on the volume adjustment control 302, the display interface shown in FIG. 4b transitions to a display interface shown in FIG. 4d. The display interface shown in FIG. 4d is basically the same as the display interface shown in FIG. 3c. Therefore, the display interface shown in FIG. 4d is not described in detail herein again. For details, refer to the foregoing descriptions of the display interface shown in FIG. 3c.

The volume adjustment window 305 and the setting icon control 306 are displayed in the display interface shown in FIG. 4d. For example, the setting icon control 306 may be displayed in the volume adjustment window 305. Certainly, the setting icon control 306 may also be displayed at another location. This is not limited in this application.

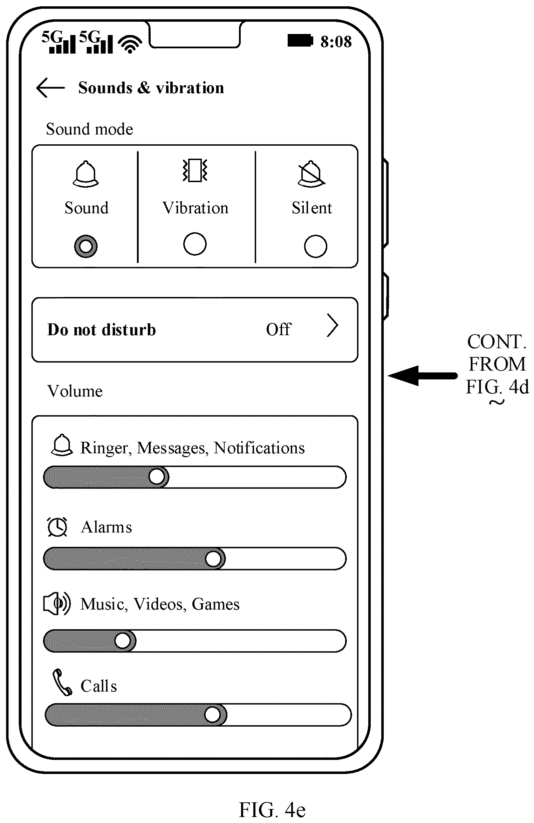

In the display interface shown in FIG. 4d, after the user taps the setting icon control 306, the display interface shown in FIG. 4d transitions to a display interface shown in FIG. 4e. The display interface shown in FIG. 4e is the same as the display interface shown in FIG. 1d. Therefore, for content of FIG. 4e, refer to the descriptions of FIG. 1d. Details are not described herein again.

It may be understood that, in the implementation shown in FIG. 3a to FIG. 3f, when the mobile phone displays the display interface shown in FIG. 3a, the user presses the volume button 301 or slides left on the right edge of the display of the mobile phone, to invoke the same display interface. However, in the implementation shown in FIG. 4a to FIG. 4f, when the mobile phone displays the display interface shown in FIG. 4a, the user "presses the volume button 301" and "slides left on the right edge of the mobile phone display", to invoke different display interfaces. In other words, a difference between the implementation shown in FIG. 4a to FIG. 4f and the implementation shown in FIG. 3a to FIG. 3f lies in that an initial volume adjustment interface invoked in FIG. 4a to FIG. 4f is related to an operation manner of the user, but an initial volume adjustment interface invoked in FIG. 3a to FIG. 3f is irrelevant to the operation manner of the user. Therefore, compared with the implementation shown in FIG. 3a to FIG. 3f, the implementation shown in FIG. 4a to FIG. 4f has more diversified invocation forms of the initial volume adjustment interface. This enhances interaction with the user.

It may be understood that for the display interfaces that are shown in FIG. 4a to FIG. 4f and that are the same as the display interfaces shown in FIG. 3a to FIG. 3f, refer to the foregoing specific descriptions of the process of switching the display interfaces shown in FIG. 3a to FIG. 3f. Details are not described in this application.

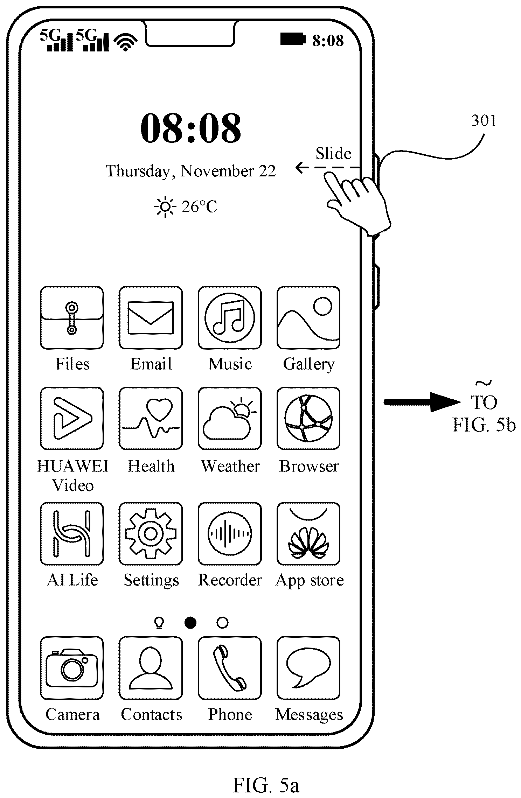

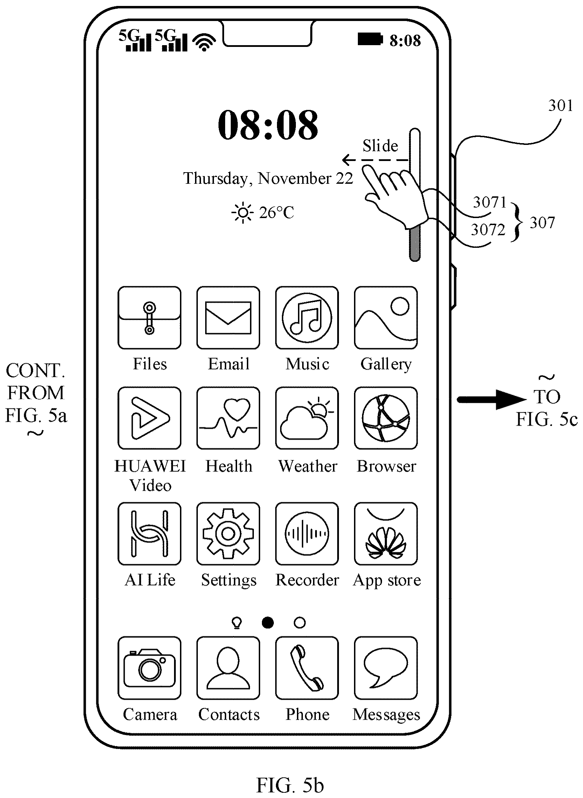

FIG. 5a to FIG. 5f are another example of a diagram of display interfaces in a process of adjusting volume on a mobile phone according to an embodiment of this application. As shown in FIG. 5a, a user slides left on a right edge of a display of the mobile phone by using a finger. After sliding, a display interface shown in FIG. 5a transitions to a display interface shown in FIG. 5b. In addition, when the mobile phone displays the display interface shown in FIG. 5a, after the user presses the volume button 301 by using the finger, the display interface shown in FIG. 5a transitions to the display interface shown in FIG. 5b. The display interface shown in FIG. 5b is the same as the display interface shown in FIG. 3d. Therefore, the display interface shown in FIG. 5b is not described in detail herein again. For details, refer to the foregoing descriptions of the display interface shown in FIG. 3d.

When the mobile phone displays the display interface shown in FIG. 5b, when the user presses the volume button 301 by using the finger to adjust current volume of the mobile phone, the display interface basically remains as shown in FIG. 5b. The volume display control 307 in the display interface shown in FIG. 5b changes with volume adjustment. Specific changes are as follows: When the user presses the volume button 301 to increase the current volume, the area of the shaded part 3072 of the volume display control 307 increases, and the area of the unshaded part 3071 decreases; or when the user presses the volume button 301 to decrease the current volume, the area of the shaded part 3072 of the volume display control 307 decreases, and the area of the unshaded part 3071 increases.

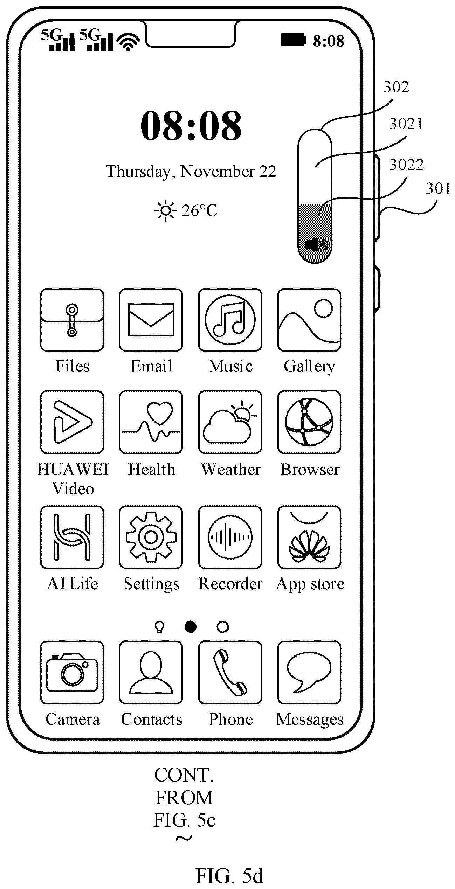

Optionally, in some possible implementations, when the mobile phone displays the display interface shown in FIG. 5b, when the finger of the user slides up or down on the volume display control 307, the display interface shown in FIG. 5b transitions to a display interface shown in FIG. 5d. The display interface shown in FIG. 5d is basically the same as the display interface shown in FIG. 3e. For specific descriptions of the display interface shown in FIG. 5d, refer to the foregoing descriptions of the display interface shown in FIG. 3e. Details are not described herein again. The volume adjustment control 302 in the display interface shown in FIG. 5d changes with sliding of the finger of the user. Specific changes are as follows: When the finger of the user slides up, the area of the shaded part 3022 of the volume adjustment control 302 increases, the area of the unshaded part 3021 decreases, and the current volume of the mobile phone increases; or when the finger of the user slides down, the area of the shaded part 3022 of the volume adjustment control 302 decreases, the area of the unshaded part 3021 increases, and the current volume of the mobile phone decreases.

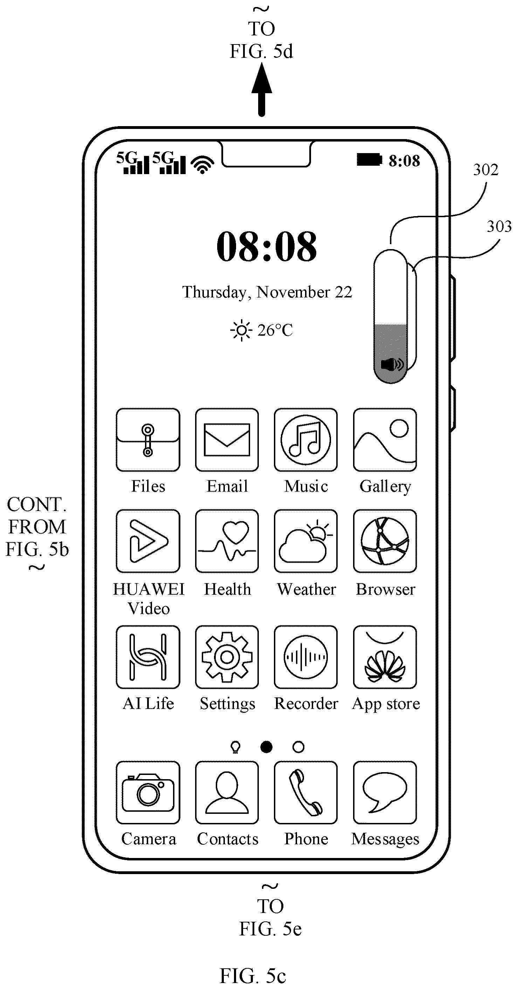

When the mobile phone displays the display interface shown in FIG. 5b, after the finger of the user slides left on the volume display control 307, the display interface shown in FIG. 5b transitions to a display interface shown in FIG. 5c. The display interface shown in FIG. 5c is basically the same as the display interface shown in FIG. 3b. Therefore, for specific descriptions of the display interface shown in FIG. 5c, refer to the foregoing descriptions of the display interface shown in FIG. 3b. Details are not described herein again.

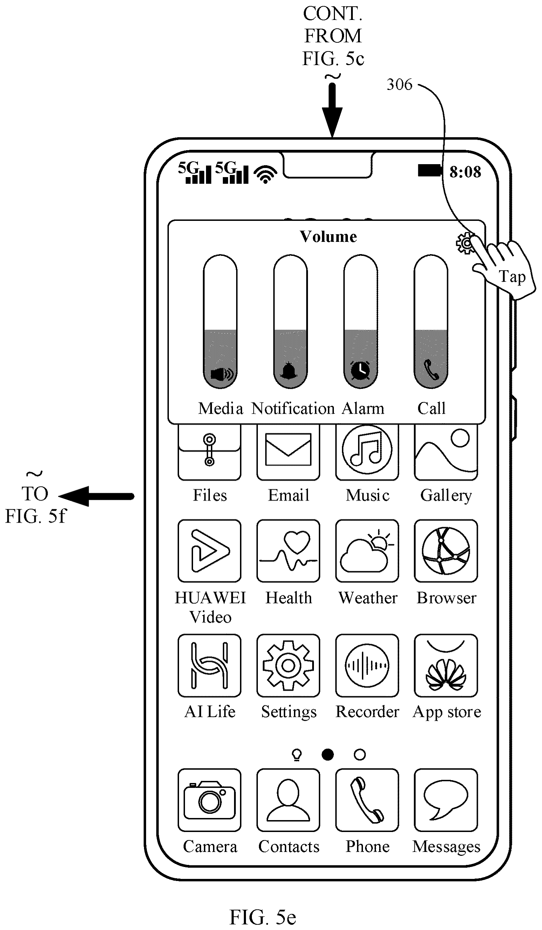

When the mobile phone displays the display interface shown in FIG. 5c, after the finger of the user slides left on the volume adjustment control 302, the display interface shown in FIG. 5c transitions to a display interface shown in FIG. 5e. The display interface shown in FIG. 5e is basically the same as the display interface shown in FIG. 3c. Therefore, for specific descriptions of the display interface shown in FIG. 5e, refer to the foregoing descriptions of the display interface shown in FIG. 3c. Details are not described herein again.

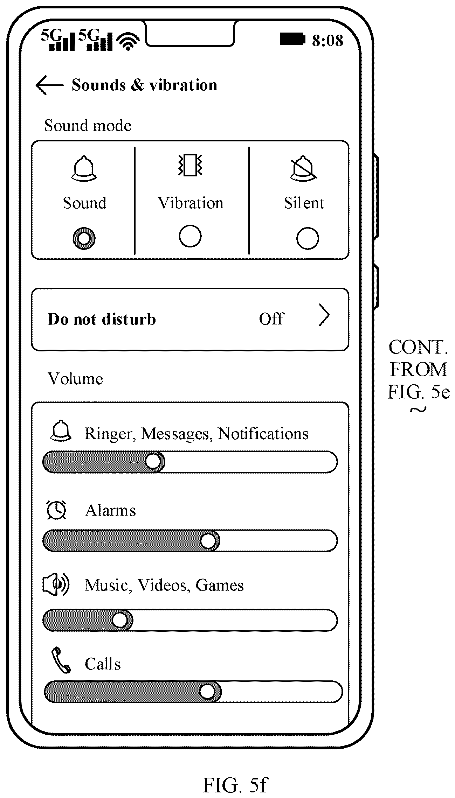

In the display interface shown in FIG. 5e, the setting icon control 306 is displayed. In the display interface shown in FIG. 5e, after the user taps the setting icon control 306, the display interface shown in FIG. 5e transitions to a display interface shown in FIG. 5f. The display interface shown in FIG. 5f is the same as the display interface shown in FIG. 1d. Therefore, for content of FIG. 5f, refer to the descriptions of FIG. 1d. Details are not described herein again.

It may be understood that, in the implementation shown in FIG. 3a to FIG. 3f, the user presses the volume button 301 or slides left on the right edge of the display of the mobile phone, to invoke the same initial volume adjustment interface. In the implementation shown in FIG. 5a to FIG. 5f, the user presses the volume button 301 or slides left on the right edge of the display of the mobile phone, also to invoke the same initial volume adjustment interface. However, the initial volume adjustment interface (namely, the display interface shown in FIG. 5b) invoked in the implementation shown in FIG. 5a to FIG. 5f is different from the initial volume adjustment interface (namely, the display interface shown in FIG. 3b) invoked in the implementation shown in FIG. 3a to FIG. 3f. In the implementation shown in FIG. 5a to FIG. 5f, regardless of which manner is used, the invoked initial volume adjustment interface is the volume display control 307 shown in FIG. 5b. The volume display control 307 occupies a small area of the display. Therefore, when the user needs to adjust only the current volume of the mobile phone, an area of the display covered by the volume display control 307 is small, thereby reducing impact on use of the user and enhancing user experience. In addition, the user may continuously slide to the left side, so that the display interface shown in FIG. 5b may change to the display interface shown in FIG. 5e, to adjust a plurality of types of volume, where an operation is convenient.

It may be understood that for the display interfaces that are shown in FIG. 5a to FIG. 5f and that are the same as the display interfaces shown in FIG. 3a to FIG. 3f, refer to the foregoing specific descriptions of the process of switching the display interfaces shown in FIG. 3a to FIG. 3f. Details are not described in this application.

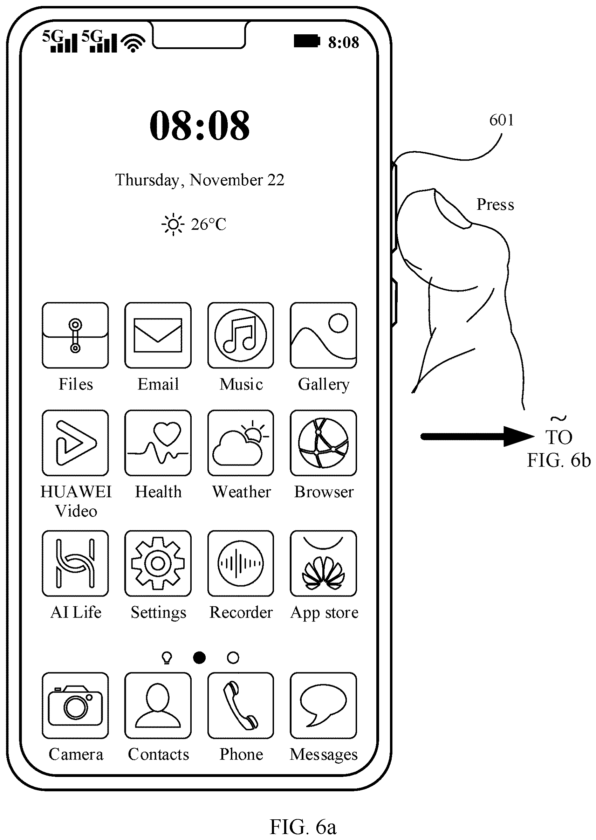

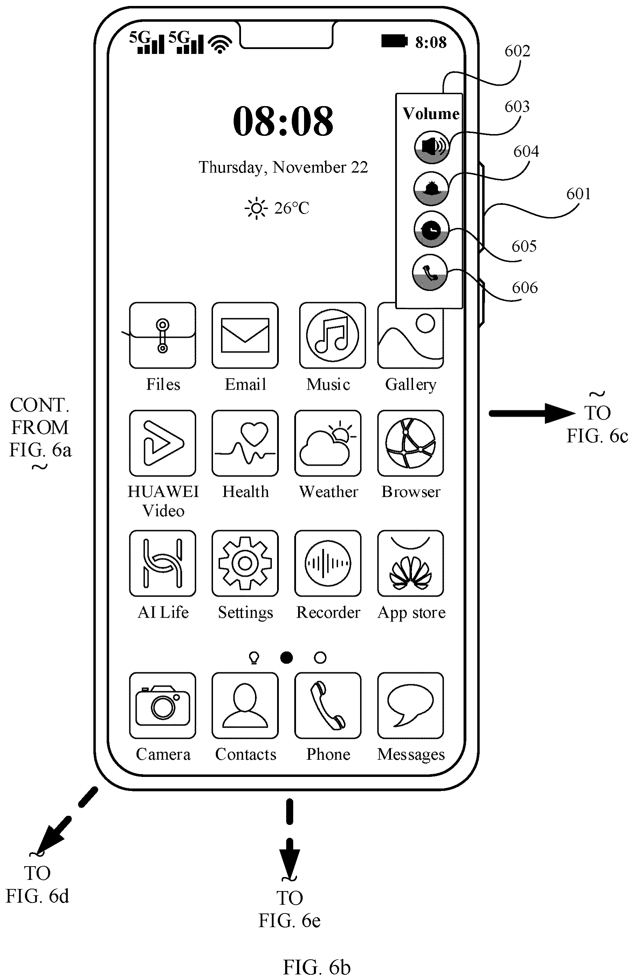

FIG. 6a to FIG. 6f are another example of a diagram of display interfaces in a process of adjusting volume on a mobile phone according to an embodiment of this application. As shown in FIG. 6a, a user may press a volume button 601 of the mobile phone. After pressing, a display interface shown in FIG. 6a transitions to a display interface shown in FIG. 6b. As shown in FIG. 6b, a volume adjustment box 602 is displayed close to a right edge of a display of the mobile phone. The volume adjustment box 602 displays one or more volume icons. Each volume icon corresponds to volume of one application or one type of application. In other words, each volume icon corresponds to one volume adjustment control. For example, the volume adjustment box 602 shown in FIG. 6b is displayed close to the volume button 601. As shown in FIG. 6b, the volume adjustment box 602 displays four volume icons: a volume icon 603, a volume icon 604, a volume icon 605, and a volume icon 606.

For example, a volume indicator may be displayed in each volume icon, to facilitate identification of each volume icon by the user. Optionally, each volume icon may display a shaded part and an unshaded part, and a proportion of the shaded part indicates a volume level corresponding to the volume icon.

In a possible implementation, it is assumed that there are four volume icons in total that need to be displayed, and the volume adjustment box 602 may display only one volume icon at a time. When the user slides up or down the volume icon in the volume adjustment box 602, the volume icon displayed in the volume adjustment box 602 is switched, and each of the four volume icons may be displayed through switching. In this manner, any quantity of volume icons may be displayed. In addition, because a quantity of volume icons displayed at a time in the volume adjustment box 602 is limited, the volume adjustment box 602 may be prevented from occupying an excessively large area and excessively blocking a screen. Certainly, the quantity of volume icons displayed at a time in the volume adjustment box 602 may be set based on a requirement, for example, may be 2 or 3. This is not limited in this application.

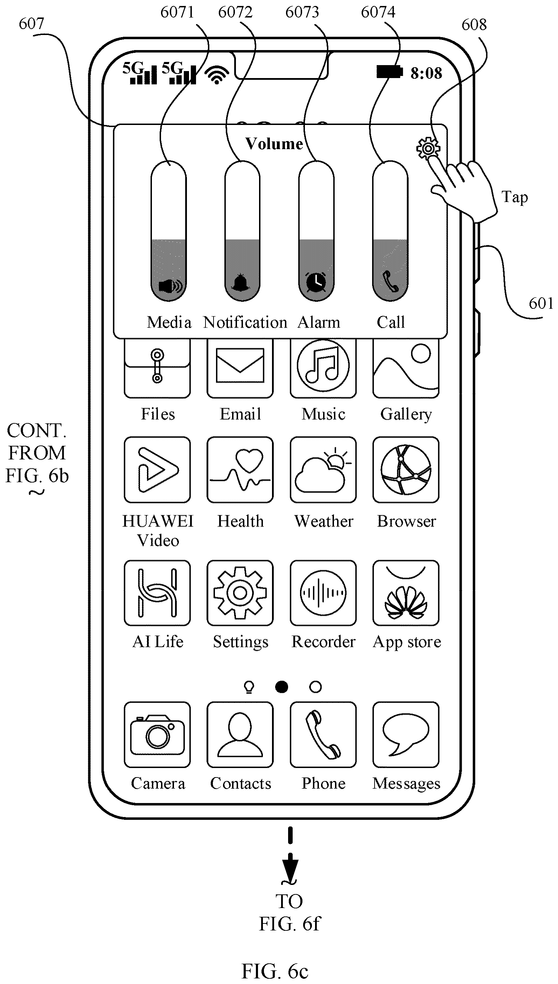

In a possible implementation, in the display interface shown in FIG. 6b, after a finger of the user slides left on the volume adjustment box 602, the display interface shown in FIG. 6b transitions to a display interface shown in FIG. 6c. As shown in FIG. 6c, a volume adjustment window 607 is displayed in the display interface, and the volume adjustment window 607 is displayed at an uppermost layer of the display interface displayed on the display of the mobile phone, and covers a part of the display. Same as the volume adjustment box 602 shown in FIG. 6b, the volume adjustment window 607 is also displayed close to the volume button 601. A difference is that an area occupied by the volume adjustment window 607 is greater than an area occupied by the volume adjustment box 602. Four volume adjustment controls are displayed in the volume adjustment window 607: a first volume adjustment control 6071, a second volume adjustment control 6072, a third volume adjustment control 6073, and a fourth volume adjustment control 6074. A corresponding volume name is further displayed on a lower side of each volume adjustment control. The volume name may be a name of an application or a type of an application corresponding to the volume adjustment control. Each volume adjustment control in FIG. 6c corresponds to one volume icon in FIG. 6b. The display interface shown in FIG. 6c is basically the same as the display interface shown in FIG. 3c. For content of FIG. 6c, refer to the descriptions of FIG. 3c. Details are not described herein again.

Optionally, in a possible implementation, in the display interface shown in FIG. 6c, a setting icon control 608 is further displayed. For example, the setting icon control 608 may be displayed in the volume adjustment window 607. Certainly, the setting icon control 608 may also be displayed at another location. This is not limited in this application.

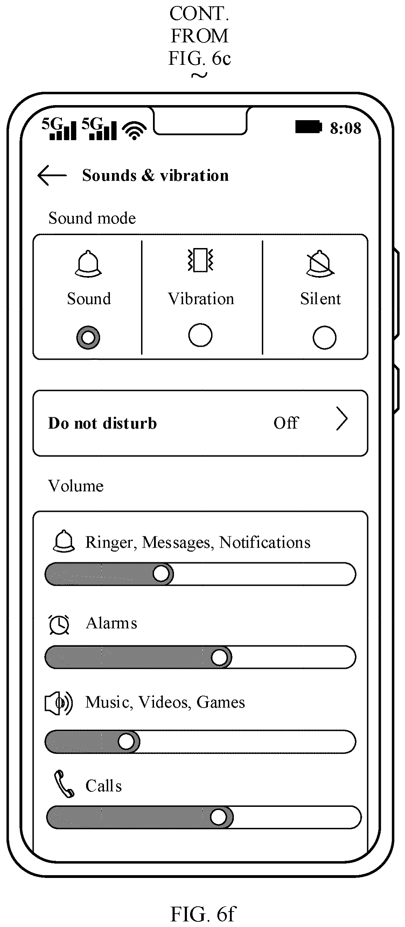

As shown in FIG. 6c, after the user taps the setting icon control 608, the display interface shown in FIG. 6c transitions to a display interface shown in FIG. 6f. The display interface shown in FIG. 6f is the same as the display interface shown in FIG. 1d. Therefore, for content of FIG. 6f, refer to the descriptions of FIG. 1d. Details are not described herein again.

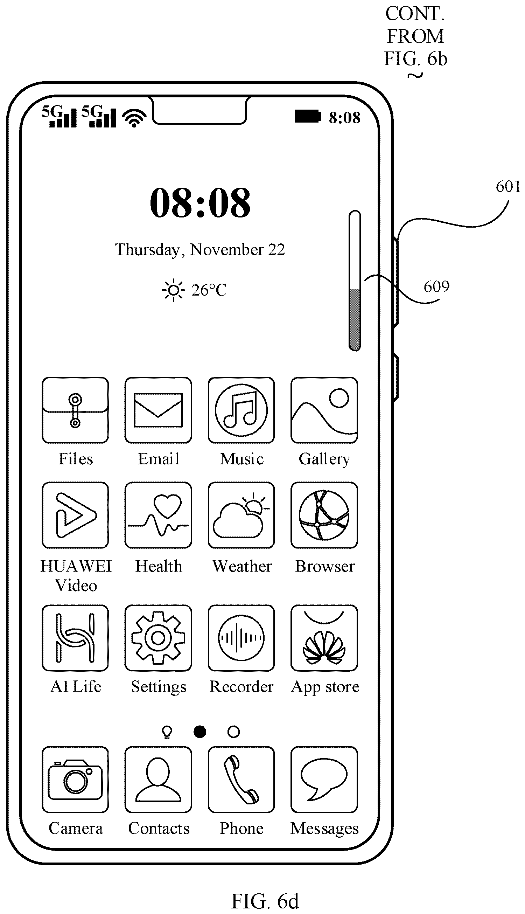

Optionally, in a possible implementation, when the mobile phone displays the display interface shown in FIG. 6b, after the user presses the volume button 601 by using the finger, the display interface shown in FIG. 6b transitions to a display interface shown in FIG. 6d. A volume display control 609 is displayed on the right edge of the display of the mobile phone, and the volume display control 609 displays a level of volume that is currently being adjusted. The display interface shown in FIG. 6d is the same as the display interface shown in FIG. 3d. Therefore, for content of FIG. 6d, refer to the descriptions of FIG. 3d. Details are not described herein again.

In a possible implementation, in the display interface shown in FIG. 6b, when one volume icon is displayed in the volume adjustment box 602, after the user presses the volume button 601 by using the finger, the user determines to adjust volume corresponding to the volume icon displayed in the volume adjustment box 602. In other words, the volume display control 609 shown in FIG. 6d displays the volume of the volume icon displayed in the volume adjustment box 602.

Optionally, in a possible implementation, in the display interface shown in FIG. 6b, when a plurality of volume icons are displayed in the volume adjustment box 602, after the user presses the volume button 601 by using the finger, the user adjusts volume corresponding to one volume icon (the volume icon may be considered as a default volume icon) in the plurality of volume icons. In other words, the volume display control 609 shown in FIG. 6d displays volume corresponding to the default volume icon. For example, the default volume icon may be a volume icon located on an uppermost side or a lowermost side of the volume adjustment box 602. This is not limited in this application. The user may change a location of the volume icon in the volume adjustment box 602 by dragging the volume icon in the volume adjustment box 602, to change the default volume icon.

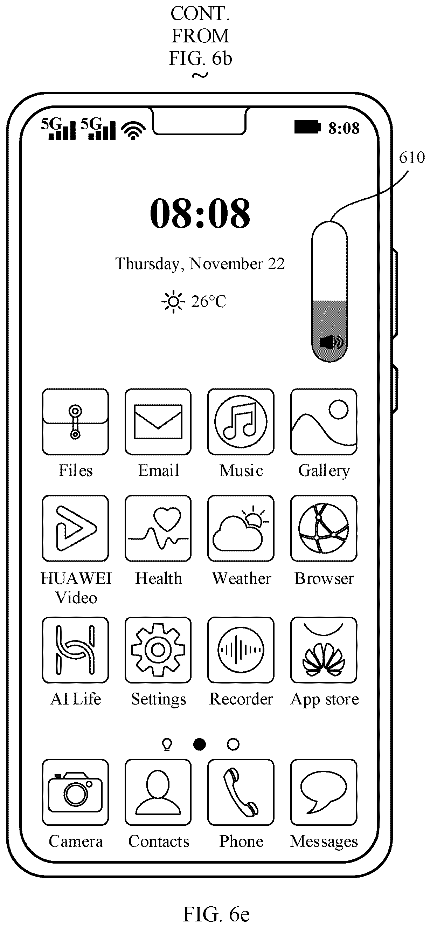

In a possible implementation, when the mobile phone displays the display interface shown in FIG. 6b, after the user taps the volume icon 603, the display interface shown in FIG. 6b transitions to a display interface shown in FIG. 6e. When the user taps the volume icon 603, it indicates that the user wants to adjust volume of one application or one type of application corresponding to the volume icon 603. As shown in FIG. 6e, a volume adjustment control 610 displays a level of volume corresponding to the volume icon 603. The user slides up or down on the volume adjustment control 610 by using the finger, to adjust volume corresponding to the volume adjustment control 610. The display interface shown in FIG. 6e is the same as the display interface shown in FIG. 3e. Therefore, for content of FIG. 6e, refer to the descriptions of FIG. 3e. Details are not described herein again.

It may be understood that for the display interfaces that are shown in FIG. 6a to FIG. 6f and that are the same as the display interfaces shown in FIG. 3a to FIG. 3f refer to the foregoing specific descriptions of the process of switching the display interfaces shown in FIG. 3a to FIG. 3f. Details are not described in this application.

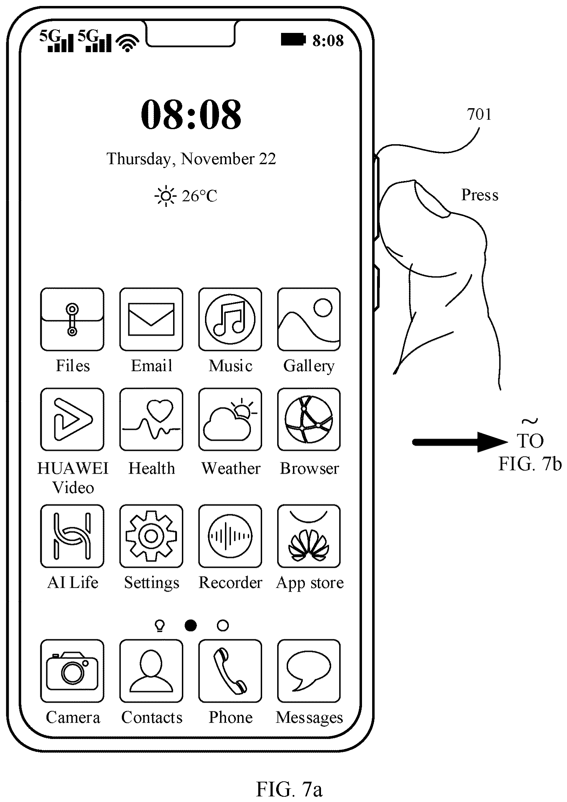

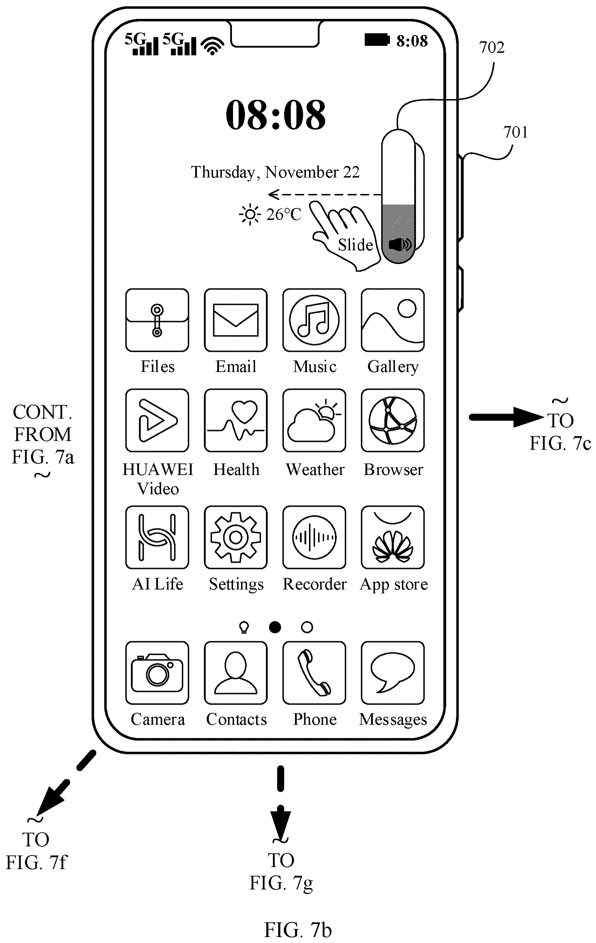

FIG. 7a to FIG. 7g are another example of a diagram of display interfaces in a process of adjusting volume on a mobile phone according to an embodiment of this application. As shown in FIG. 7a, a user may press a volume button 701 of the mobile phone. After pressing, a display interface shown in FIG. 7a transitions to a display interface shown in FIG. 7b. As shown in FIG. 7b, a volume adjustment control 702 is displayed close to a right edge of a display of the mobile phone. The display interface shown in FIG. 7b is the same as the display interface shown in FIG. 3b. Therefore, for content of FIG. 7b, refer to the descriptions of FIG. 3b. Details are not described herein again.

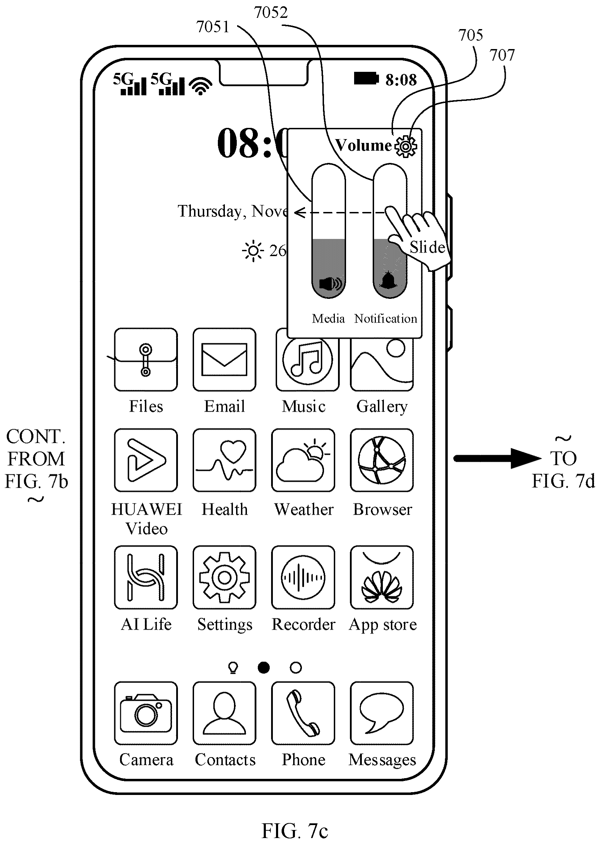

In the display interface shown in FIG. 7b, after a finger of the user slides left on the volume adjustment control 702, the display interface shown in FIG. 7b transitions to a display interface shown in FIG. 7c. As shown in FIG. 7c, a volume adjustment window 705 is displayed in the display interface, and the volume adjustment window 705 is displayed at an uppermost layer of the display interface displayed on the display of the mobile phone, and covers a part of the display. Two volume adjustment controls are displayed in the volume adjustment window 705: a first volume adjustment control 7051 and a second volume adjustment control 7052. A corresponding volume name is further displayed on a lower side of each volume adjustment control. The volume name may be a name of an application or a type of an application corresponding to the volume adjustment control.

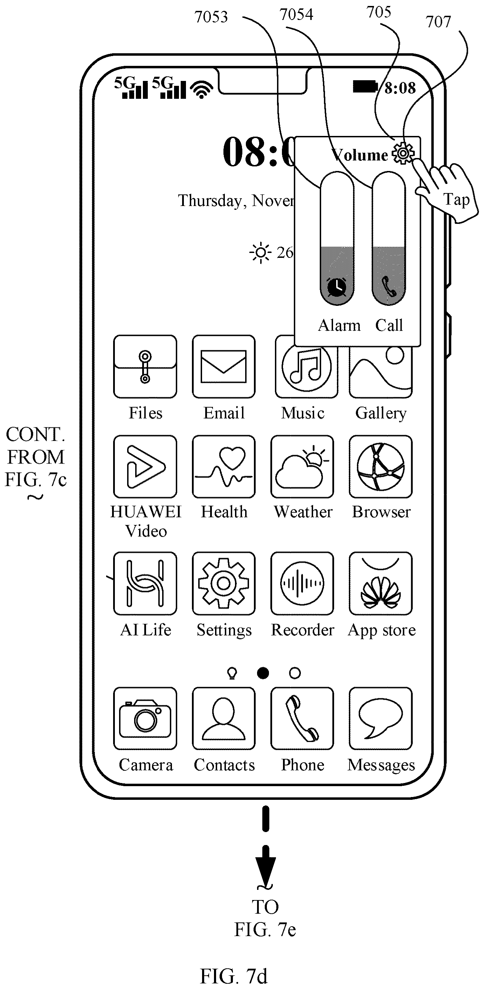

In the display interface shown in FIG. 7c, after the finger of the user slides left on the volume adjustment window 705, the display interface shown in FIG. 7c transitions to a display interface shown in FIG. 7d. Two volume adjustment controls are displayed in the volume adjustment window 705: a third volume adjustment control 7053 and a fourth volume adjustment control 7054. A corresponding volume name is further displayed on a lower side of each volume adjustment control. The volume name may be a name of an application or a type of an application corresponding to the volume adjustment control.

As shown in FIG. 7c, a first control interface is displayed, and the first control interface includes the first volume adjustment control 7051 and the second volume adjustment control 7052. As shown in FIG. 7d, a second control interface is displayed, and the second control interface includes the third volume adjustment control 7053 and the fourth volume adjustment control 7054. In other words, as shown in FIG. 7c and FIG. 7d, two volume adjustment controls are simultaneously displayed in the volume adjustment window 705.

Optionally, in a possible implementation, a setting icon control 707 is separately displayed in the display interface shown in FIG. 7c and the display interface shown in FIG. 7d. For example, the setting icon control 707 may be displayed in the volume adjustment window 705. Certainly, the setting icon control 707 may also be displayed at another location. This is not limited in this application.

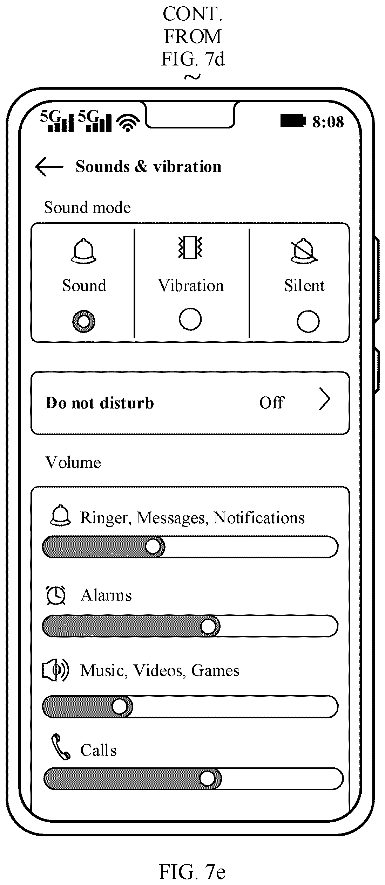

As shown in FIG. 7d, after the user taps the setting icon control 707, the display interface shown in FIG. 7d transitions to a display interface shown in FIG. 7e. The display interface shown in FIG. 7e is the same as the display interface shown in FIG. 1d. Therefore, for content of FIG. 7e, refer to the descriptions of FIG. 1d. Details are not described herein again.

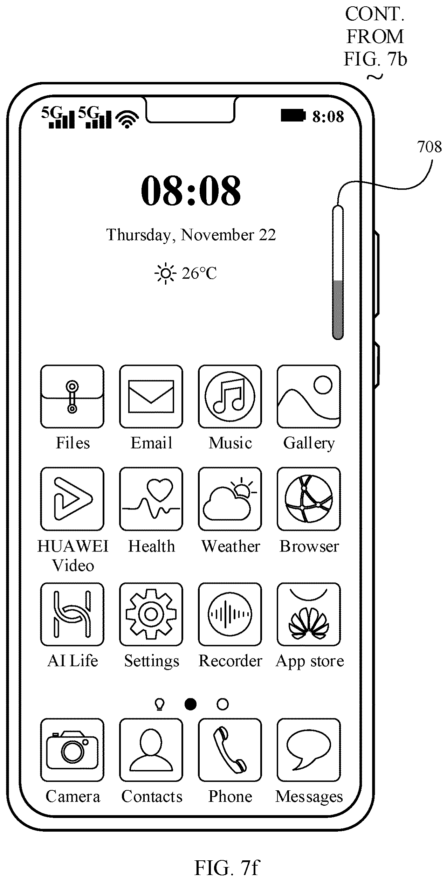

Optionally, in a possible implementation, when the mobile phone displays the display interface shown in FIG. 7b, after the user presses the volume button 701 by using the finger, the display interface shown in FIG. 7b transitions to a display interface shown in FIG. 7f. As shown in FIG. 7f, a volume display control 708 is displayed on the right edge of the display of the mobile phone. The display interface shown in FIG. 7f is the same as the display interface shown in FIG. 3d. Therefore, for content of FIG. 7f, refer to the descriptions of FIG. 3d. Details are not described herein again.

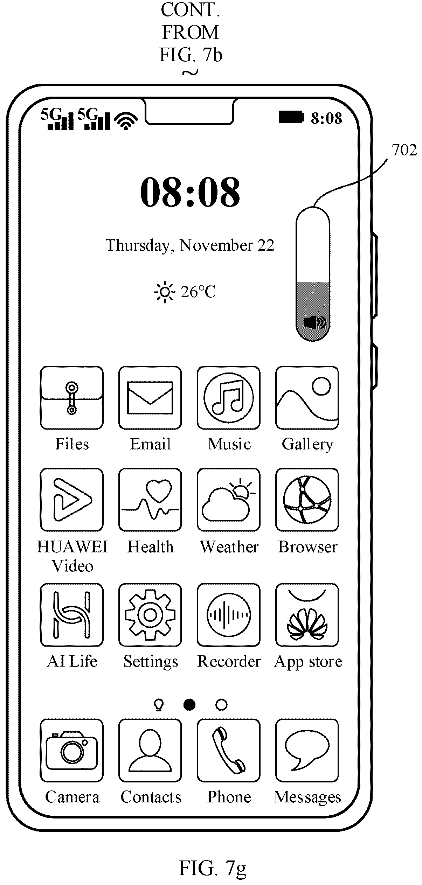

Optionally, in a possible implementation, when the mobile phone displays the display interface shown in FIG. 7b, after the user touches and holds the volume adjustment control 702 or the user slides up or down on the volume adjustment control 702, the display interface shown in FIG. 7b transitions to a display interface shown in FIG. 7g. The display interface shown in FIG. 7g is the same as the display interface shown in FIG. 3e. Therefore, for content of FIG. 7g, refer to the descriptions of FIG. 3e. Details are not described herein again.

It may be understood that for the display interfaces that are shown in FIG. 7a to FIG. 7g and that are the same as the display interfaces shown in FIG. 3a to FIG. 3f, refer to the foregoing specific descriptions of the process of switching the display interfaces shown in FIG. 3a to FIG. 3f. Details are not described in this application.

In the foregoing implementations, in the volume adjustment window 705 shown in FIG. 7c and FIG. 7d, two volume adjustment controls are simultaneously displayed, and the volume adjustment window 705 in different display interfaces displays different volume adjustment controls. In this implementation, a quantity of volume adjustment controls in the volume adjustment window is reduced, so that an area occupied by the volume adjustment window 705 is less than the area occupied by the volume adjustment window 305 in FIG. 3c. This reduces blocking on the display interface by the volume adjustment window 705, and enhances user experience.

It may be understood that a quantity of volume adjustment controls displayed in each control interface can be further reduced, and the fewer volume adjustment controls displayed in each control interface indicate a smaller area of the volume adjustment window 705. The following provides descriptions with reference to the accompanying drawings.

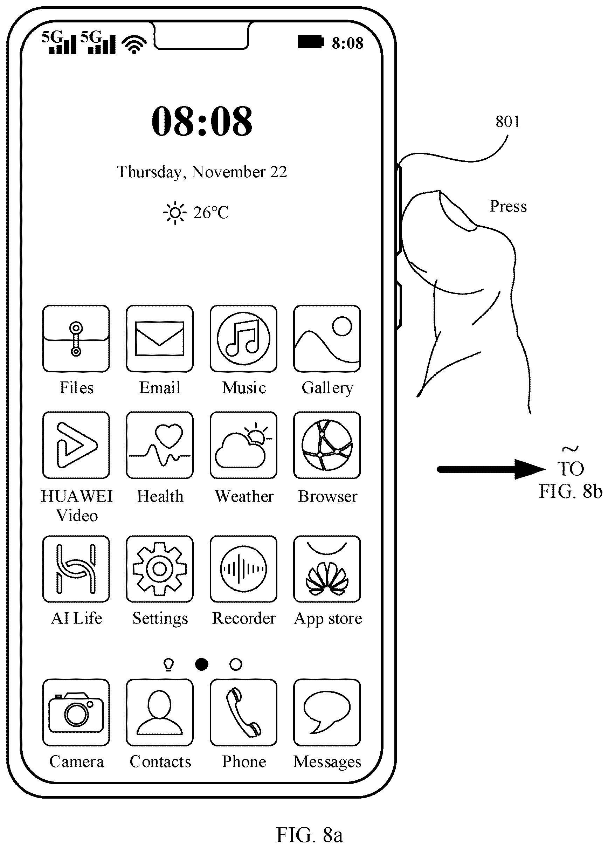

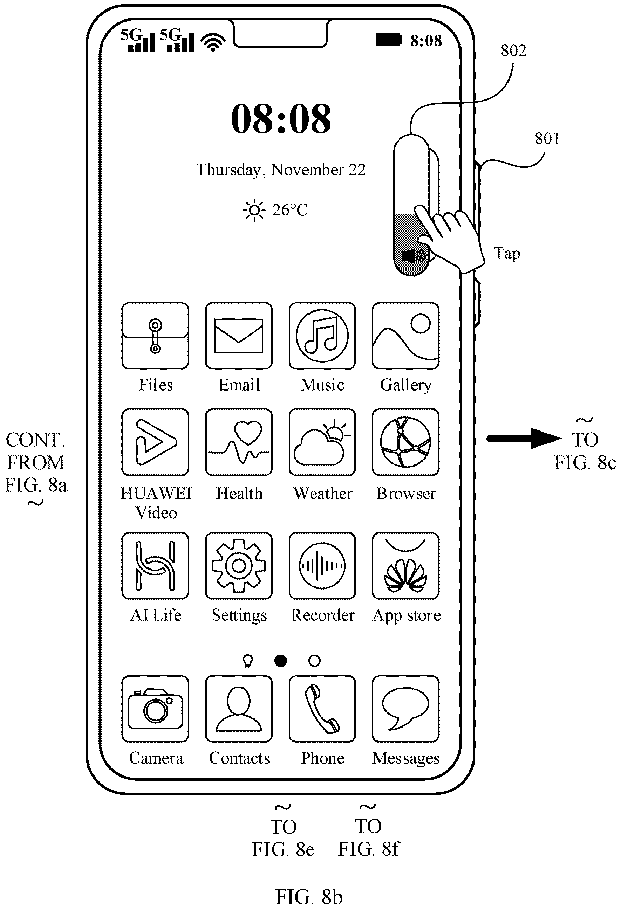

FIG. 8a to FIG. 8f are another example of a diagram of display interfaces in a process of adjusting volume on a mobile phone according to an embodiment of this application. As shown in FIG. 8a, a user may press a volume button 801 of the mobile phone. After pressing, a display interface shown in FIG. 8a transitions to a display interface shown in FIG. 8b. As shown in FIG. 8b, a volume adjustment control 802 is displayed close to a right edge of a display of the mobile phone. The display interface shown in FIG. 8b is the same as the display interface shown in FIG. 3b. Therefore, for content of FIG. 8b, refer to the descriptions of FIG. 3b. Details are not described herein again.

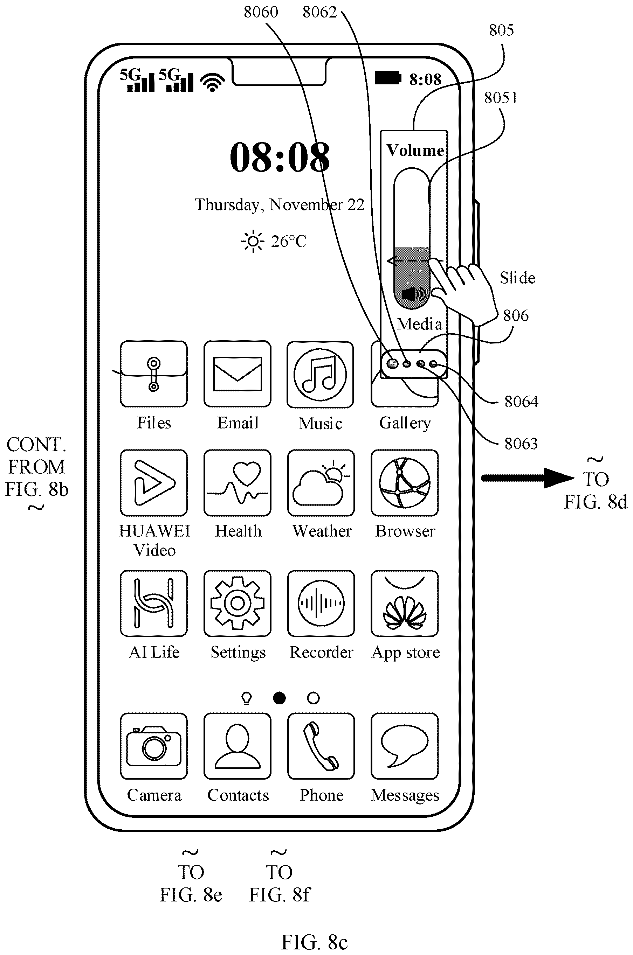

In the display interface shown in FIG. 8b, after a finger of the user taps the volume adjustment control 802, the display interface shown in FIG. 8b transitions to a display interface shown in FIG. 8c. As shown in FIG. 8c, a volume adjustment window 805 is displayed in the display interface, and the volume adjustment window 805 is displayed at an uppermost layer of the display interface displayed on the display of the mobile phone, and covers a part of the display. Same as the volume adjustment control 802 shown in FIG. 8b, the volume adjustment window 805 is also displayed close to the volume button 801. A difference is that an area occupied by the volume adjustment window 805 is slightly greater than an area occupied by the volume adjustment control 802. One volume adjustment control is displayed in the volume adjustment window 805: a first volume adjustment control 8051. A corresponding volume name is further displayed on a lower side of the first volume adjustment control 8051. As shown in FIG. 8c, the volume name of the first volume adjustment control 8051 is "media", and the volume name may be a name of an application or a type of an application corresponding to the volume adjustment control.

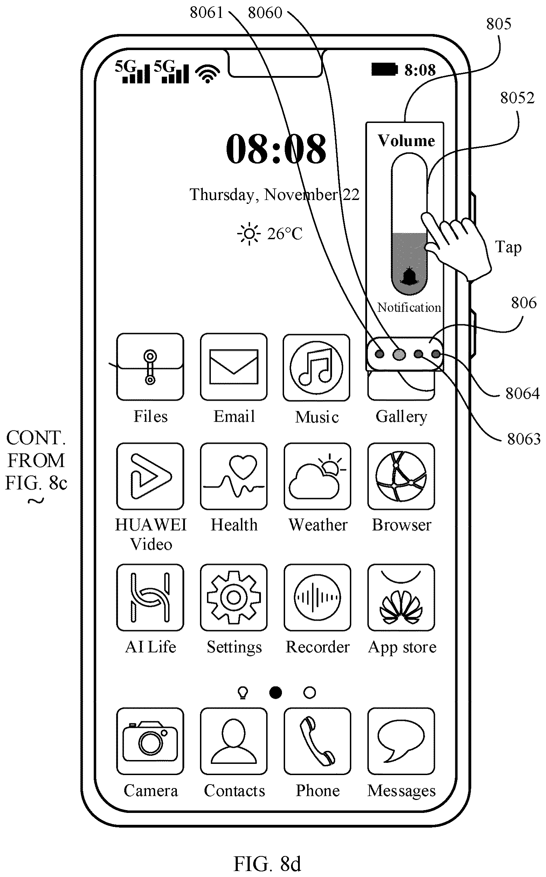

As shown in the display interface shown in FIG. 8c, after the finger of the user slides left on the volume adjustment window 805, the display interface shown in FIG. 8c transitions to a display interface shown in FIG. 8d. One volume adjustment control is displayed in the volume adjustment window 805 in FIG. 8d: a second volume adjustment control 8052. A corresponding volume name is further displayed on a lower side of the second volume adjustment control 8052. As shown in FIG. 8d, the volume name of the second volume adjustment control 8052 is "notification", and the volume name may be a name of an application or a type of an application corresponding to the volume adjustment control.

As shown in FIG. 8c and FIG. 8d, a control 806 is further displayed in the volume adjustment window 805, a plurality of indicators are displayed in the control 806, each indicator corresponds to one control interface, and one control interface includes a volume adjustment control displayed in the volume adjustment window 805. For example, in FIG. 8c, a first control interface is currently displayed, and the first control interface includes the first volume adjustment control 8051; and in FIG. 8d, a second control interface is currently displayed, and the second control interface includes the second volume adjustment control 8052. In other words, as shown in FIG. 8c and FIG. 8d, one volume adjustment control is simultaneously displayed in the volume adjustment window 805, and the one volume adjustment control corresponds to one indicator in the control 806.

As shown in FIG. 8c, a control 8060 may exist on an indicator 8061 of the currently displayed first control interface (namely, the first volume adjustment control 8051 visible to the user). Because the control 8060 is superimposed on (or covers) the indicator 8061 for display, the indicator 8061 is invisible to the user. As shown in FIG. 8d, a control 8060 may exist on an indicator 8062 of the currently displayed second control interface (namely, the second volume adjustment control 8052 visible to the user). Because the control 8060 is superimposed on (or covers) the indicator 8062 for display, the indicator 8062 is invisible to the user.

For example, the control 8060 may be a long bar, a sliding block, or the like. Certainly, in another embodiment of this application, the indicator 8061, the indicator 8062, an indicator 8063, and/or an indicator 8064 may alternatively be in another form or shape, and two indicators may be the same or different. As long as the control 8060 has a different display effect from the indicator 8061, the indicator 8062, the indicator 8063, and the indicator 8064 (for example, the different display effect may be a different shape, or different brightness or color in a same shape), the user may distinguish a location of the control 8060 in the control 806 based on the different display effect of the control 8060 from the indicator 8061, the indicator 8062, the indicator 8063, and the indicator 8064. In addition, an indicator on a location of (or covered by) the control 8060 is an indicator of a currently displayed control interface (namely, a volume adjustment control). Optionally, the control 8060 may slide left or right in the control 806, to change a location of the control 8060 in the control 806, so that the currently displayed control interface can be switched to another control interface (the currently displayed volume adjustment control is switched to another volume adjustment control). Alternatively, a location of the control 8060 in the control 806 may be changed by tapping the indicator 8061, the indicator 8062, the indicator 8063, or the indicator 8064. The control 8060 covers the tapped indicator, and a control interface (namely, a volume adjustment control) corresponding to the indicator is displayed in the volume adjustment window 805.

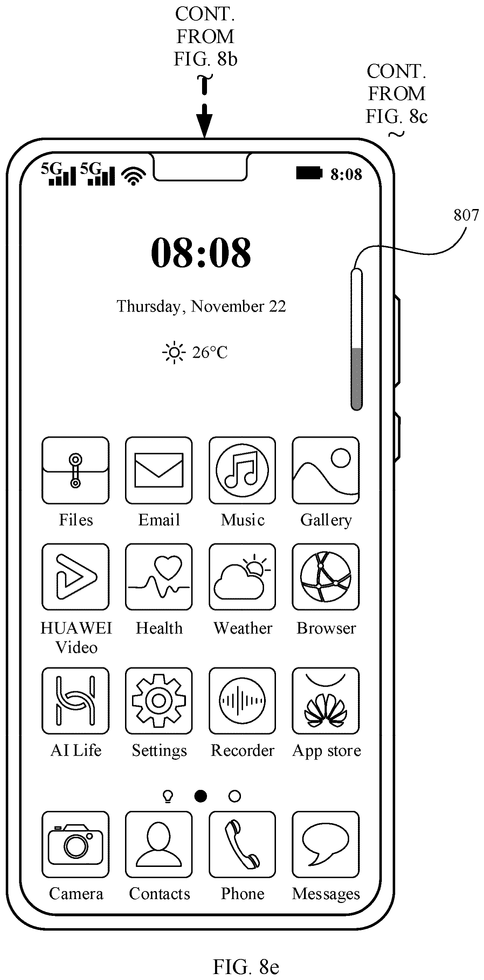

Optionally, in a possible implementation, when the mobile phone displays the display interface shown in FIG. 8b, after the user presses the volume button 801 by using the finger, the display interface shown in FIG. 8b transitions to a display interface shown in FIG. 8e. As shown in FIG. 8e, a volume display control 807 is displayed on the right edge of the display of the mobile phone. The display interface shown in FIG. 8e is the same as the display interface shown in FIG. 3d. Therefore, for content of FIG. 8e, refer to the descriptions of FIG. 3d. Details are not described herein again.

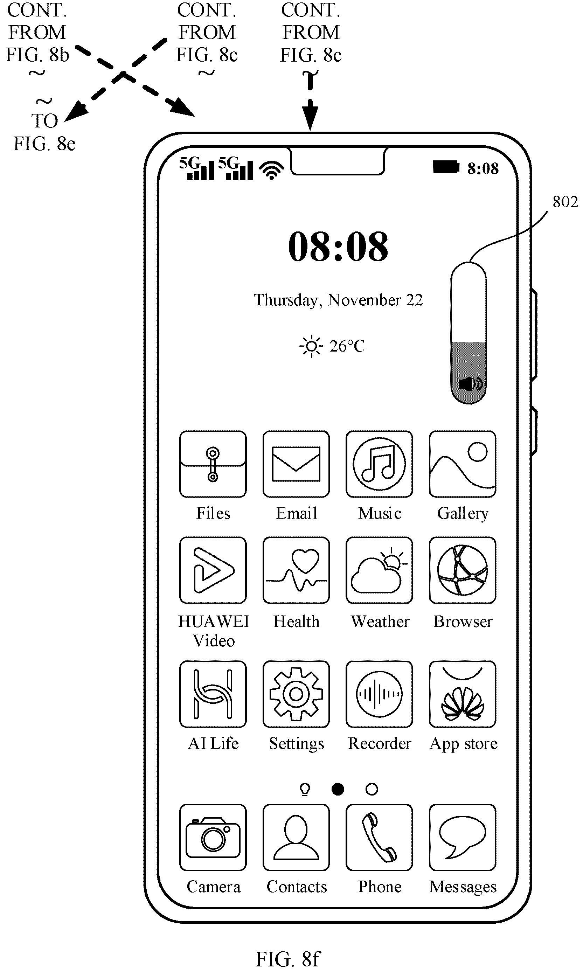

Optionally, in a possible implementation, when the mobile phone displays the display interface shown in FIG. 8b, after the user touches and holds the volume adjustment control 802 or the user slides down or up on the volume adjustment control 802, the display interface shown in FIG. 8b transitions to a display interface shown in FIG. 8f. The display interface shown in FIG. 8f is the same as the display interface shown in FIG. 3e. Therefore, for content of FIG. 8f, refer to the descriptions of FIG. 3e. Details are not described herein again.

Optionally, in a possible implementation, when the mobile phone displays the display interface shown in FIG. 8c, after the user touches and holds the volume button 801, the display interface shown in FIG. 8c transitions to the display interface shown in FIG. 8e. The display interface shown in FIG. 8e is the same as the display interface shown in FIG. 3d. Therefore, for content of FIG. 8e, refer to the descriptions of FIG. 3d. Details are not described herein again.

Optionally, in a possible implementation, when the mobile phone displays the display interface shown in FIG. 8c, after the user touches and holds the first volume adjustment control 8051, or the finger of the user slides down or up on the first volume adjustment control 8051, the display interface shown in FIG. 8c transitions to the display interface shown in FIG. 8f. The display interface shown in FIG. 8f is the same as the display interface shown in FIG. 3e. Therefore, for content of FIG. 8f, refer to the descriptions of FIG. 3e. Details are not described herein again.

Optionally, in a possible implementation, a setting icon control may be further displayed in the display interface shown in FIG. 8c and/or the display interface shown in FIG. 8d. After the user taps the setting icon control, the display interface shown in FIG. 8c or FIG. 8d transitions to a sound setting interface (as shown in FIG. 1d).

It may be understood that for the display interfaces that are shown in FIG. 8a to FIG. 8f and that are the same as the display interfaces shown in FIG. 3a to FIG. 3f, refer to the foregoing specific descriptions of the process of switching the display interfaces shown in FIG. 3a to FIG. 3f. Details are not described in this application.

In the foregoing implementation, one volume adjustment control is displayed in the volume adjustment window 805, so that an area occupied by the volume adjustment window 805 may be reduced to be close to an area occupied by 802. Therefore, when the user adjusts a plurality of types of volume in the implementation, blocking on a screen of the mobile phone by the volume adjustment window 805 is reduced as much as possible, to improve user experience.

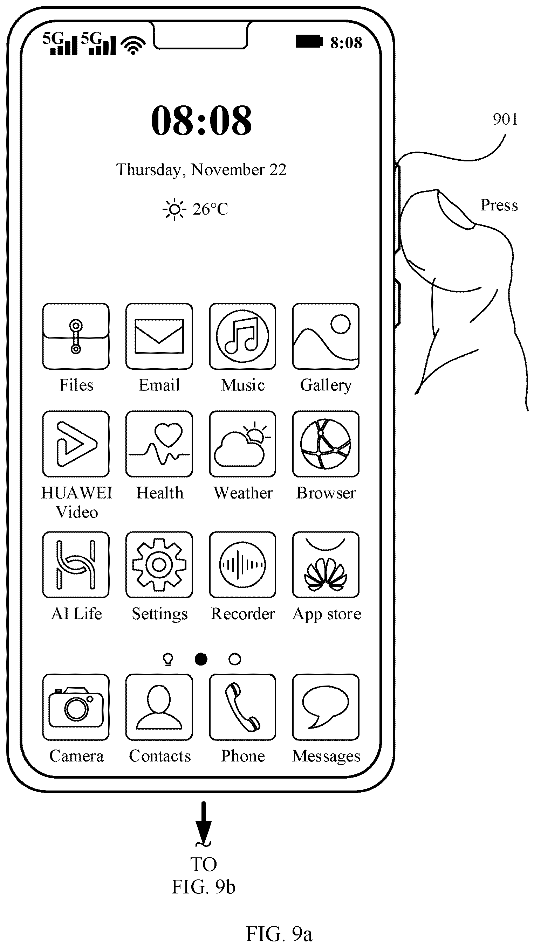

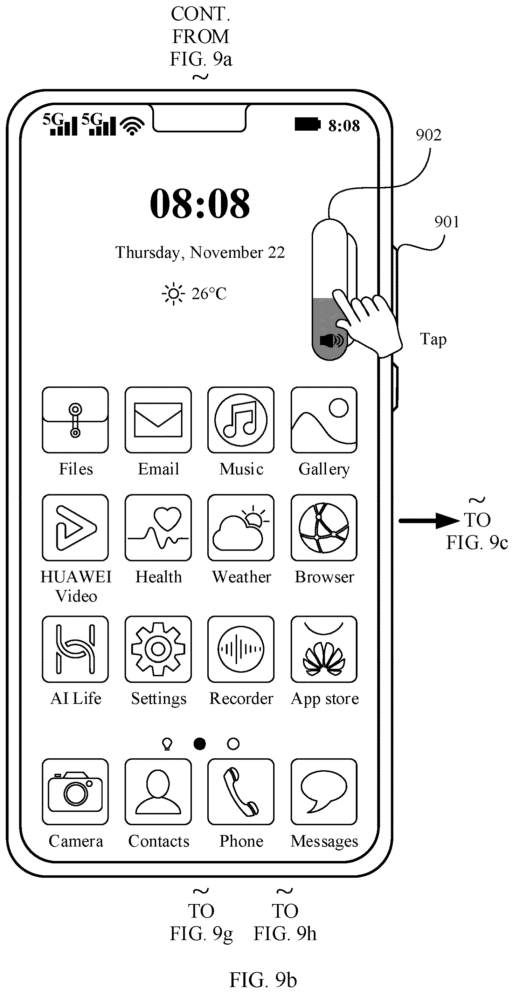

FIG. 9a to FIG. 9h are an example of a diagram of display interfaces in a process of adjusting volume on a mobile phone according to an embodiment of this application. As shown in FIG. 9a, a user presses a volume button 901 of the mobile phone. After pressing, a display interface shown in FIG. 9a transitions to a display interface shown in FIG. 9b. As shown in FIG. 9b, a volume adjustment control 902 is displayed close to a right edge of a display of the mobile phone. The display interface shown in FIG. 9b is the same as the display interface shown in FIG. 3b. Therefore, for content of FIG. 9b, refer to the descriptions of FIG. 3b. Details are not described herein again.

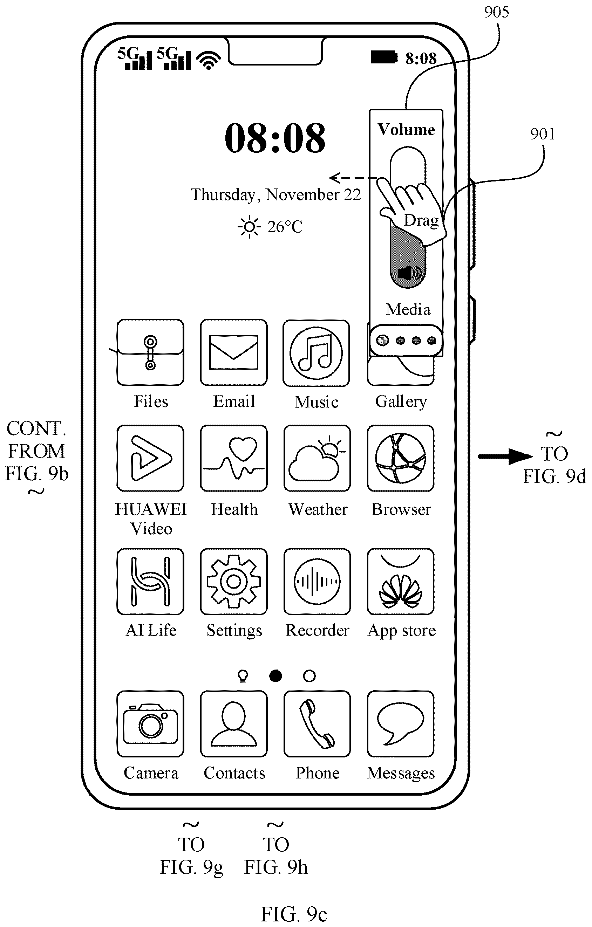

In the display interface shown in FIG. 9b, after a finger of the user taps the volume adjustment control 902, the display interface shown in FIG. 9b transitions to a display interface shown in FIG. 9c. As shown in FIG. 9c, a volume adjustment window 905 is displayed in the display interface, and the volume adjustment window 905 is displayed at an uppermost layer of the display interface displayed on the display of the mobile phone, and covers a part of the display. Same as the volume adjustment control 902 shown in FIG. 9b, the volume adjustment window 905 is also displayed close to the volume button 901. A difference is that an area occupied by the volume adjustment window 905 is slightly greater than an area occupied by the volume adjustment control 902. The display interface shown in FIG. 9c is the same as the display interface shown in FIG. 8c. Therefore, for content of FIG. 9c, refer to the descriptions of FIG. 8c. Details are not described herein again.

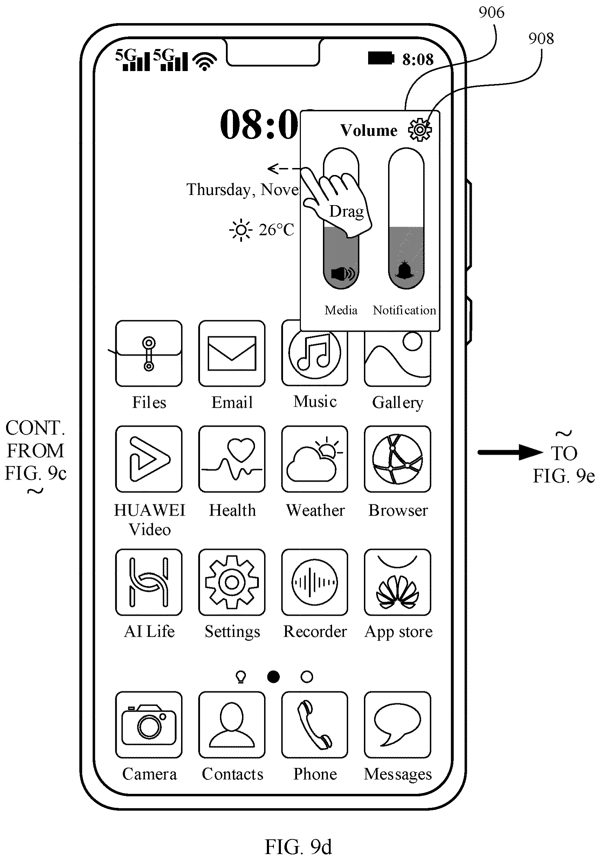

As shown in the display interface shown in FIG. 9c, when the finger of the user drags a left edge of the volume adjustment window 905 left, the display interface shown in FIG. 9c transitions to a display interface shown in FIG. 9d. As shown in FIG. 9d, a volume adjustment window 906 is displayed in the display interface, and two volume adjustment controls are displayed in the volume adjustment window 906. A corresponding volume name is further displayed on a lower side of each volume adjustment control. The volume name may be a name of an application or a type of an application corresponding to the volume adjustment control. The display interface shown in FIG. 9d is the same as the display interface shown in FIG. 7c. Therefore, for content of FIG. 9d, refer to the descriptions of FIG. 7c. Details are not described herein again.

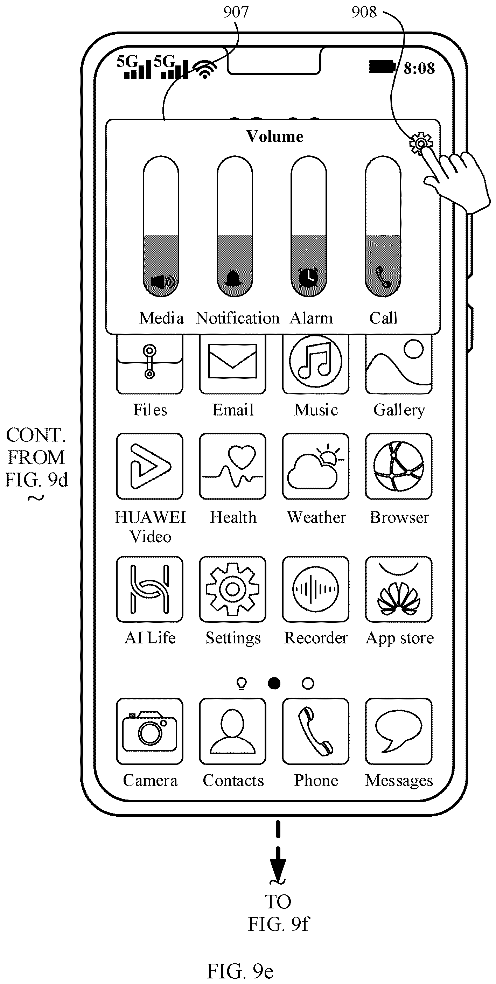

As shown in the display interface shown in FIG. 9d, when the finger of the user drags a left edge of the volume adjustment window 906 left, the display interface shown in FIG. 9d transitions to a display interface shown in FIG. 9e. As shown in FIG. 9e, a volume adjustment window 907 is displayed in the display interface. The display interface shown in FIG. 9e is the same as the display interface shown in FIG. 3c. Therefore, for content of FIG. 9e, refer to the descriptions of FIG. 3c. Details are not described herein again.

Optionally, in a possible implementation, a setting icon control 908 is separately displayed in the display interface shown in FIG. 9d and the display interface shown in FIG. 9e. For example, the setting icon control 908 may be displayed in the volume adjustment window 906 or the volume adjustment window 907. Certainly, the setting icon control 908 may also be displayed at another location. This is not limited in this application.

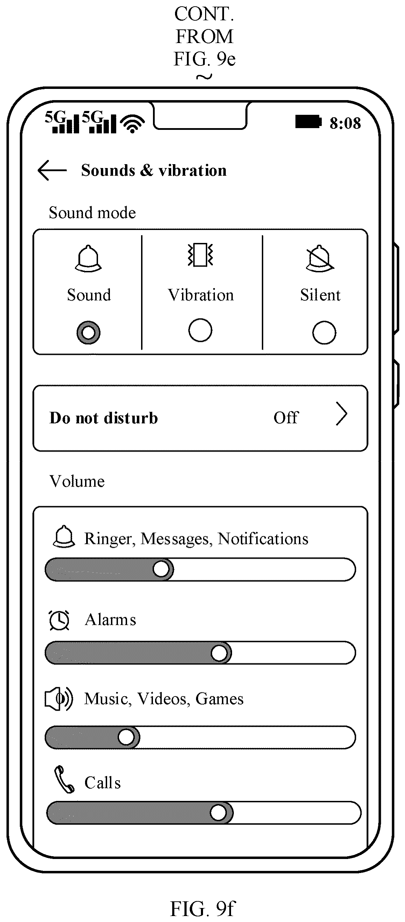

As shown in FIG. 9e, after the user taps the setting icon control 908, the display interface shown in FIG. 9e transitions to a display interface shown in FIG. 9f. The display interface shown in FIG. 9f is the same as the display interface shown in FIG. 1d. Therefore, for content of FIG. 9f, refer to the descriptions of FIG. 1d. Details are not described herein again.

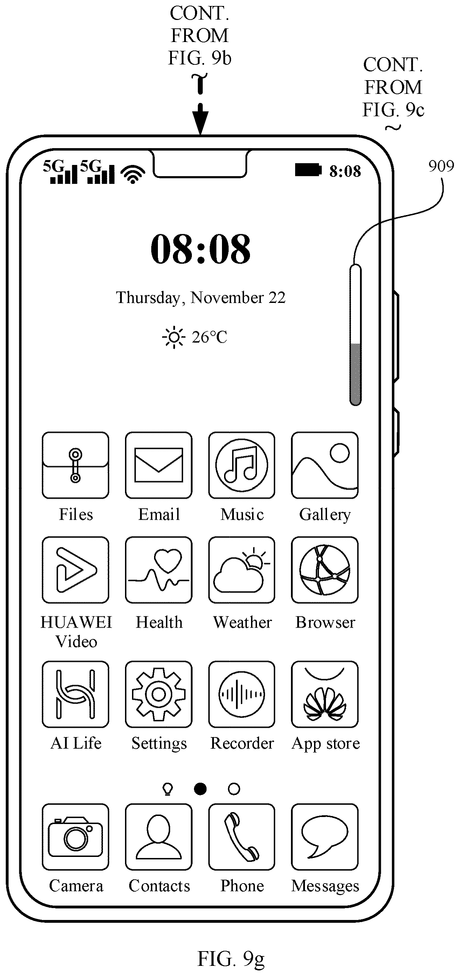

Optionally, in a possible implementation, when the mobile phone displays the display interface shown in FIG. 9b, after the user presses the volume button 901 by using the finger, the display interface shown in FIG. 9b transitions to a display interface shown in FIG. 9g. As shown in FIG. 9g, a volume display control 909 is displayed on the right edge of the display of the mobile phone. The display interface shown in FIG. 9g is the same as the display interface shown in FIG. 3d. Therefore, for content of FIG. 9g, refer to the descriptions of FIG. 3d. Details are not described herein again.

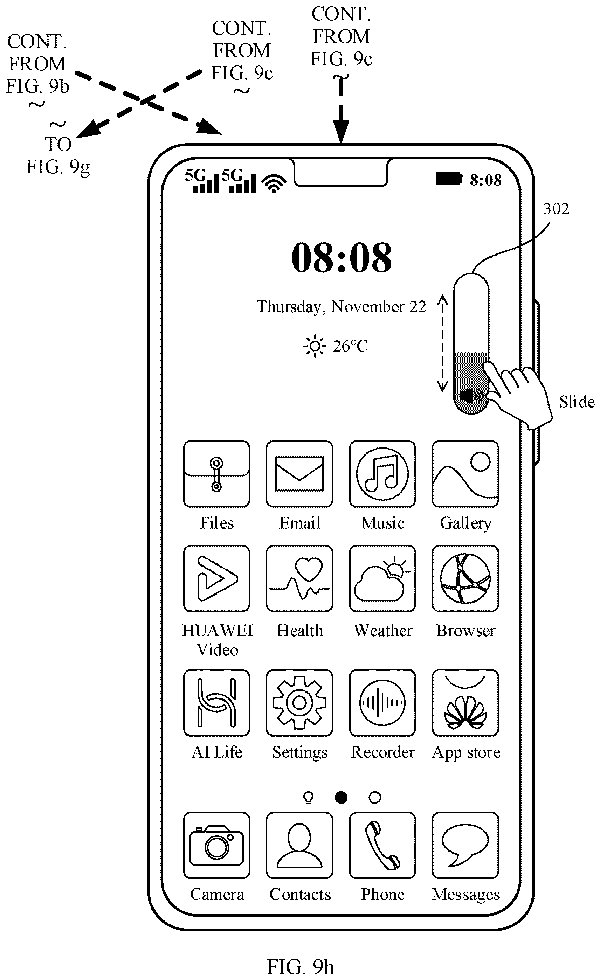

Optionally, in a possible implementation, when the mobile phone displays the display interface shown in FIG. 9b, after the user touches and holds the volume adjustment control 902 or the user slides up or down on the volume adjustment control 902, the display interface shown in FIG. 9b transitions to a display interface shown in FIG. 9h. The display interface shown in FIG. 9h is the same as the display interface shown in FIG. 3e. Therefore, for content of FIG. 9h, refer to the descriptions of FIG. 3e. Details are not described herein again.

Optionally, in a possible implementation, when the mobile phone displays the display interface shown in FIG. 9c, after the user presses the volume button 901 by using the finger, the display interface shown in FIG. 9c transitions to the display interface shown in FIG. 9g. As shown in FIG. 9g, a volume display control 909 is displayed on the right edge of the display of the mobile phone. The display interface shown in FIG. 9g is the same as the display interface shown in FIG. 3d. Therefore, for content of FIG. 9g, refer to the descriptions of FIG. 3d. Details are not described herein again.

Optionally, in a possible implementation, when the mobile phone displays the display interface shown in FIG. 9c, after the user touches and holds the volume adjustment control in the volume adjustment window 905 or the finger of the user slides up or down on the volume adjustment control in the volume adjustment window 905, the display interface shown in FIG. 9c transitions to the display interface shown in FIG. 9h. The display interface shown in FIG. 9h is the same as the display interface shown in FIG. 3e. Therefore, for content of FIG. 9h, refer to the descriptions of FIG. 3e. Details are not described herein again.

It may be understood that for the display interfaces that are shown in FIG. 9a to FIG. 9h and that are the same as the display interfaces shown in FIG. 3a to FIG. 3f, refer to the foregoing specific descriptions of the process of switching the display interfaces shown in FIG. 3a to FIG. 3f. Details are not described in this application.

It should be understood that, in embodiments of this application, the interfaces displayed by the mobile phone, the operations of the user, and the like in the foregoing examples are merely examples, and do not constitute a specific limitation on embodiments of this application. For example, in some other embodiments of this application, the icons in the interfaces displayed by the mobile phone may include more or fewer icons than those displayed in the interfaces shown in any figure, or combine some icons, or split some icons, or have different icons. This is not limited in embodiments of this application.

Based on the foregoing application scenarios and the foregoing examples, the following describes a volume adjustment method provided in this application.

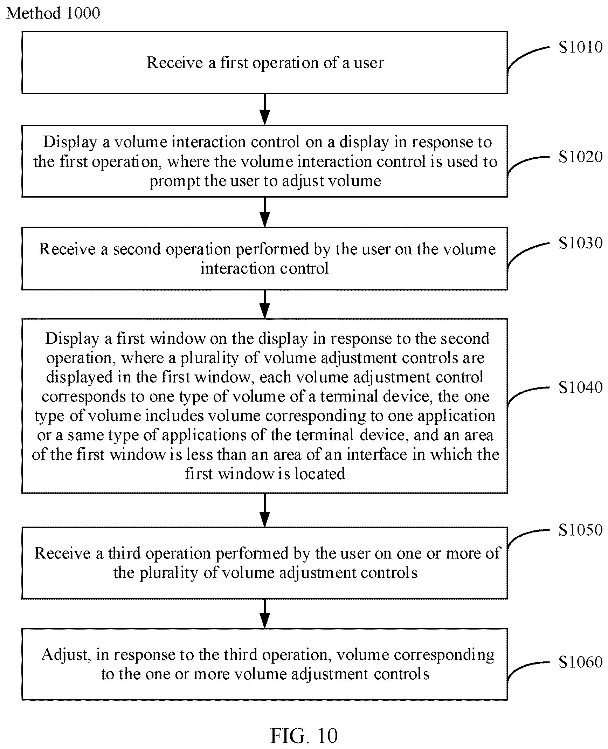

FIG. 10 is a schematic flowchart of a volume adjustment method according to an embodiment of this application. As shown in FIG. 10, the method 1000 includes the following steps:
S1010: Receive a first operation of a user.
S1020: Display a volume interaction control on a display in response to the first operation, where the volume interaction control is used to prompt the user to adjust volume.
S1030: Receive a second operation performed by the user on the volume interaction control.
S1040: Display a first window on the display in response to the second operation, where a plurality of volume adjustment controls are displayed in the first window, each volume adjustment control corresponds to one type of volume of a terminal device, the one type of volume includes volume corresponding to one application or a same type of applications on the terminal device, and an area of the first window is less than an area of an interface in which the first window is located.
S1050: Receive a third operation performed by the user on one or more of the plurality of volume adjustment controls.
S1060: Adjust, in response to the third operation, volume corresponding to the one or more volume adjustment controls.

According to the volume adjustment method provided in this application, the user may trigger the first window (namely, the volume adjustment window 305 shown in FIG. 3c, the volume adjustment window 705 shown in FIG. 7c, the volume adjustment window 805 shown in FIG. 8c, or the like), and the user may adjust volume of a plurality of different applications or volume of a plurality of different types of applications in the first window. In addition, because the area of the first window is less than the area of the interface in which the first window is located, in other words, the volume adjustment window covers a part of features of the interface in which the first window is located, the user may continue to use an uncovered part of the interface when adjusting a plurality of types of volume. Using the volume adjustment method to adjust the plurality of types of volume by the user simplifies operations and enhances user experience.

In some possible implementations, a prompt control used to prompt the user to adjust the plurality of types of volume is displayed in the volume interaction control. In this implementation, a prompt function of the prompt control makes the user realize that the plurality of types of volume may be adjusted through a further operation the volume interaction control. This increases a probability of performing the second operation by the user and enhances user experience.

In some possible implementations, the plurality of volume adjustment controls are displayed in the volume interaction control in a non-full superposition manner; and in the plurality of volume adjustment controls that are displayed in the non-full superposition manner, one volume adjustment control located at an uppermost layer is completely displayed, another volume adjustment control is partially displayed, and the partially displayed another volume adjustment control forms the prompt control. For example, refer to the specific descriptions corresponding to FIG. 3b. The volume interaction control displays the volume adjustment control 302 and the another volume adjustment control 303, where the another volume adjustment control 303 is the prompt control. For brevity, details are not described herein again. In this implementation, because a non-full superposition display manner is used, the volume adjustment control located at the uppermost layer in the plurality of volume adjustment controls can be completely viewed by the user, and the another volume adjustment control located at a lower layer can be partially viewed by the user. In this manner of partially displaying the another volume adjustment control, a function of prompting the user to adjust the plurality of types of volume is achieved.

In some possible implementations, a plurality of volume icons are displayed in the volume interaction control, each volume icon corresponds to one volume adjustment control, and an area occupied by each volume icon is less than an area occupied by the volume adjustment control corresponding to each volume icon. For example, refer to the specific descriptions corresponding to FIG. 6b. In the volume interaction control, namely, the volume adjustment box 602, four volume icons are displayed in total in FIG. 6b: the volume icon 603, the volume icon 604, the volume icon 605, and the volume icon 606. For brevity, details are not described herein again.

In some possible implementations, after the second operation is received, the method further includes: stopping displaying the volume interaction control. For example, refer to the specific descriptions corresponding to a switching process from FIG. 3b to FIG. 3c. After the second operation is received, the volume interaction control (namely, the volume adjustment control 302 and the another volume adjustment control 303) is switched to the first window (namely, the volume adjustment window 305). In this implementation, stopping displaying the volume interaction control means: after the second operation is received, switching the volume interaction control to the first window. This reduces coverage on the interface, so that a region other than a region covered by the first window in the interface is visible to the user, thereby enhancing user experience.

In some possible implementations, the plurality of volume adjustment controls are displayed in the first window in a non-superposition manner. For example, refer to the specific descriptions corresponding to FIG. 3c. The plurality of volume adjustment controls include the first volume adjustment control 3051, the second volume adjustment control 3052, the third volume adjustment control 3053, and the fourth volume adjustment control 3054. The first window is the volume adjustment window 305. For brevity, details are not described herein again. In this implementation, the plurality of volume adjustment controls are displayed in the non-superposition manner. This display state may be referred to as an "expanded state". The expanded state facilitates an adjustment operation performed by the user on each volume adjustment control.

In some possible implementations, a setting icon control is further displayed in the first window, and the method further includes: in response to a fourth operation performed by the user on the setting icon control, displaying a sound setting interface of the terminal device on the display. For example, according to the specific descriptions corresponding to FIG. 3c and FIG. 3f, the first window is the volume adjustment window 305, the setting icon control is the setting icon control 306, and the sound setting interface is the display interface shown in FIG. 3f. In addition, the fourth operation may be a tap operation (for example, may be a single tap or double-tap) on the setting icon control, or may be any other feasible operation manner. For brevity, details are not described herein again. In this implementation, a setting icon is displayed in the first window, to help the user enter the sound setting interface of the terminal device. This facilitates use by the user and enhances user experience.

In some possible implementations, the method further includes: when displaying the volume interaction control on the display, if detecting a press operation performed by the user on a volume button, displaying a first volume display control on the display, where the first volume display control displays adjustment of one type of volume corresponding to the volume interaction control; or if detecting a slide operation performed by the user on the volume interaction control, displaying a second volume display control on the display, where the second volume display control displays adjustment of one type of volume corresponding to the volume interaction control, and the first volume display control is different from the second volume display control. For example, according to the specific descriptions corresponding to FIG. 3b, FIG. 3d, and FIG. 3e, the volume interaction control is a whole body including the volume adjustment control 302 and the another volume adjustment control 303 shown in FIG. 3b, the first volume display control is the volume display control 307 shown in FIG. 3d, and the second volume display control is the volume adjustment control 302 shown in FIG. 3e. For brevity, details are not described herein again. In this implementation, different volume display controls are displayed in response to two different volume adjustment operation manners, so that operation interaction is higher.

In some possible implementations, an area occupied by the first volume display control is less than an area occupied by the second volume display control. For example, refer to the specific descriptions corresponding to FIG. 3b, FIG. 3d, and FIG. 3e. The first volume display control is the volume display control 307 shown in FIG. 3d, and the second volume display control is the volume adjustment control 302 shown in FIG. 3e. The volume display control 307 may be referred to as a "minimized state", a whole body including the volume adjustment control 302 and the another volume adjustment control displayed in FIG. 3b may be referred to as a "default state", and the volume adjustment control 302 shown in FIG. 3d may be referred to as a "pressed state". For brevity, details are not described herein again. In this implementation, the first volume display control displayed on the display when the user presses the volume button to adjust the volume occupies a small area, and therefore, blocking a small part of the display. When the user adjusts the volume in a sliding manner, the second volume display control that occupies a large area is displayed on the display, to help the user easily find an operation region for adjusting the volume through a slide operation.

In some possible implementations, the method further includes: when displaying the first volume display control on the display, if detecting a slide operation performed by the user on the first volume display control, displaying the second volume display control on the display. For example, the first volume display control is the volume display control 307 shown in FIG. 3d, and the second volume display control is the volume adjustment control 302 shown in FIG. 3e. When the user slides up or down on the volume display control 307, the display interface shown in FIG. 3d is switched to the display interface shown in FIG. 3e. For brevity, details are not described herein again. In this implementation, when the user performs the slide operation on the first volume display control, the first volume display control on the display is switched to the second volume display control. In other words, volume adjustment may be switched from a manner of pressing the volume button to a manner of the slide operation. The operation manner is flexible and is convenient for use by the user.

In some possible implementations, the method further includes: when displaying the second volume display control on the display, if detecting a press operation performed by the user on the volume button, displaying the first volume display control on the display. For example, the first volume display control is the volume display control 307 shown in FIG. 3d, and the second volume display control is the volume adjustment control 302 shown in FIG. 3e. When the user presses the volume button, the display interface shown in FIG. 3e is switched to the volume adjustment window 305 shown in FIG. 3d. For brevity, details are not described herein again. In this implementation, a manner of adjusting the current volume of the terminal device may be switched from a manner of pressing the volume button to a manner of the slide operation. The operation manner is flexible and is convenient for use by the user.

In some possible implementations, the first operation includes: the press operation on the volume button, a slide operation on a first edge region of the display, or a tap operation on a first edge region of the display.

In some possible implementations, display locations of one or more of the volume interaction control, the first window, the first volume display control, and the second volume display control on the display are close to an operation location of the first operation. For example, in the example shown in FIG. 3a to FIG. 3f, the volume interaction control is a whole body including the volume adjustment control 302 and the another volume adjustment control 303 in FIG. 3b, the first window is the volume adjustment window 305 in FIG. 3c, the first volume display control is the volume display control 307 in FIG. 3d, the second volume display control or window is the volume adjustment control 302 in FIG. 3e, and these controls are all displayed close to the volume buttons on the display. For brevity, other content and other examples are not described herein again. In this implementation, a control or a window related to volume adjustment is displayed close to the operation location of the first operation on the display. In this way, the displayed control or window is bound to a function of "volume adjustment", so that the user can easily identify a function of the displayed control or window, thereby enhancing user experience.

In some possible implementations, the plurality of volume adjustment controls are displayed in the first window in a superposition manner, and before the third operation, the method further includes: receiving a fifth operation performed by the user on the first window; and switching, in response to the fifth operation, a volume adjustment control displayed at an uppermost layer in the plurality of volume adjustment controls displayed in the superposition manner. The plurality of volume adjustment controls are displayed in the first window in the superposition manner. There may be one volume adjustment control (as shown in FIG. 8c), or there may be two volume adjustment controls (as shown in FIG. 7c) displayed at the uppermost layer. Certainly, there may be more volume adjustment controls displayed at the uppermost layer. This is not limited herein. For example, as shown in FIG. 7a to FIG. 7g, the fifth operation may be "the finger of the user slides left on the volume adjustment window 705". In response to the fifth operation, the display interface shown in FIG. 7c transitions to the display interface shown in FIG. 7d. For details, refer to the specific descriptions corresponding to FIG. 7c and FIG. 7d. For brevity, details are not described herein again. The quantity of volume adjustment controls simultaneously displayed in the first window can be reduced in a superposition display manner. When necessary, the user performs different volume adjustment by switching the volume adjustment control displayed at the uppermost layer. This simplifies operation and enhances user experience.

In some possible implementations, one volume adjustment control is displayed at an uppermost layer in the first window, indicators respectively corresponding to at least some of the plurality of volume adjustment controls are displayed in the first window, a first control is displayed on an indicator corresponding to the volume adjustment control displayed at the uppermost layer, and a location of the first control changes after the fifth operation is received. For example, according to the specific descriptions corresponding to FIG. 8c and FIG. 8d, in FIG. 8c, the first control is the control 8060, and the indicators respectively corresponding to the plurality of volume adjustment controls include: the indicator 8061, the indicator 8062, the indicator 8063, and the indicator 8064. The volume adjustment control displayed at the uppermost layer in FIG. 8c is the first volume adjustment control 8051. In FIG. 8c, the control 8060 is displayed on the indicator 8061. Therefore, the indicator 8061 in FIG. 8c is covered by the control 8060. For brevity, details are not described herein again. In this implementation, the indicator corresponding to each volume adjustment control (or a control interface) is displayed, and the location of the first control changes when the volume adjustment control is switched, so that it is convenient for the user to switch any volume adjustment control to the uppermost layer for display. User operations are simple and user-friendly, and efficiency of switching the volume adjustment control in the first window and user experience are improved.

For example, the plurality of volume adjustment controls are displayed in a plurality of control interfaces in a distributed manner, the first window simultaneously displays one control interface, and each control interface displays some of the plurality of volume adjustment controls in a non-superposition manner. The method further includes: in response to the fifth operation performed by the user on the first window, switching the first window from the first control interface to the second control interface, where one or more volume adjustment controls corresponding to the third operation include at least one volume adjustment control in the second control interface. For example, refer to the specific descriptions corresponding to FIG. 8c and FIG. 8d. In the example shown in FIG. 8a to FIG. 8f, the four volume adjustment controls are displayed in four control interfaces in a distributed manner, and only one control interface can be displayed at a time (that is, one volume adjustment control is displayed). The first volume adjustment control 8051 (namely, the first control interface) displayed in the volume adjustment window 805 in FIG. 8c and the second volume adjustment control 8052 displayed in the volume adjustment window 805 in FIG. 8d are another control interface (namely, the second control interface). For brevity, details are not described herein again. In this implementation, the plurality of volume adjustment controls are displayed in the plurality of control interfaces in a distributed manner. Some of the plurality of volume adjustment controls may be displayed in one control interface in a non-superposition manner (one volume adjustment control may be displayed in one control interface in FIG. 8c and FIG. 8d in a non-superposition manner). In this manner, the area of the "volume adjustment window 805" in FIG. 8c is less than the area of the "volume adjustment window 305" in FIG. 3c, so that a coverage area of the first window (namely, the volume adjustment window 805) for a feature in an interface is reduced, and an area of an interface that can be viewed by the user in a process of adjusting the plurality of types of volume is increased, thereby enhancing user experience.

For example, the display displays the first control, and the indicators respectively corresponding to the plurality of control interfaces are displayed in the first control. When an interface displayed in the first window is switched from the first control interface to the second control interface, the indicator corresponding to the first control interface and the indicator corresponding to the second control interface change. For example, according to the specific descriptions corresponding to FIG. 8c and FIG. 8d, as shown in FIG. 8c and FIG. 8d, the first control is the control 806, and the indicators corresponding to the plurality of control interfaces are respectively the indicator 8061, the indicator 8062, the indicator 8063, and the indicator 8064. For brevity, details are not described herein again. In this implementation, the indicator corresponding to each control interface is displayed, and an indicator of a switched control interface is changed, so that it is convenient for the user to switch any control interface to the uppermost layer for display. User operations are simple and user-friendly, and efficiency of switching the control interface in the first window and user experience are improved.

In some possible implementations, the fifth operation includes: a tap operation on the indicator corresponding to the volume adjustment control displayed at the uppermost layer, a slide operation on the first control, or a slide operation on the volume adjustment control displayed at the uppermost layer. For example, according to the specific descriptions corresponding to FIG. 8c and FIG. 8d, the fifth operation may be a tap operation on the indicator 8062 in the control 806, a slide operation on the control 8060, or a slide operation on the first volume adjustment control 8051 displayed at the uppermost layer. For brevity, details are not described herein again.

In some possible implementations, before receiving the third operation, the method further includes: receiving a sixth operation performed by the user on the first window; and switching the first window to a second window in response to the sixth operation, where a quantity of volume adjustment controls simultaneously displayed in the first window is different from a quantity of volume adjustment controls simultaneously displayed in the second window. For example, according to the specific descriptions corresponding to FIG. 9c and FIG. 9d, in the example shown in FIG. 9a to FIG. 9h, the first window is the volume adjustment window 905, the second window is the volume adjustment window 906, the volume adjustment window 905 simultaneously displays one volume adjustment control, and the volume adjustment window 906 simultaneously displays two volume adjustment controls. In this implementation, the user may switch the volume adjustment window 905 to the volume adjustment window 906 through the sixth operation, and the user may switch the first window and the second window based on a requirement, so that different requirements of the user for the quantity of volume adjustment controls that are simultaneously displayed can be met, thereby enhancing user experience.

In some possible implementations, if the area occupied by the first window is greater than an area occupied by the second window, the quantity of volume adjustment controls simultaneously displayed in the first window is greater than the quantity of volume adjustment controls simultaneously displayed in the second window; or if the area occupied by the first window is less than an area occupied by the second window, the quantity of volume adjustment controls simultaneously displayed in the first window is less than the quantity of volume adjustment controls simultaneously displayed in the second window. In this implementation, a quantity of volume adjustment controls in a window is changed with a change of an area occupied by the window, so that the area of the window can be fully used, to help the user adjust, based on a requirement, a covered area of the display when the plurality of types of volume are adjusted. Certainly, the user may also switch the volume adjustment window 906 to the volume adjustment window 905. For brevity, details are not described herein again. For example, when the user adjusts a plurality of types of volume when watching a video, the user may select the volume adjustment window 905 with a small area. When the user does not need to look at a screen, the user may select the volume adjustment window 906 with a large area to adjust the plurality of types of volume. This improves volume adjustment efficiency.

In some possible implementations, the method further includes: when displaying the volume interaction control on the display, if detecting the press operation performed by the user on the volume button or if detecting the slide operation performed by the user on the volume interaction control, displaying a third volume display control on the display, where the third volume display control displays adjustment of the one type of volume corresponding to the volume interaction control, and an area occupied by the third volume display control is less than the area occupied by the volume interaction control. For example, when the display interface is shown in FIG. 3b, if the user adjusts the volume by pressing the volume button or performing the slide operation, the third volume display control (the volume display control 307 shown in FIG. 3d or the volume adjustment control 302 shown in FIG. 3e) is displayed. In other words, the display interface shown in FIG. 3b transitions to the display interface shown in FIG. 3d. Alternatively, the display interface shown in FIG. 3b transitions to the display interface shown in FIG. 3e. For brevity, details are not described herein again. In this implementation, when it is detected that the user presses the volume button or performs the slide operation on the volume interaction control, the third volume display control is displayed. An interaction scenario is simple, and development is convenient.

In some possible implementations, before receiving the first operation of the user, the method further includes: displaying a fourth volume display control on the display in response to a seventh operation of the user, where the fourth volume display control displays adjustment of one type of volume of the terminal device, the first operation is an operation on the fourth volume display control, and an area occupied by the fourth volume display control is less than the area occupied by the volume interaction control; and when displaying the fourth volume display control on the display, if detecting the press operation performed by the user on the volume button or if detecting a slide operation performed by the user on the fourth volume display control, keeping displaying the fourth volume display control on the display, where a level of the volume displayed in the fourth volume display control changes. For example, the user presses the volume button, slides from a left edge to a right edge of the display, or double-taps the display. The display first displays the fourth volume display control (for example, the fourth volume display control may be the volume display control 307 shown in FIG. 3d or the volume adjustment control 302 shown in FIG. 3e). Then the user performs the first operation on the fourth volume display control. In this case, the display interface is switched to that shown in FIG. 3b. If the user presses the volume button, or the finger of the user slides up or down on the fourth volume display control, the fourth volume display control is kept displayed. For brevity, details are not described herein again. In this implementation, the seventh operation (for example, the seventh operation may be an operation of pressing the volume button, an operation of sliding from the left edge to the right edge of the display, or a double-tap operation) of the user is used to identify that the user has a volume adjustment requirement, to display the fourth volume display control. When the user needs to adjust only one type of volume (which may be considered as a default type of volume) of the terminal device, the display keeps displaying the fourth volume display control. In this way, when the user adjusts only one type of volume of the terminal device, only the fourth volume display control that occupies an area smaller than the area occupied by the volume interaction control is displayed, to reduce coverage on the display.

In some possible implementations, display locations of one or more of the volume interaction control, the first window, the first volume display control, the second volume display control, the third volume display control, or the fourth volume display control on the display are close to an operation location of the first operation. For example, in the example shown in FIG. 3a to FIG. 3f, the volume interaction control is a whole body including the volume adjustment control 302 and the another volume adjustment control 303 in FIG. 3b, the first window is the volume adjustment window 305 in FIG. 3c, the first volume display control is the volume display control 307 in FIG. 3d, the second volume display control or window is the volume adjustment control 302 in FIG. 3e, and these controls are all displayed close to the volume buttons on the display. For brevity, other content and other examples are not described herein again. In this implementation, a control or a window related to volume adjustment is displayed close to the operation location of the first operation on the display. In this way, the displayed control or window is bound to a function of "volume adjustment", so that the user can easily identify a function of the displayed control or window, thereby enhancing user experience.

In some possible implementations, the first operation is a slide operation on an edge of the display or a tap operation on an edge of the display, and the method further includes: displaying a fifth volume display control on the display in response to the press operation performed by the user on the volume button, where an area occupied by the fifth volume display control is less than the area occupied by the volume interaction control. For example, if the first operation of invoking the volume interaction control (the volume adjustment control 302 in FIG. 3b) is the slide operation or the tap operation (that is, pressing the volume button does not belong to the first operation), when the user presses the volume button, the fifth volume display control with the small area is invoked (for example, the fifth volume display control may be the volume display control 307 in FIG. 3d or the volume adjustment control 302 in FIG. 3e). For brevity, details are not described herein again. In this implementation, when the volume adjustment requirement of the user is detected, if an initial operation of the user is the slide operation or the tap operation, the volume interaction control is displayed; or if an initial operation of the user is an operation of pressing the volume button, the fifth volume display control is displayed. Therefore, different controls are displayed based on different initial operation manners of the user, thereby improving interaction and user experience.

For ease of understanding, the following describes a design idea of a volume adjustment process by using a mobile phone as an example. In the volume adjustment process, a plurality of display interfaces that display different controls (controls related to volume adjustment) are involved. For ease of description, a control that is related to volume adjustment and that is displayed in each display interface may be considered as a state. The following uses FIG. 3a to FIG. 3f as an example for description.

A state separately corresponding to the volume adjustment control 302 and the another volume adjustment control 303 shown in FIG. 3b is a "default state". A state corresponding to the volume adjustment window 305 shown in FIG. 3c is an "expanded state". A state corresponding to the volume display control 307 shown in FIG. 3d is a "minimized state". A state corresponding to the volume adjustment control 302 shown in FIG. 3e is a "pressed state". Therefore, when the "default state", the "expanded state", the "minimized state", or the "pressed state" appear in the following, a person skilled in the art may directly correspond to a display interface corresponding to the "default state", the "expanded state", the "minimized state", or the "pressed state" in FIG. 3a to FIG. 3f.

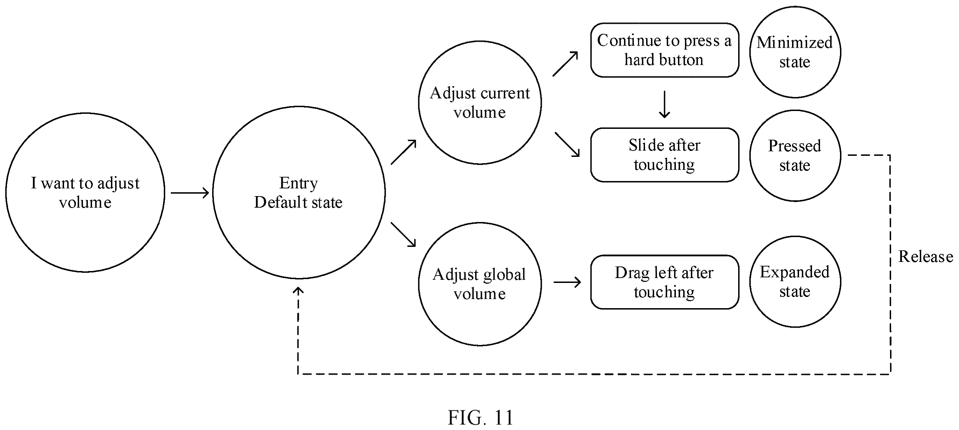

The following describes the design idea of the volume adjustment process with reference to the accompanying drawings. FIG. 11 is a diagram of a design idea of a volume adjustment process in an example of this application.

As shown in FIG. 11, when a user wants to adjust volume (namely, "I want to adjust volume"), the user presses a volume button to enter "entry" of volume adjustment. In this case, a "default state" is displayed on a display interface (as shown in FIG. 3b). If the user wants to adjust current volume of the mobile phone (the current volume is volume corresponding to a currently started application, or volume corresponding to an application type to which the currently started application belongs), the user may adjust the current volume in two operation manners: "continue to press a hard button" or "slide after touching". The "continue to press a hard button" is to continue to press the volume button. If the user "continues to press the hard button", the display interface transitions from the "default state" to the "minimized state" (as shown in FIG. 3d). The "slide after touching" means that a finger touches a control in the "default state" and slides. If the user "slides after touching", the display interface transitions from the "default state" to the "pressed state" (as shown in FIG. 3e). When the user "releases" (that is, the user does not touch the "default state" control), the display interface transitions from the "pressed state" to the "default state". If the user wants to adjust the global volume of the mobile phone (namely, volume corresponding to a plurality of applications or a plurality of types of applications of the mobile phone), the user may adjust the global volume by "dragging left after touching". The "dragging left after touching" means that the finger slides left on a control in the "default state", and the display interface transitions from the "default state" to the "expanded state" (as shown in FIG. 3c). The user can adjust, in an "expanded state" control, volume that needs to be adjusted.

It may be understood that the user may alternatively slide left on the right edge of the display of the mobile phone by using the finger, or double-tap a right side of the display of the mobile phone, to enter the "entry" for volume adjustment. The "slide after touching" means that the finger touches a control in the "default state" and slides, and may slide up or down or slide left or right. This is not limited in embodiments of this application.

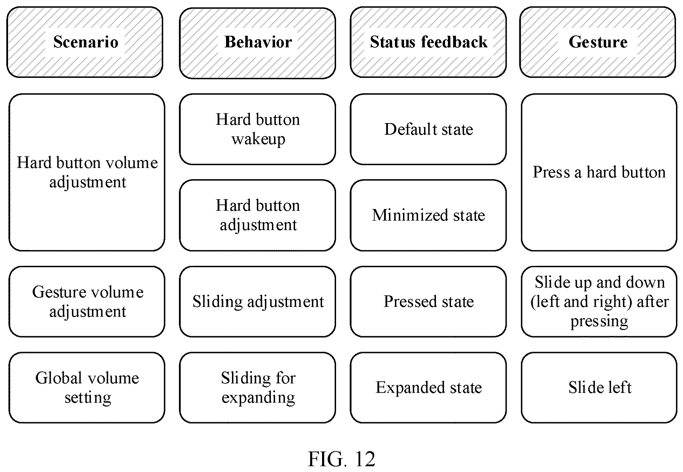

To make the "default state", the "expanded state", the "minimized state", and the "pressed state" in embodiments of this application better understood, the following describes scenarios, adjustment behaviors, and user gestures corresponding to the states in a classified manner with reference to the accompanying drawings. FIG. 12 is a diagram of a correspondence among a status, a scenario, a behavior, and a gesture in a volume adjustment process according to an example of this application. As shown in FIG. 12, a scenario corresponding to the "default state" is "hard button volume adjustment", a corresponding adjustment behavior is "hard button wakeup", and a corresponding user gesture is "press a hard button"; a scenario corresponding to the "minimized state" is "hard button volume adjustment", a corresponding adjustment behavior is "hard button adjustment", and a corresponding user gesture is "press a hard button"; a scenario corresponding to the "pressed state" is "gesture volume adjustment", a corresponding adjustment behavior is "sliding adjustment", and a corresponding user gesture is "slide up or down (left or right) after pressing"; and a scenario corresponding to the "expanded state" is "global volume adjustment", a corresponding adjustment behavior is "sliding for expanding", and a corresponding user gesture is "slide left".

It should be understood that the foregoing descriptions are merely intended to help a person skilled in the art better understand embodiments of this application, but are not intended to limit the scope of embodiments of this application. It is clear that the person skilled in the art may make various equivalent modifications or changes based on the foregoing examples. For example, some steps in the foregoing procedures (method embodiments) may be unnecessary, or some new steps may be added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that numerals used in embodiments of this application are merely distinguished for ease of description, but are not intended to limit the scope of embodiments of this application. Sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

In embodiments, the terminal device may be divided into functional modules according to the foregoing method embodiments. For example, each functional module may be obtained through division based on each corresponding function, or two or more functions may be integrated into one processing module. The integrated module may be implemented in a form of hardware. It should be noted that, in embodiments, division into modules is an example and is merely logical function division. During actual implementation, there may be another division manner.

It should be noted that related content of the steps in the foregoing method embodiments may be cited in function descriptions of corresponding functional modules, and details are not described herein again.

The terminal device provided in embodiments of this application is configured to perform the volume adjustment method according to any embodiment. Therefore, an effect same as the effect of the foregoing implementation methods can be achieved. When an integrated unit is used, the terminal device may include a processing module, a storage module, and a communication module. The processing module may be configured to control and manage an action of the terminal device. For example, the processing module may be configured to support the terminal device in performing steps performed by a processing unit. The storage module may be configured to support storage of program code, data, and the like. The communication module may be configured to support communication between the terminal device and another device.

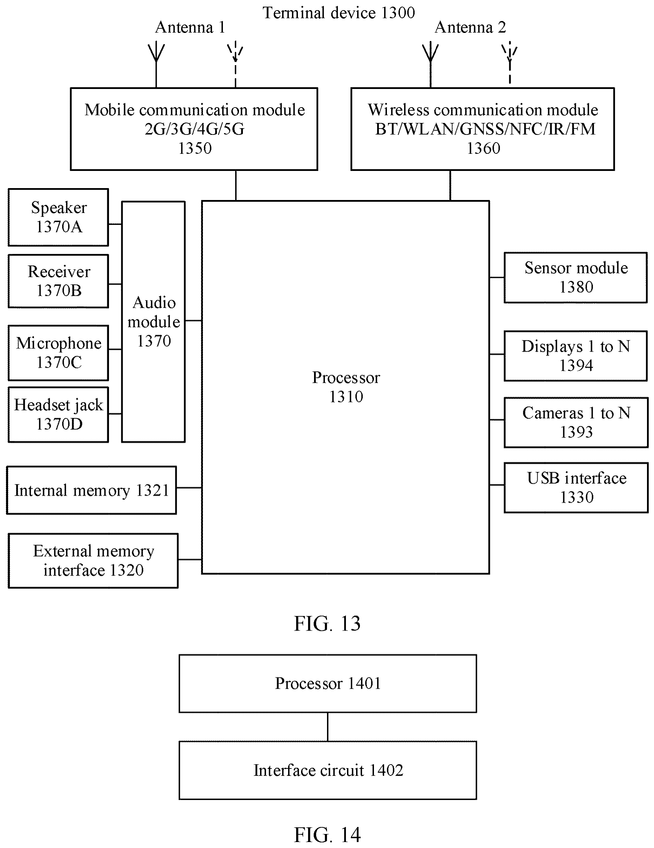

For example, FIG. 13 is a block diagram of a hardware structure of an example of a terminal device according to this application. The terminal device may be any terminal device (for example, a smartphone, a tablet computer, a PC, a large-screen device, a smart television, a wearable device, or a head unit) in the foregoing embodiments. As shown in FIG. 13, a terminal device 1300 may include a processor 1310, an external memory interface 1320, an internal memory 1321, a universal serial bus (universal serial bus, USB) interface 1330, an antenna 1, an antenna 2, a mobile communication module 1350, a wireless communication module 1360, an audio module 1370, a speaker 1370A, a receiver 1370B, a microphone 1370C, a headset jack 1370D, a sensor module 1380, and the like. The terminal device 1300 is configured to perform a step performed by any terminal device in the foregoing task examples or display any interface.

It may be understood that the structure shown in embodiments of this application does not constitute a specific limitation on the terminal device 1300. In some other embodiments of this application, the terminal device 1300 may include more or fewer components than those shown in the figure, or combine some components, or split some components, or have a different component arrangement. The components shown in the figure may be implemented by hardware, software, or a combination of software and hardware.

The processor 1310 may include one or more processing units. For example, the processor 1310 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The memory may be further disposed in the processor 1310, and is configured to store instructions and data. In some embodiments, the memory in the processor 1310 is a cache. The memory may store instructions or data just used or cyclically used by the processor 1310. If the processor 1310 needs to use the instructions or the data again, the processor 1310 may directly invoke the instructions or the data from the memory. This avoids repeated access and reduces waiting time of the processor 1310, thereby improving system efficiency.

A wireless communication function of the terminal device 1300 may be implemented through the antenna 1, the antenna 2, the mobile communication module 1350, the wireless communication module 1360, the modem processor, the baseband processor, and the like.

The antenna 1 and the antenna 2 are configured to: transmit and receive electromagnetic wave signals. Each antenna in the terminal device 1300 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 1350 may provide a wireless communication solution that includes 2G/3G/4G/5G or the like and that is applied to the terminal device 1300. The mobile communication module 1350 may include at least one filter, a switch, a power amplifier, a low noise amplifier (low noise amplifier, LNA), and the like. The mobile communication module 1350 may receive an electromagnetic wave through the antenna 1, perform processing such as filtering or amplification on the received electromagnetic wave, and transmit the processed electromagnetic wave to the modem processor for demodulation. The mobile communication module 1350 may further amplify a signal modulated by the modem processor, and convert the signal into an electromagnetic wave for radiation through the antenna 1. In some embodiments, at least some functional modules of the mobile communication module 1350 may be disposed in the processor 1310. In some embodiments, at least some functional modules of the mobile communication module 1350 and at least some modules of the processor 1310 may be disposed in a same device.

The wireless communication module 1360 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC) technology, an infrared (infrared, IR) technology, or the like and that is applied to the terminal device 1300. The wireless communication module 1360 may be one or more devices integrating at least one communication processing module. The wireless communication module 1360 receives an electromagnetic wave through the antenna 2, performs frequency modulation and filtering processing on an electromagnetic wave signal, and sends a processed signal to the processor 1310. The wireless communication module 1360 may further receive a to-be-sent signal from the processor 1310, perform frequency modulation and amplification on the signal, and convert the signal into an electromagnetic wave for radiation through the antenna 2.

In some embodiments, in the terminal device 1300, the antenna 1 is coupled to the mobile communication module 1350, and the antenna 2 is coupled to the wireless communication module 1360, so that the terminal device 1300 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), LTE, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 1300 implements a display function by using the GPU, the display 1394, the application processor, and the like. The GPU is a microprocessor for image processing, and is connected to the display 1394 and the application processor. The GPU is configured to: perform mathematical and geometric calculation, and render an image. The processor 1310 may include one or more GPUs that execute program instructions to generate or change display information.

The display 1394 is configured to display an image, a video, and the like. The display 1394 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro OLED, a quantum dot light-emitting diode (quantum dot light-emitting diode, QLED), or the like. In some embodiments, the terminal device 1300 may include one or N displays 1394, where N is a positive integer greater than 1.

In some embodiments of this application, the display 1394 in FIG. 13 can be bent when the display panel is made of a material like an OLED, an AMOLED, or an FLED. Herein, that the display 1394 can be bent means that the display can be bent to any angle at any part, and can maintain the folding angle. For example, the display 1394 can be folded left and right from the middle, or can be folded up and down from the middle. In embodiments of this application, the display that can be bent is referred to as a foldable display. The foldable display may be one screen, or may be a display formed by combining a plurality of screens. This is not limited herein.

The terminal device 1300 may implement an image shooting function through the ISP, the camera 1393, the video codec, the GPU, the display 1394, the application processor, and the like.

The ISP is configured to process data fed back by the camera 1393. For example, during image shooting, a shutter is pressed, light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 1393.

The camera 1393 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to a DSP for processing. The DSP converts the digital image signal into an image signal in a standard format such as RGB or YUV. In some embodiments, the terminal device 1300 may include one or N cameras 1393, where N is a positive integer greater than 1.

The digital signal processor is configured to process a digital signal, and may further process another digital signal in addition to the digital image signal. For example, when the terminal device 1300 selects a frequency, the digital signal processor is configured to perform Fourier transform and the like on frequency energy.

The video codec is configured to compress or decompress a digital video. The terminal device 1300 may support one or more types of video codecs. In this way, the terminal device 1300 may play or record videos in a plurality of encoding formats, for example, moving picture experts group (moving picture experts group, MPEG)-1, MPEG-2, MPEG-3, and MPEG-4.

The external memory interface 1320 may be configured to connect to an external memory card, for example, a micro SD card, to extend a storage capacity of the terminal device 1300. The external memory card communicates with the processor 1310 through the external memory interface 1320, to implement a data storage function. For example, files such as music and videos are stored in the external memory card.

The internal memory 1321 may be configured to store computer-executable program code. The executable program code includes instructions. The processor 1310 runs the instructions stored in the internal memory 1321, to perform various function applications and data processing of the terminal device 1300. The internal memory 1321 may include a program storage area and a data storage area. The program storage area may store an operating system, an application required by at least one function (for example, a voice playing function or an image playing function), and the like. The data storage area may store data (such as audio data and a phone book) created during use of the terminal device 1300, and the like. In addition, the internal memory 1321 may include a high-speed random access memory, and may further include a nonvolatile memory, for example, at least one magnetic disk storage device, a flash memory device, or a universal flash storage (universal flash storage, UFS).

The terminal device 1300 may implement an audio function, for example, music playing and recording, through the audio module 1370, the speaker 1370A, the receiver 1370B, the microphone 1370C, the headset jack 1370D, the application processor, and the like.

The audio module 1370 is configured to convert digital audio information into an analog audio signal for output, and is also configured to convert analog audio input into a digital audio signal. The audio module 1370 may be further configured to code and decode audio signals. In some embodiments, the audio module 1370 may be disposed in the processor 1310, or some functional modules in the audio module 1370 are disposed in the processor 1310.

The speaker 1370A, also referred to as a "loudspeaker", is configured to convert an audio electrical signal into a sound signal. The terminal device 1300 may be configured to listen to music or answer a hands-free call by using the speaker 1370A.

The receiver 1370B, also referred to as an "earpiece", is configured to convert an audio electrical signal into a sound signal. When a call is answered or speech information is received by using the terminal device 1300, the receiver 1370B may be put close to a human ear to listen to a speech.

The microphone 1370C, also referred to as a "mike" or a "mic", is configured to convert a sound signal into an electrical signal. When making a call or sending speech information, a user may place the mouth of the user near the microphone 1370C to make a sound, to input a sound signal to the microphone 1370C. At least one microphone 1370C may be disposed in the terminal device 1300. In some other embodiments, two microphones 1370C may be disposed in the terminal device 1300, to collect a sound signal and further implement a noise reduction function. In some other embodiments, three, four, or more microphones 1370C may alternatively be disposed in the terminal device 1300, to collect a sound signal, reduce noise, further identify a sound source, implement a directional recording function, and the like.

The headset jack 1370D is configured to connect to a wired headset. The headset jack 1370D may be the USB interface 1330, or may be a 28.5 mm open mobile terminal platform (open mobile terminal platform, OMTP) standard interface, or a cellular telecommunications industry association of the USA (cellular telecommunications industry association of the USA, CTIA) standard interface.

The sensor module 1380 may include a pressure sensor, a gyroscope sensor, an angle sensor, a folding sensor, a barometric pressure sensor, a magnetic sensor, an acceleration sensor, a gravity sensor, a distance sensor, an optical proximity sensor, a fingerprint sensor, a temperature sensor, a touch sensor, an ambient light sensor, a bone conduction sensor, and the like.

Certainly, the terminal device 1300 may further include a charging management module, a power management module, a battery, a button, an indicator, one or more SIM card interfaces, and the like. This is not limited in embodiments of this application.

An embodiment of this application further provides a chip system. As shown in FIG. 14, the chip system includes at least one processor 1401 and at least one interface circuit 1402. The processor 1401 and the interface circuit 1402 may be connected to each other through a line. For example, the interface circuit 1402 may be configured to receive a signal from another apparatus (for example, a memory of any one of the foregoing terminal devices). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the terminal device is enabled to perform the steps performed by any terminal device in the foregoing embodiments. Certainly, the chip system may further include another discrete device. This is not specifically limited in embodiments of this application.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element. In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus may be implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SOC).

An embodiment of this application further provides an apparatus. The apparatus is included in a terminal device, and has a function of implementing a behavior of the terminal device in any one of the foregoing embodiments. The function may be implemented by hardware, or may be implemented by hardware by executing corresponding software. The hardware or the software includes at least one module or unit corresponding to the foregoing function.

This application further provides a terminal device. The terminal device includes the apparatus provided in the foregoing embodiments of this application.

An embodiment of this application further provides a computer-readable storage medium, configured to store computer program code. The computer program includes instructions used to perform the steps of the volume adjustment method performed by the terminal device in any one of the foregoing embodiments provided in embodiments of this application. The readable medium may be a read-only memory (read-only memory, ROM) or a random access memory (random access memory, RAM). This is not limited in embodiments of this application.

This application further provides a computer program product. The computer program product includes instructions. When the instructions are executed, a terminal device is enabled to perform the steps performed by the terminal device or a step of displaying an interface in any one of the foregoing embodiments.

An embodiment of this application further provides a chip. The chip includes a processing unit and a communication unit. The processing unit may be, for example, a processor, and the communication unit may be, for example, an input/output interface, a pin, a circuit, or the like. The processing unit may execute computer instructions, so that a terminal device performs any volume adjustment method provided in the foregoing embodiments of this application.

Optionally, the computer instructions are stored in a storage unit.

Optionally, the storage unit is a storage unit in the chip, for example, a register or a cache. Alternatively, the storage unit may be a storage unit that is in the terminal and that is located outside the chip, for example, a ROM, another type of static storage device that can store static information and instructions, or a random RAM. The processor mentioned in any one of the foregoing parts may be a CPU, a microprocessor, an ASIC, or one or more integrated circuits configured to control program execution of the foregoing display and control method for the terminal device. The processing unit and the storage unit may be decoupled, are separately disposed on different physical devices, and are connected in a wired or wireless manner to implement respective functions of the processing unit and the storage unit, to support the system chip in implementing various functions in the foregoing embodiments. Alternatively, the processing unit and the memory may be coupled to a same device.

The terminal device, the apparatus, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein again.

An embodiment of this application further provides a graphical user interface on a terminal device. The terminal device includes a display, a camera, a memory, and one or more processors. The one or more processors are configured to execute one or more computer programs stored in the memory; and the graphical user interface includes a graphical user interface displayed when the terminal device performs the steps performed by the terminal device in any one of the foregoing embodiments.

It may be understood that, to implement the foregoing functions, the terminal device or the like includes a corresponding hardware structure and/or a corresponding software module for performing each function. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the terminal device and the like may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, division into modules is an example and is merely logical function division. During actual implementation, there may be another division manner.

Based on the foregoing descriptions of the implementations, a person skilled in the art may clearly understand that for the purpose of convenient and brief descriptions, division into the foregoing functional modules is merely used as an example for description. During actual application, the foregoing functions can be allocated to different functional modules for implementation based on a requirement, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A volume adjustment method, applied to a terminal device having a display, wherein the method comprises:
receiving a first operation of a user;
displaying a volume interaction control on the display in response to the first operation, wherein the volume interaction control is used to prompt the user to adjust volume;
receiving a second operation performed by the user on the volume interaction control;
displaying a first window on the display in response to the second operation, wherein a plurality of volume adjustment controls are displayed in the first window, each volume adjustment control corresponds to one type of volume of the terminal device, the one type of volume comprises volume corresponding to one application or a same type of applications on the terminal device, and an area of the first window is less than an area of an interface in which the first window is located;
receiving a third operation performed by the user on one or more of the plurality of volume adjustment controls; and
adjusting, in response to the third operation, volume corresponding to the one or more volume adjustment controls.

2. The method according to claim 1, wherein a prompt control used to prompt the user to adjust a plurality of types of volume is displayed in the volume interaction control.

3. The method according to claim 2, wherein the plurality of volume adjustment controls are displayed in the volume interaction control in a non-full superposition manner; and in the plurality of volume adjustment controls that are displayed in the non-full superposition manner, one volume adjustment control located at an uppermost layer is completely displayed, another volume adjustment control is partially displayed, and the partially displayed another volume adjustment control forms the prompt control.

4. The method according to claim 2, wherein a plurality of volume icons are displayed in the volume interaction control, each volume icon corresponds to one volume adjustment control, an area occupied by each volume icon is less than an area occupied by the volume adjustment control corresponding to each volume icon, and the plurality of volume icons form the prompt control.

5. The method according to any one of claims 1 to 4, wherein the plurality of volume adjustment controls are displayed in the first window in a non-superposition manner.

6. The method according to any one of claims 1 to 5, wherein a setting icon control is further displayed in the first window, and the method further comprises:
receiving a fourth operation performed by the user on the setting icon control; and
displaying a sound setting interface of the terminal device on the display in response to the fourth operation.

7. The method according to any one of claims 1 to 6, wherein the method further comprises:
when displaying the volume interaction control on the display, if detecting a press operation performed by the user on a volume button, displaying a first volume display control on the display, wherein the first volume display control displays adjustment of one type of volume corresponding to the volume interaction control; or
if detecting a slide operation performed by the user on the volume interaction control, displaying a second volume display control on the display, wherein the second volume display control displays adjustment of one type of volume corresponding to the volume interaction control, and the first volume display control is different from the second volume display control.

8. The method according to claim 7, wherein an area occupied by the first volume display control is less than an area occupied by the second volume display control.

9. The method according to claim 7, wherein the method further comprises:
when displaying the first volume display control on the display, if detecting a slide operation performed by the user on the first volume display control, displaying the second volume display control on the display.

10. The method according to any one of claims 1 to 9, wherein the first operation comprises: the press operation on the volume button, a slide operation on a first edge region of the display, or a tap operation on a first edge region of the display.

11. The method according to any one of claims 1 to 9, wherein display locations of one or more of the volume interaction control, the first window, the first volume display control, and the second volume display control on the display are close to an operation location of the first operation.

12. The method according to any one of claims 1 to 11, wherein the plurality of volume adjustment controls are displayed in the first window in a superposition manner, and before the third operation, the method further comprises:
receiving a fifth operation performed by the user on the first window; and
switching, in response to the fifth operation, a volume adjustment control displayed at an uppermost layer in the plurality of volume adjustment controls displayed in the superposition manner.

13. The method according to claim 12, wherein one volume adjustment control is displayed at an uppermost layer in the first window, indicators respectively corresponding to at least some of the plurality of volume adjustment controls are displayed in the first window, a first control is displayed on an indicator corresponding to the volume adjustment control displayed at the uppermost layer, and a location of the first control changes after the fifth operation is received.

14. The method according to claim 13, wherein the fifth operation comprises: a tap operation on the indicator corresponding to the volume adjustment control displayed at the uppermost layer, a slide operation on the first control, or a slide operation on the volume adjustment control displayed at the uppermost layer.

15. The method according to any one of claims 1 to 14, wherein before receiving the third operation, the method further comprises:
receiving a sixth operation performed by the user on the first window; and
switching the first window to a second window in response to the sixth operation, wherein a quantity of volume adjustment controls simultaneously displayed in the first window is different from a quantity of volume adjustment controls simultaneously displayed in the second window.

16. The method according to claim 15, wherein if the area occupied by the first window is greater than an area occupied by the second window, the quantity of volume adjustment controls simultaneously displayed in the first window is greater than the quantity of volume adjustment controls simultaneously displayed in the second window; or if the area occupied by the first window is less than an area occupied by the second window, the quantity of volume adjustment controls simultaneously displayed in the first window is less than the quantity of volume adjustment controls simultaneously displayed in the second window.

17. The method according to any one of claims 1 to 16, wherein the method further comprises:
when displaying the volume interaction control on the display, if detecting the press operation performed by the user on the volume button or if detecting the slide operation performed by the user on the volume interaction control, displaying a third volume display control on the display, wherein the third volume display control displays adjustment of the one type of volume corresponding to the volume interaction control, and an area occupied by the third volume display control is less than an area occupied by the volume interaction control.

18. The method according to any one of claims 1 to 17, wherein before receiving the first operation of the user, the method further comprises:
displaying a fourth volume display control on the display in response to a seventh operation of the user, wherein the fourth volume display control displays adjustment of one type of volume of the terminal device, the first operation is an operation on the fourth volume display control, and an area occupied by the fourth volume display control is less than the area occupied by the volume interaction control; and when displaying the fourth volume display control on the display, if detecting the press operation performed by the user on the volume button or if detecting a slide operation performed by the user on the fourth volume display control, keeping displaying the fourth volume display control on the display, wherein a level of the volume displayed in the fourth volume display control changes.

19. The method according to any one of claims 1 to 18, wherein the first operation is a slide operation on an edge of the display or a tap operation on an edge of the display, and the method further comprises:
displaying a fifth volume display control on the display in response to the press operation performed by the user on the volume button, wherein an area occupied by the fifth volume display control is less than the area occupied by the volume interaction control.

20. A terminal device, wherein the terminal device comprises a processor and a memory, the memory is configured to store instructions, and the processor is configured to read the instructions to perform the method according to any one of claims 1 to 19.

21. A computer-readable storage medium, wherein the computer-readable storage medium stores a computer program, the computer program comprises program instructions, and when the program instructions are executed by a processor, the processor is enabled to perform the method according to any one of claims 1 to 19.

22. A computer program product, wherein the computer program product comprises instructions used to perform the method according to any one of claims 1 to 19.

23. A chip, comprising a processor, configured to invoke a computer program from a memory and run the computer program, so that a communication device on which the chip is installed performs the method according to any one of claims 1 to 19.
